(19) Europäisches Patentamt
European Patent Office
Office européen des brevets

(11) **EP 4 708 217 A1**

(12) **EUROPEAN PATENT APPLICATION**

(43) Date of publication:
**11.03.2026  Bulletin 2026/11**

(21) Application number: **25190306.8**

(22) Date of filing: **17.07.2025**

(51) International Patent Classification (IPC):
**G06V 10/764** (2022.01)     **G06V 10/774** (2022.01)
**G06V 10/776** (2022.01)     **G06V 10/80** (2022.01)
**G06V 10/82** (2022.01)     **G06V 20/30** (2022.01)

(52) Cooperative Patent Classification (CPC):
**G06V 10/82; G06V 10/764; G06V 10/774;
G06V 10/776; G06V 10/803; G06V 20/30;**
G06V 10/98; G06V 2201/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **06.09.2024  US 202463691685 P**

(71) Applicant: **Google Technology Holdings LLC
Mountain View, CA 94043 (US)**

(72) Inventors:
• **Iscen, Ahmet
75009 Paris (FR)**
• **Caron, Mathilde Jeanne Marie
75009 Paris (FR)**
• **Fathi, Alireza
Mountain View, 94043 (US)**
• **Schmid, Cordelia Luise
75009 Paris (FR)**

(74) Representative: **Varley, James Richard et al
Venner Shipley LLP
200 Aldersgate
London EC1A 4HD (GB)**

(54)    **MACHINE-LEARNED MODEL TO CORRECT AN ENTITY LABEL FOR AN ENTITY IN AN IMAGE**

(57)    A computing device for recognizing an entity in an image includes one or more memories to store instructions and one or more processors to execute the instructions to perform operations, the operations including: receiving a request to identify an entity in an image, determining a candidate entity label for the entity based on the image, processing a plurality of inputs with one or more first machine-learned models to generate a corrected entity label for the candidate entity label, wherein the plurality of inputs include the image, a textual description of the image, and contextual information associated with the candidate entity label, and providing a first output including the corrected entity label for the entity in the image.

**FIG. 4**

**Description**

FIELD

This disclosure relates generally to machine learning processes and machine-learned devices and systems. More particularly, the disclosure relates to implementing one or more machine-learned models to improve the identification of entities in images.

BACKGROUND

A computer can receive input(s). The computer can execute instructions to process the input(s) to generate output(s) using a parameterized model. The computer can obtain feedback on its performance in generating the outputs with the model. The computer can generate feedback by evaluating its performance. The computer can receive feedback from an external source. The computer can update parameters of the model based on the feedback to improve its performance. In this manner, the computer can iteratively "learn" to generate the desired outputs. The resulting model is often referred to as a machine-learned model.

Methods exist for identifying entities in images, for example, through visual entity recognition which aims to identify entities within query images. Visual entity recognition can refer to the task of identifying entities based on visual queries and is a component of many complex applications. One example application is "info-seeking" visual question answering, which involves providing answers to questions about the detailed properties of fine-grained entities. Another example application is entity-aware captioning, a technique frequently employed in tasks such as news content comprehension. Recent research has expanded the scope of visual entity recognition to include web-scale and open-domain entities.

According to some methods, a model for visual entity recognition is pretrained on a new entity-based dataset instead of on captions. Large language models (LLMs) have been used in many different ways to obtain better supervision for training various tasks. For example, LLMs have been used to generate question-answer pairs from Wikipedia pages or from transcribed video narrations, while other methods use LLMs to rephrase questions into sentences. Some methods involve prompting LLMs to output rationales as additional supervision for training small models in a multi-task framework. Some methods involve prompting LLMs to generate high-quality instruction-following training samples.

SUMMARY

Aspects and advantages of embodiments of the disclosure will be set forth in part in the following description, or can be learned from the description, or can be learned through practice of the embodiments.

Example aspects of the disclosure provide an example computing device for generating corrected entity labels for improved model accuracy and efficiency. The computing device includes one or more processors and one or more example non-transitory computer-readable media storing instructions that are executable by the one or more processors to cause the computing device to perform example operations. In some implementations, the example operations can include receiving a request to identify an entity in an image, determining a candidate entity label for the entity based on the image, processing a plurality of inputs with one or more first machine-learned models to generate a corrected entity label for the candidate entity label, wherein the plurality of inputs include the image, a textual description of the image, and contextual information associated with the candidate entity label, and providing a first output including the corrected entity label for the entity in the image.

In some implementations, the contextual information associated with the candidate entity label is received from an external data source.

In some implementations, the external data source includes content related to the candidate entity label and the candidate entity label corresponds to a title associated with the content.

In some implementations, the textual description of the image is a caption associated with the image.

In some implementations, determining the candidate entity label for the entity based on the image comprises one or more second machine-learned models implementing a k-nearest neighbor algorithm to determine the candidate entity label for the entity.

In some implementations, the image includes a plurality of entities, a respective candidate entity label is determined for each of the entities among the plurality of entities in the image, the one or more first machine-learned models generate a respective corrected entity label for each of the respective candidate entity labels, and the first output includes corrected entity labels for each of the entities among the plurality of entities in the image.

In some implementations, the operations further comprise implementing the one or more first machine-learned models generating a second output which includes a rationale explaining a connection between the corrected entity label and the image.

In some implementations, the one or more first machine-learned models process, as an input, visual attributes associated with the image and without reference to the candidate entity label, to generate the second output.

In some implementations, the operations further comprise the one or more first machine-learned models generating a third output which includes one or more question-answer pairs associated with the entity in the image.

In some implementations, the one or more first machine-learned models process, as inputs, the rationale, the image, and the corrected entity label, to generate the third output.

In some implementations, the image includes a plurality of entities, and the one or more question-answer pairs are associated with at least one other entity in the image among the plurality of entities.

In some implementations, the operations further comprise generating a training dataset which includes a plurality of images, at least one of the plurality of images being associated with at least one corrected entity label.

In some implementations, each image among the plurality of images is further associated with a respective rationale associated with each corrected entity label, and one or more question-answer pairs associated with each corrected entity label.

In some implementations, the one or more first machine-learned models are configured to update the candidate entity label with the corrected entity label for the entity by verifying whether the candidate entity label for the entity and the contextual information associated with the candidate entity label corresponds to visual attributes in the image.

In some implementations, the one or more first machine-learned models comprise a multi-modal vision language model.

Example aspects of the disclosure provide an example computer-implemented method for generating corrected entity labels for improved model accuracy and efficiency. In some implementations, the example computer-implemented method can include: receiving, by a computing system comprising one or more processors, a request to identify an entity in an image, determining, by the computing system, a candidate entity label for the entity based on the image, processing, by the computing system, a plurality of inputs with one or more first machine-learned models to generate a corrected entity label for the candidate entity label, wherein the plurality of inputs include the image, a textual description of the image, and contextual information associated with the candidate entity label, and providing, by the computing system, a first output including the corrected entity label for the entity in the image.

In some implementations, the computer-implemented method includes processing, by the one or more first machine-learned models, one or more inputs including visual attributes associated with the image and without reference to the candidate entity label, to generate a second output which includes a rationale explaining a connection between the corrected entity label and the image.

In some implementations, the computer-implemented method includes processing, by the one or more first machine-learned models, one or more inputs including the rationale, the image, and the corrected entity label to generate a third output which includes one or more question-answer pairs associated with the entity in the image.

In some implementations, the computer-implemented method includes: generating a training dataset which includes a plurality of images, at least one of the plurality of images being associated with at least one corrected entity label, wherein each image among the plurality of images is further associated with a respective rationale associated with each corrected entity label, and one or more question-answer pairs associated with each corrected entity label.

In some implementations, implementing the one or more first machine-learned models to update the candidate entity label with the corrected entity label for the entity comprises verifying whether the candidate entity label for the entity and the contextual information associated with the candidate entity label corresponds to visual attributes in the image.

The computer-implemented method may execute any of the operations of the computing device as described herein.

Example aspects of the disclosure provide one or more example non-transitory computer-readable media storing instructions that are executable by one or more processors to cause a computing system to perform example operations for generating corrected entity labels for improved model accuracy and efficiency. In some implementations, the example operations can include receiving a request to identify an entity in an image; determining a candidate entity label for the entity based on the image; processing a plurality of inputs with one or more first machine-learned models to generate a corrected entity label for the candidate entity label, wherein the plurality of inputs include the image, a textual description of the image, and contextual information associated with the candidate entity label; and providing a first output including the corrected entity label for the entity in the image.

The non-transitory computer-readable medium may store additional instructions to execute other aspects and operations of the computing device and computer-implemented method as described herein.

The attached Appendix, which is fully incorporated into and forms a portion of this disclosure, describes example implementations of the systems and methods described herein. The systems and methods of the disclosure are not limited to the example implementations described in the Appendix.

Other example aspects of the disclosure are directed to other systems, methods, apparatuses, tangible non-transitory computer-readable media, and devices for performing functions described herein. These and other features, aspects, and advantages of various implementations will become better understood with reference to the following description and appended claims. The accompanying drawings, which are incorporated in and constitute a part of this specification, illustrate implementations of the disclosure and, together with the description, help explain the related principles.

BRIEF DESCRIPTION OF THE DRAWINGS

FIG. 1A is an example system, according to one or more example embodiments of the disclosure;

FIG. 1B is an example block diagram of a computing system, according to one or more example embodiments of the disclosure;

FIGS. 2A-2C each illustrate a flow diagram of an example, non-limiting computer-implemented method, according to one or more example embodiments of the disclosure;

FIGS. 3A-3B illustrate example block diagrams of an entity recognition application, according to one or more example embodiments of the disclosure;

FIG. 4 illustrates an example block diagram of an entity recognition application, according to one or more example embodiments of the disclosure;

FIGS. 5A-5C are example entity recognition results obtained by implementing one or more machine-learned models, according to one or more example embodiments of the disclosure;

FIGS. 6A-6D illustrate example entity recognition results obtained by implementing one or more machine-learned models, according to one or more example embodiments of the disclosure;

FIG. 7 illustrates an example entity recognition results obtained by implementing one or more machine-learned models, according to one or more example embodiments of the disclosure;

FIGS. 8A-8B illustrate example prompts for entity recognition tasks, according to one or more example embodiments of the disclosure;

FIGS. 9A-9D illustrate example experimental results, according to one or more example embodiments of the disclosure;

FIG. 10 is a flow chart diagram illustrating an example method for training a machine-learned model according to example implementations of aspects of the disclosure;

FIG. 11 is a block diagram of an example processing flow for using machine-learned model(s) to process input(s) to generate output(s) according to example implementations of aspects of the disclosure;

FIG. 12 is a block diagram of an example sequence processing model according to example implementations of aspects of the disclosure;

FIG. 13 is a block diagram of an example technique for populating an example input sequence for processing by a sequence processing model according to example implementations of aspects of the disclosure;

FIG. 14 is a block diagram of an example model development platform according to example implementations of aspects of the disclosure;

FIG. 15 is a block diagram of an example training workflow for training a machine-learned model according to example implementations of aspects of the disclosure;

FIG. 16 is a block diagram of an inference system for operating one or more machine-learned model(s) to perform inference according to example implementations of aspects of the disclosure;

FIG. 17 is a block diagram of an example networked computing system according to example implementations of aspects of the disclosure;

FIG. 18 is a block diagram of an example computing device according to example implementations of aspects of the disclosure; and

FIG. 19 is a block diagram of an example computing device according to example implementations of aspects of the disclosure.

DETAILED DESCRIPTION

Reference now will be made to embodiments of the disclosure, one or more examples of which are illustrated in the drawings, wherein like reference characters denote like elements. Each example is provided by way of explanation of the disclosure and is not intended to limit the disclosure. In fact, it will be apparent to those skilled in the art that various modifications and variations can be made to disclosure without departing from the scope or spirit of the disclosure. For instance, features illustrated or described as part of one embodiment can be used with another embodiment to yield a still further embodiment. Thus, it is intended that the disclosure covers such modifications and variations as come within the scope of the appended claims and their equivalents.

Entities can be used to represent and organize knowledge. For example, an article can be dedicated to a specific entity (e.g., the Eiffel tower, a basketball, a particular celebrity, etc.). In the field of computer vision, the task of visual entity recognition aims to identify entities within query images. This capability can serve as a fundamental building block for various entity-aware visual understanding tasks (e.g., question-and-answer applications regarding visual imagery, news content understanding applications regarding visual imagery, etc.). However, current models often struggle with web-scale visual entity recognition. These models, typically trained on free-form image captions, tend to hallucinate entities or output overly generic ones, leading to suboptimal performance.

To address the above-mentioned problems, according to some methods, existing captioning datasets are transformed into entity recognition datasets (e.g., entity names from Wikipedia are matched to the most similar captions in a large image-caption database and the corresponding images are used as visual examples for the considered entity). However, the resulting datasets are often noisy, with poor matching between the image content and the candidate entity. One source of mistake is due to the ambiguity of language. For example the entity "bishop of llandaff" may refer both to a person and to a flower species. Another source of mistake is due to noise inherent to the used image-caption dataset that affects the results. For example, an image of a building may be incorrectly linked to the Wikipedia entity "Negative equity" because of the accompanying caption "Worst areas for negative equity." The irrelevant association of the caption with the building image results in the inaccurate connection to the Wikipedia entity. Third, the text embedding matching between entity name and caption is not always accurate. For instance, the caption "nematobrycon espèce nematobrycon palmeri" is incorrectly matched with the entity name "nematocampa resistaria," which are two distinct animal species (a fish and a moth). Moreover, another limitation of these datasets is that they typically focus on a single entity per image, which is a restrictive scenario, as many images contain multiple entities.

According to examples of the disclosure, computing systems and methods are described herein which curate a high-quality, large-scale dataset for web-scale visual entity recognition by implementing one or more multimodal Large Language Models (LLMs) (e.g., which may be available through public APIs) as a verification and annotation tool. In some implementations, the computing systems and methods described herein prompt a LLM to reason about candidate entity labels by accessing additional contextual relevant information (e.g., such as the original image captions and external knowledge sources like Wikipedia), rather than relying on the multimodal LLM for direct annotation, which can be suboptimal. The disclosed computing systems and methods significantly improve the annotation quality of the resulting dataset, as evidenced by experimental results described herein.

Existing methods prompt LLMs with text input only while according to example computing systems and methods of the disclosure, both images and text can be fed to a multimodal LLM. The example computing systems and methods of the disclosure also use the multimodal LLM as a verification and correction tool based on candidate annotations rather than using its raw output as supervision, which can be suboptimal for the task of web-scale finegrained entity recognition.

In some implementations, the multimodal LLM may be configured to augment (enrich) the large-scale dataset with rationales (which can be generated by the multimodal LLM) that explain the relationship between images and their corresponding entities. Training on this additional metadata can improve the performance and visual entity understanding of the LLM. Further, according to examples of the disclosure the computing systems and methods described herein can prompt the multimodal LLM to generate several question-answer pairs that cover a diverse range of entities in an image. Therefore, the computing systems and methods described herein can be applied to images having multiple entities.

As described herein, experimental results demonstrate that models trained on the automatically curated data achieve state-of-the-art performance on web-scale visual entity recognition tasks, notably on the challenging Open-domain Visual Entity recognitioN (OVEN) benchmark (e.g., +6.9% on the OVEN entity split and +3.8% on the OVEN query split). The experimental results were obtained using moderate-size models, which are orders of magnitude smaller than competing approaches, highlighting the importance of high-quality training data in this domain. In some implementations, the large-scale dataset can be utilized as a memory base for approaches such as visual matching, which evidence its versatility and potential for various applications.

When a multimodal LLM directly predicts an entity the output entity may be too generic or the multimodal LLM may hallucinate an entity when it does not know the correct entity. This result may be output because generally LLMs are not specifically trained to identify entities at very high levels of granularity. This results in sub-optimal performance for fine-grained entity recognition tasks, where the goal is to recognize non-generic fine-grained entities.

Described herein are example computing systems and methods configured to generate a large-scale training dataset for web-scale visual entity recognition, using one or more multimodal LLMs in conjunction with external knowledge repositories (e.g., Wikipedia, legal databases, academic databases, medical databases, etc.). The resulting dataset may be referred to herein as a "LLM-Refined Entity-WebLI" (REW).

The one or more multimodal LLMs are trained to accurately match any given image-text query $(x_v, x_t)$ to an entity $e$ among a vast fine-grained set E of possible entities. In example implementations described herein, the set of entities E may include six million entities from English Wikipedia. However, the disclosure is not limited to this example set of entities and other external sources of data or datasets may be used. Each entity $e \in E$ may be associated with (e.g., mapped to) an entity name $t_e$ corresponding to a label associated with the entity (e.g., the entity Wikipedia page title).

Previous studies have observed that auto-regressive image captioning models like GIT or PaLI have suboptimal results when transferred to visual entity recognition, for example, due to the differences between captioning and entity recognition tasks. Some existing methods train models on entity-based data, not captions, and automatically create a new dataset. For example, for each Wikipedia entity, the most relevant image-caption pairs may be found through a nearest neighbor search in a contrastive language-image pretraining (CLIP) text embedding space between encoded entity names and captions. The captions of the corresponding retrieved images may then be replaced with the considered entity name.

Different from these existing methods, the computing systems and methods described herein utilize obtained entities as "candidate entities" which are further refined via the one or more multimodal LLMs as described herein.

For example, to improve the correspondence quality between images and entities, the computing systems and methods described herein implement one or more multimodal LLMs to verify the assignment of an entity to an image. For example, given an image $x_v$ and corresponding entity $e$ obtained from a first dataset (e.g., a dataset generated from the existing methods described herein such as a dataset comprised of entities from Wikipedia), the computing system may be configured to prompt the one or more multimodal LLMs with the task of verifying if $x_v$ is an image representing the entity $e$.

In some implementations, the computing system may further be configured to access external content (e.g., external metadata) to verify if $x_v$ is an image representing the entity $e$. For example, the external metadata may be associated with page content of the candidate entity $e$ (e.g., a Wikipedia entity) and the original caption. For example, the external content (e.g., the Wikipedia content) can enable the one or more multimodal LLMs to know which visual attributes to look for in the image $x_v$, while the original caption may provide information about the corrected entity when the one or more multimodal LLMs detect that the candidate $e$ is not correct.

The corrected entity may not coincide with an actual entity from the first dataset because the one or more LLMs are not provided with the list of entities contained in the first dataset for purposes of verifying if $x_v$ is an image representing the entity $e$. For example, the corrected entity may not correspond to a Wikipedia entity from the Wikipedia dataset (e.g., comprising about 6 million Wikipedia entities) which are not provided to the one or more LLMs for purposes of verifying if $x_v$ is an image representing the entity $e$. In some implementations, the corrected entities not provided in the first dataset may be included in the training dataset while the output (decoded) entity may be constrained to the entities provided in the first dataset (e.g., to the about 6 million Wikipedia entities) at inference time.

In some implementations, the computing system may be configured to provide a prompt to the one or more multimodal LLMs to provide a visually grounded rationale for its proposed entity. The rationale may explain the connection between the image and the assigned entity. As described herein, according to experimental results, utilizing the rationale can improve the performance of the multimodal LLMs. When training a multimodal LLM, the computing system may be configured to follow a multi-task learning strategy in which task prefixes are prepended to the input examples so that the multimodal LLM can output differently based on whether the multimodal LLM is asked to predict an entity name or a rationale.

In some implementations, the computing system may be configured to generate one or more question-answer pairs (QAs). In some implementations, the computing system described herein is configured to prompt the one or more multimodal LLMs to generate question-answer pairs for several, diverse entities in an input image. The one or more multimodal LLMs can have access to the input image, the verified/corrected entity as well as the rationale it previously generated. Compared to existing methods, the computing systems and methods described herein have improved performance based on the OVEN benchmark for both the entity split and the query split.

The computing systems described herein may be configured to implement one or more auto-regressive generative models to generate entity names (e.g., entity names from the first dataset). For example, the computing systems may be configured to implement one or more auto-regressive generative models to generate entity names (e.g., Wikipedia entity names such as page titles $t_e$).

The one or more multimodal LLMs may be configured to transform an input image-text query pair $x = (x_v, x_t)$ into a set of $N$ $d$-dimensional embeddings $X \in \mathbb{R}^{N \times d}$ formed by concatenating the visual encoder output of $x_v$ and the text tokenizer output of $x_t$. The one or more multimodal LLMs may include an auto-regressive text decoder $g(\cdot)$ to generate the target text $y$. For example, the target text can be an entity name, a rationale, etc. The one or more multimodal LLMs may include a decoder configured to predict each text token $y_k$ from the target text (total length $K$) given both the set of preceding token embeddings $\mathbf{Y}_{<k}$ and the input image-text embeddings $\mathbf{X}$. The one or more multimodal LLMs may be trained based on the language modeling objective:

$$\mathcal{L} = \frac{1}{K} \sum_{i=1}^{K} \ell(y_k, g([\mathbf{X}; \mathbf{Y}_{<k}]))$$

where [; ] corresponds to the concatenation operation in the first dimension and $\ell$ is the softmax cross-entropy loss with label-smoothing. The loss over minibatches of examples may be averaged and the weights of the visual encoder and text decoder may be updated with backpropagation.

As described herein, the one or more multimodal LLM models may be trained to perform at least three tasks: (i) predict the verified/corrected visual entity, (ii) generate the rationale, and (iii) answer the questions generated by the multimodal LLM. These tasks may correspond to text generation tasks. Implementation of each task can differ in the nature of the input text $x_t$ and target text $y$. For entity recognition and question answering, the target text $y$ corresponds to a possible entity name and the input text $x_t$ corresponds to a question. For rationale generation, the target text $y$ corresponds to the rationale generated by the one or more multimodal LLMs and the input text $x_t$ includes a prefix specifying to the model that the task is distinct from entity generation. For example, the final multi-task loss objective may be expressed as:

$$ L_{Final} = L_{Entity} + L_{Rationale} + L_{QA} $$

where $L_{Entity}$, $L_{Rationale}$ and $L_{QA}$ correspond to entity, rationale and answer generation respectively.

One or more technical benefits of the disclosure include the implementation of one or more multimodal machine-learned models which recognize entities in images. The computing systems and methods described herein improve the quality of the entity recognition and resulting dataset, reducing or eliminating the need for manual annotation. For example, the computing systems and methods described herein can provide more specific entity identification compared to ground truth data (e.g., a prediction of spotting scope compared to ground truth data of a telescopic sight). The multimodal machine-learned models described herein also can achieve improved performance while using less parameters compared to other models. The computing systems and methods described herein can conserve computing resources by correctly identifying entities and avoiding the need to conduct another search by the user to obtain correct information about the image. Further, in some implementations the machine-learned models described herein can be embodied by pre-existing machine-learned models that are capable of processing prompts as described herein to correct entity labels and thereby improve entity recognition in images. For example, enabling the reuse of a pre-existing machine-learned model with the new techniques described herein, can save storage on a computing device and/or time for training because it is not necessary to train and store a new model.

Therefore, aspects of the disclosure provide technical effects, benefits, and/or improvements in computing technology and the technology of entity recognition in images, via one or more computing devices (e.g., a user computing device, a server computing system, and combinations thereof) which implement one or more machine-learned models, as described herein.

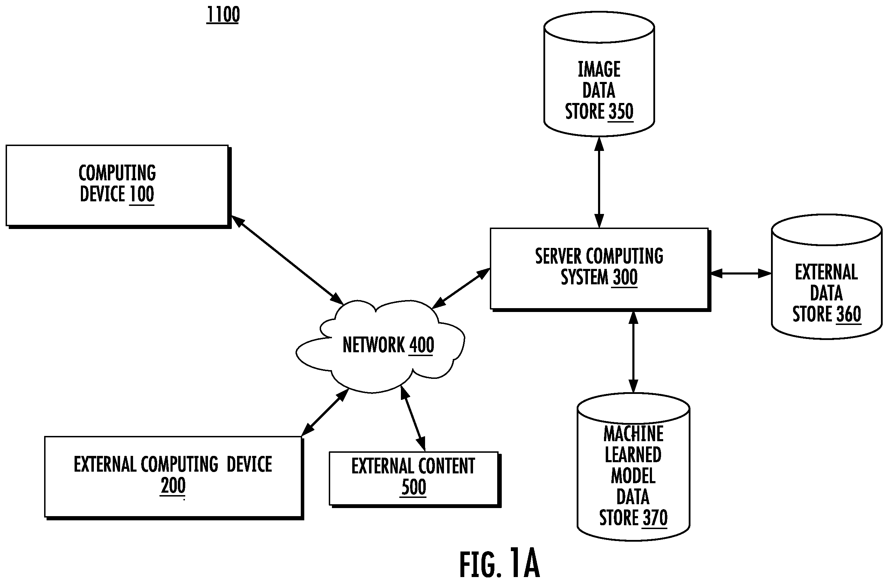

Referring now to the drawings, FIG. 1A is an example system according to one or more example embodiments of the disclosure. FIG. 1A illustrates an example of a system 1100 which includes a computing device 100, an external computing device 200, a server computing system 300, and external content 500, which may be in communication with one another over a network 400. For example, the computing device 100 and the external computing device 200 can include any of a personal computer, a smartphone, a tablet computer, a laptop, a global positioning service device, a smartwatch, and the like. The network 400 may include any type of communications network including a wired or wireless network, or a combination thereof. The network 400 may include a local area network (LAN), wireless local area network (WLAN), wide area network (WAN), personal area network (PAN), virtual private network (VPN), or the like. For example, wireless communication between elements of the example embodiments may be performed via a wireless LAN, Wi-Fi, Bluetooth, ZigBee, Wi-Fi direct (WFD), ultra wideband (UWB), infrared data association (IrDA), Bluetooth low energy (BLE), near field communication (NFC), a radio frequency (RF) signal, and the like. For example, wired communication between elements of the example embodiments may be performed via a pair cable, a coaxial cable, an optical fiber cable, an Ethernet cable, and the like. Communication over the network 400 can use a wide variety of communication protocols (e.g., TCP/IP, HTTP, SMTP, FTP), encodings or formats (e.g., HTML, XML), and/or protection schemes (e.g., VPN, secure HTTP, SSL).

As will be explained in more detail below, in some implementations the computing device 100 and/or server computing system 300 may form part of an application system which can provide a tool for identifying one or more entities in an image, via one or more machine-learned models.

In some example embodiments, the server computing system 300 may obtain data from one or more of an image data store 350, an external data store 360, and a machine-learned model data store 370, to implement various operations and aspects of the application system as disclosed herein. The image data store 350, external data store 360, and machine-learned model data store 370 may be integrally provided with the server computing system 300 (e.g., as part of the one or more memory devices 320 of the server computing system 300) or may be separately (e.g., remotely) provided. Further, image data store 350, external data store 360, and machine-learned model data store 370 can be combined as a single data store (database) or may include a plurality of respective data stores. Data stored in one data store (e.g., the image data store 350) may overlap with some data stored in another data store (e.g., external data store 360). In some implementations, one data store (e.g., the machine-learned model data store 370) may reference data that is stored in another data store (e.g., the image data store 350 and/or the external data store 360).

In some implementations, the image data store 350 can store images or videos. In some implementations, the information stored in the image data store 350 can be associated with and/or stored according to a particular user or a plurality of users, according to the number of entities appearing in the image, according to a particular category, genre, context, time, location, etc. In some implementations, the information stored in the image data store 350 can be associated with and/or stored according to a particular environment (e.g., outdoor, indoor, under certain weather conditions, etc.) in which the image was captured, a particular orientation from which the image was captured (e.g., in landscape and portrait orientations), a particular camera position or angle from which the image was captured (e.g., an overhead camera angle, a perspective view, etc.), a particular lighting condition in which the image was captured, a particular background in which the image was captured, etc. In some implementations, the information stored in the image data store 350 can be associated with and/or stored according to a particular application that is associated with the image (e.g., a particular software application that was used to capture the image), a particular resolution of an image, a particular duration of a video (e.g., videos less than 30 seconds, about one minute long, about two minutes long, etc.).

In some implementations, the external data store 360 can store data associated with entities which may appear in images. The external data store 360 may correspond to an external knowledge repository or database (e.g., Wikipedia, legal databases, academic databases, medical databases, etc.). The external data store 360 can include information including visual attributes which are characteristic of an entity (e.g., a candidate entity).

Machine-learned model data store 370 can store machine-learned models which can be retrieved and implemented by the server computing system 300 for generating distilled or fine-tuned machine-learned models (e.g., distilled or fine-tuned generative machine-learned models) that, in some implementations, can also be provided to the computing device 100. Machine-learned model data store 370 can also store distilled or fine-tuned machine-learned models (e.g., distilled or fine-tuned generative machine-learned models) which can be retrieved and implemented by the computing device 100. In some implementations, the computing device 100 can retrieve and implement machine-learned models which are large parameter models that have not been fine-tuned or distilled. The machine-learned models (including large parameter models and distilled or fine-tuned models) stored at the machine-learned model data store 370 can include generative machine-learned models respectively associated with different types of applications, types of images, categories of images, etc. that may be implemented across a variety of domains (e.g., healthcare, gaming, engineering/science, entertainment, etc.). The machine-learned models may include large language models and general, multimodal models (e.g., Gemini). The machine-learned models may include generative artificial intelligence (AI) models which may implement generative adversarial networks (GANs), transformers, variational autoencoders (VAEs), neural radiance fields (NeRFs), and the like

External content 500 can be any form of external content including news articles, webpages, video files, audio files, written descriptions, ratings, game content, social media content, photographs, commercial offers, transportation method, weather conditions, sensor data obtained by various sensors, or other suitable external content. The computing device 100, external computing device 200, and server computing system 300 can access external content 500 over network 400. External content 500 can be searched by computing device 100, external computing device 200, and server computing system 300 according to known searching methods and search results can be ranked according to relevance, popularity, or other suitable attributes, including location-specific filtering or promotion.

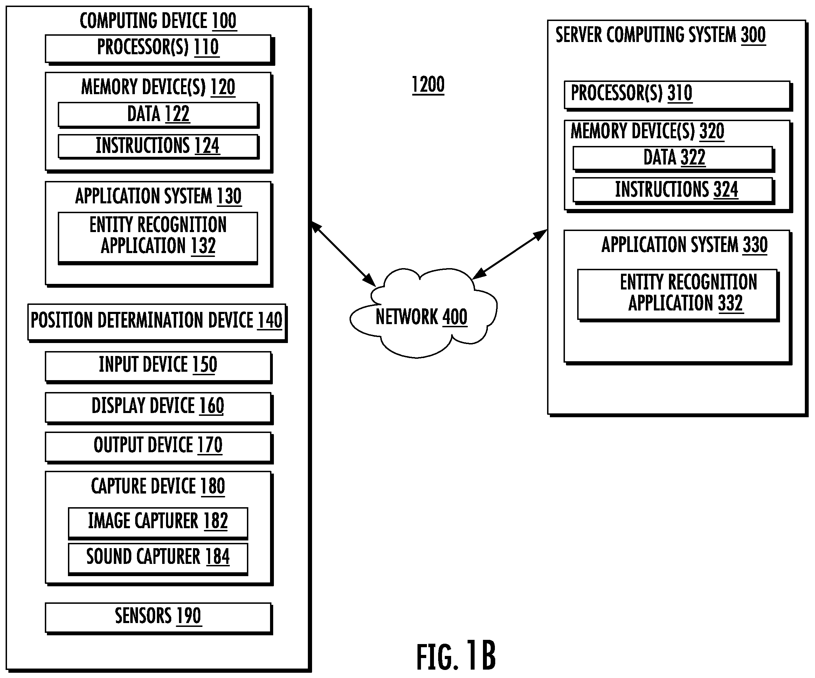

FIG. 1B is an example block diagram of a computing system, according to one or more example embodiments of the disclosure. Referring now to FIG. 1B, example block diagrams of a system 1200 including a computing device 100 and server computing system 300 according to one or more example embodiments of the disclosure will now be described. Although computing device 100 is represented in FIG. 1B, features of the computing device 100 described herein are also applicable to the external computing device 200.

The computing device 100 may include one or more processors 110, one or more memory devices 120, an application system 130, a position determination device 140, an input device 150, a display device 160, an output device 170, and a capture device 180. The server computing system 300 may include one or more processors 310, one or more memory devices 320, and an application system 330.

For example, the one or more processors 110, 310 can be any suitable processing device that can be included in a computing device 100 or server computing system 300. For example, the one or more processors 110, 310 may include one or more of a processor, processor cores, a controller and an arithmetic logic unit, a central processing unit (CPU), a graphics processing unit (GPU), a digital signal processor (DSP), an image processor, a microcomputer, a field programmable array, a programmable logic unit, an application-specific integrated circuit (ASIC), a microprocessor, a microcontroller, etc., and combinations thereof, including any other device capable of responding to and executing instructions in a defined manner. The one or more processors 110, 310 can be a single processor or a plurality of processors that are operatively connected, for example in parallel.

The one or more memory devices 120, 320 can include one or more non-transitory computer-readable storage mediums, including a Read Only Memory (ROM), Programmable Read Only Memory (PROM), Erasable Programmable Read Only Memory (EPROM), and flash memory, a USB drive, a volatile memory device including a Random Access Memory (RAM), a hard disk, floppy disks, a Blu-ray disk, or optical media such as CD ROM discs and DVDs, and combinations thereof. However, examples of the one or more memory devices 120, 320 are not limited to the above description, and the one or more memory devices 120, 320 may be realized by other various devices and structures as would be understood by those skilled in the art.

For example, the one or more memory devices 120 can also include data 122 and instructions 124 that can be retrieved, manipulated, created, or stored by the one or more processors 110. In some example embodiments, such data can be accessed and used as input to implement entity recognition application 132, and to execute the instructions to perform operations including: receiving a request to identify an entity in an image, determining a candidate entity label for the entity based on the image, implementing one or more first machine-learned models to update the candidate entity label with a corrected entity label for the entity, based on the image, a textual description of the image, and contextual information associated with the candidate entity label, and providing an output including the corrected entity label for the entity in the image, as described according to examples of the disclosure.

For example, the one or more memory devices 320 can also include data 322 and instructions 324 that can be retrieved, manipulated, created, or stored by the one or more processors 310. In some example embodiments, such data can be accessed and used as input to implement entity recognition application 332, and to execute the instructions to perform operations including: receiving a request to identify an entity in an image, determining a candidate entity label for the entity based on the image, implementing one or more first machine-learned models to update the candidate entity label with a corrected entity label for the entity, based on the image, a textual description of the image, and contextual information associated with the candidate entity label, and providing an output including the corrected entity label for the entity in the image, as described according to examples of the disclosure.

In some example embodiments, the computing device 100 includes an application system 130. For example, the application system 130 may include the entity recognition application 132. The application system 130 can include various other applications including recommendation applications, search applications, gaming applications, document applications, text messaging applications, email applications, dictation applications, virtual keyboard applications, browser applications, map applications, social media applications, navigation applications, etc.

According to examples of the disclosure, the entity recognition application 132 may be executed by the computing device 100 to provide a result indicating the identification of one or more entities in an image and to provide feedback or information to a user regarding a rationale for the identification of the one or more entities, via one or more machine-learned models. In some implementations, the entity recognition application 132 may be part of another application (e.g., a search application, health application, gaming application, etc.) or may be a standalone application. The entity recognition application 132 may be configured to be dynamically interactive according to various user inputs. Example implementations of the entity recognition application 132 are described herein, however the disclosure is not limited to these examples as various modifications may be made to the embodiments described herein.

In some examples, one or more aspects of the entity recognition application 132 may be implemented by the entity recognition application 332 of the server computing system 300 which may be remotely located, to provide a user of the computing device 100 a way to determine an entity in an image and to create or generate a training dataset of images with corrected entity labels, via one or more machine-learned models. In some examples, one or more aspects of the entity recognition application 332 may be implemented by the entity recognition application 132 of the computing device 100, to determine an entity in an image and to create or generate a training dataset of images with corrected entity labels, via one or more machine-learned models.

In some example embodiments, the computing device 100 includes a position determination device 140. Position determination device 140 can determine a current geographic location of the computing device 100 and communicate the geographic location to the server computing system 300 over network 400. The position determination device 140 can be any device or circuitry for analyzing the position of the computing device 100. For example, the position determination device 140 can determine actual or relative position by using a satellite navigation positioning system (e.g. a GPS system, a Galileo positioning system, the GLObal Navigation satellite system (GLONASS), the BeiDou Satellite Navigation and Positioning system), an inertial navigation system, a dead reckoning system, based on an IP address, by using triangulation and/or proximity to cellular towers or WiFi hotspots, and/or other suitable techniques for determining a position of the computing device 100. For example, in some implementations the entity recognition application 132 may be configured to utilize position information determined by the position determination device 140 in connection with determining the identification of an entity in an image (e.g., in conjunction with an image captured by capture device 180).

The computing device 100 may include an input device 150 configured to receive an input from a user and may include, for example, one or more of a keyboard (e.g., a physical keyboard, virtual keyboard, etc.), a mouse, a joystick, a button, a switch, an electronic pen or stylus, a gesture recognition sensor (e.g., to recognize gestures of a user including movements of a body part), an input sound device or speech recognition sensor (e.g., a microphone to receive a voice input such as a voice command or a voice query), a track ball, a remote controller, a portable (e.g., a cellular or smart) phone, a tablet PC, a pedal or footswitch, a virtual-reality device, and so on. The input device 150 may also be embodied by a touch-sensitive display having a touchscreen capability, for example. For example, the input device 150 may be configured to receive an input from a user associated with the input device 150 for executing the entity recognition application 132, for capturing an image via the capture device 180, for providing feedback to the entity recognition application 132, for communicating with other users, for accepting or declining suggestions or recommendations provided by the computing device 100 with respect to the identification of an entity in an image, etc.

The computing device 100 may include a display device 160 which displays information viewable by the user (e.g., a user interface screen). For example, the display device 160 may be a non-touch sensitive display or a touch-sensitive display. The display device 160 may include a liquid crystal display (LCD), a light emitting diode (LED) display, an organic light emitting diode (OLED) display, active matrix organic light emitting diode (AMOLED), flexible display, 3D display, a plasma display panel (PDP), a cathode ray tube (CRT) display, and the like, for example. However, the disclosure is not limited to these example displays and may include other types of displays. The display device 160 can be used by the application system 130 provided at the computing device 100 to display information to a user relating to the identification of an entity, relating to information about an entity, relating to a rationale for the identification of a particular entity, etc. The display device 160 can be configured to provide, for presentation to a user, one or more user interface screens having user interface elements which are selectable by the user for requesting the identification of an entity in an image, for providing feedback or instructions (guidance) to a user regarding the identification of an entity, etc.

The computing device 100 may include an output device 170 to provide an output to the user and may include, for example, one or more of an audio device (e.g., one or more speakers), a haptic device to provide haptic feedback to a user (e.g., a vibration device), a light source (e.g., one or more light sources such as LEDs which provide visual feedback to a user), a thermal feedback system, and the like. For example, the output device 170 may provide information relating to the identification of an entity in an image, for providing feedback or instructions (guidance) to a user regarding the identification of an entity, etc.

The computing device 100 may include a capture device 180 that is capable of capturing media content, according to various examples of the disclosure. For example, the capture device 180 can include an image capturer 182 (e.g., a camera) which is configured to capture images (e.g., photos, video, and the like). For example, the image capturer 182 can include one or more cameras having an imaging sensor (e.g., a complementary metal-oxide-semiconductor (CMOS) or charge-coupled device (CCD)). For example, the capture device 180 can include a sound capturer 184 (e.g., a microphone) which is configured to capture sound or audio (e.g., an audio recording). The media content captured by the capture device 180 may be transmitted to one or more of the server computing system 300, image data store 350, external data store 360, and machine-learned model data store 370, for example, via network 400. For example, in some implementations, content which is captured by the capture device 180 may be provided as an input to one or more machine-learned models for a task of identifying one or more entities in an image.

The computing device 100 may include one or more sensors 190. For example, the one or more sensors 190 may include an inertial measurement unit which includes one or more accelerometers and/or one or more gyroscopes. The one or more accelerometers may be used to capture motion information with respect to the computing device 100. The one or more gyroscopes may also be used additionally or alternatively to capture motion information with respect to the computing device 100. For example, the inertial measurement unit may be configured as a six-axis or six-dimensional inertial measurement unit (e.g., a tri-axial accelerometer and a tri-axial gyroscope). The motion information obtained via the inertial measurement unit may be associated with the user when the computing device 100 is worn or carried by the user. For example, the one or more sensors 190 may include one or more optical sensors (e.g., one or more photoplethysmography (PPG) sensors, one or more electrocardiogram sensors, etc.). The one or more sensors 190 may also include other sensors such as a magnetometer, proximity sensor, Hall effect sensor, and the like.

In accordance with example embodiments of the disclosure, the server computing system 300 can include one or more processors 310 and one or more memory devices 320 as described herein. The server computing system 300 may also include an application system 330 which is similar to the application system 130 described herein.

For example, the application system 330 may include the entity recognition application 332 which performs functions similar to those described herein with respect to entity recognition application 132. In some implementations, one or more machine-learned models (e.g., generative machine-learned models, large language models, etc.) associated with the entity recognition application 332 may be configured to provide a result indicating the identification of one or more entities in an image and to provide feedback or information to a user regarding a rationale for the identification of the one or more entities. In some implementations, the entity recognition application 332 may be part of another application (e.g., a search application, health application, gaming application, etc.) or may be a standalone application.

For example, one or more machine-learned models (e.g., generative machine-learned models, large language models, etc.) associated with the application system 330 may be configured to perform a first action (e.g., implementing one or more first machine-learned models to update the candidate entity label with a corrected entity label for the entity), while the computing device 100 may be configured to perform a second action (e.g., to provide an output including the corrected entity label for the entity in the image.). For example, one or more machine-learned models (e.g., generative machine-learned models, large language models, etc.) associated with the application system 130 may be configured to perform a first action (e.g., to implement one or more first machine-learned models to update the candidate entity label with a corrected entity label for the entity), while the server computing system 300 may be configured to perform a second action (e.g., to determine a candidate entity label for the entity based on the image).

Examples of the disclosure are directed to computer implemented methods for visual entity recognition and/or for providing feedback or instructions (guidance) to a user regarding the identification of an entity in an image, via one or more machine-learned models.

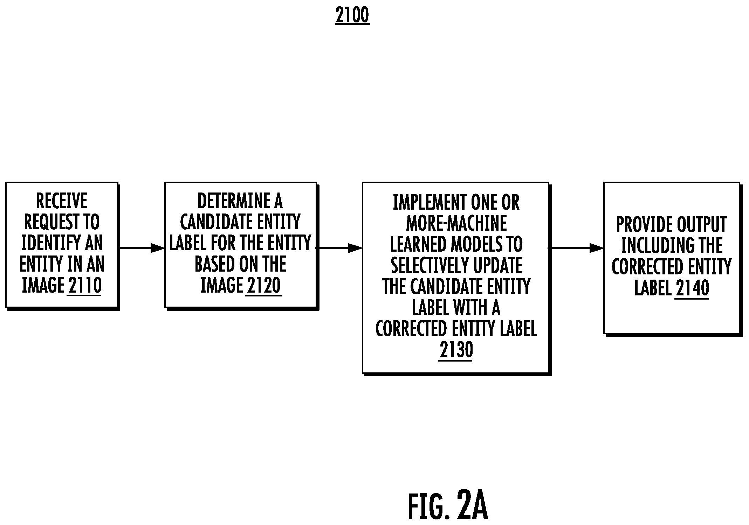

The flow diagram of FIG. 2A illustrates a method 2100 for providing an output including a corrected entity label for an entity in an image, by implementing one or more first machine-learned models. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

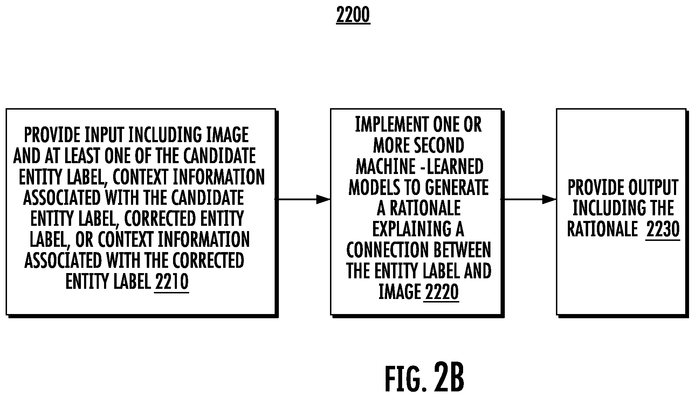

The flow diagram of FIG. 2B illustrates a method 2200 for outputting a rationale for providing a corrected entity label, by implementing one or more second machine-learned models. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

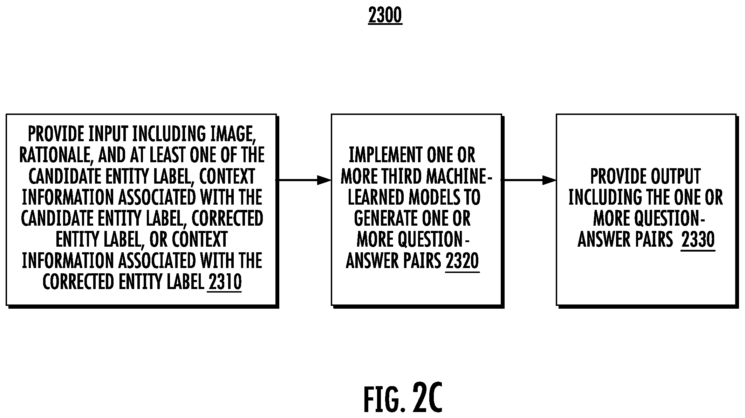

The flow diagram of FIG. 2C illustrates a method 2300 for outputting one or more question-answer pairs based on the image and rationale, by implementing one or more third machine-learned models. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

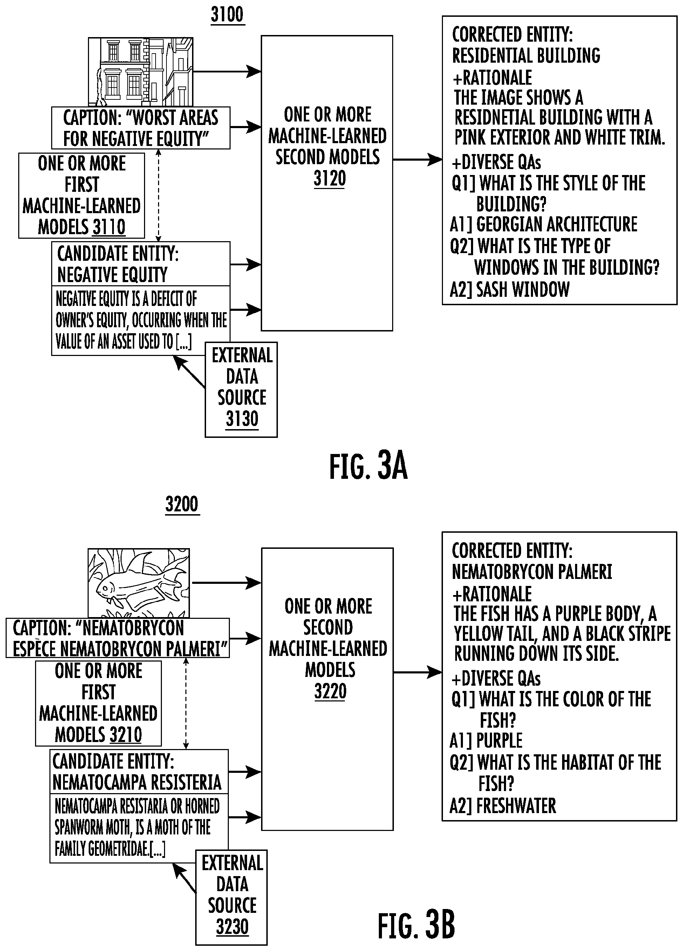

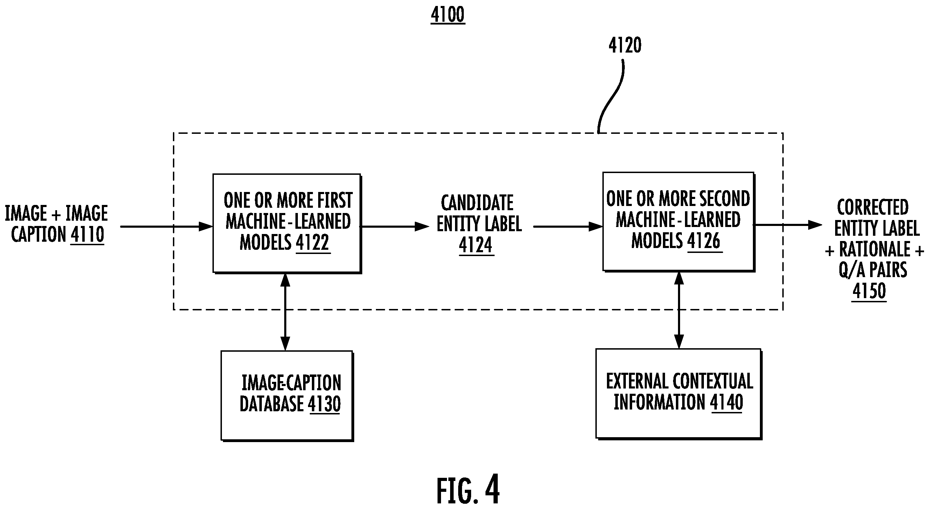

The operations of FIGS. 2A-2C will be explained with reference to FIGS. 3A-4. FIGS. 3A-3B illustrate example block diagrams of an entity recognition application, according to one or more example embodiments of the disclosure. FIG. 4 illustrates an example block diagram of an entity recognition application, according to one or more example embodiments of the disclosure.

Referring to FIG. 2A, at operation 2110 the method 2100 includes a computing device receiving a request to identify an entity in an image. As described herein, the computing device may be embodied as computing device 100, server computing system 300, or combinations thereof. For example, the request to identify an entity in an image may be received via the input device 150. In some implementations, the request may be received automatically in response to an image being received (e.g., from another computing device), in response to an image being captured (e.g., via the one or more capture devices 180), etc.

For example, in FIG. 4, the entity recognition application 4120 may be configured to receive an input image and an associated textual description (e.g., an image caption) relating to the image (image and image caption 4110). The entity recognition application 4120 may correspond to entity recognition application 132 and/or entity recognition application 332. Though not depicted in FIG. 4, entity recognition application 3200 may also be configured to receive other input data which may be used to identify one or more entities in the image (e.g., position information associated with the image, motion data associated with the image, sensor data associated with the image and/or environment, etc.) that can be collected via the position determination device 140, capture device, 180 and/or the one or more sensors 190. The example of FIG. 3A illustrates an image of a building and an associated image caption of "worst areas for negative equity." The example of FIG. 3B illustrates an image of a fish and an associated image caption of "nematobrycon espece nematobrycon palmen."

At operation 2120 the method 2100 includes determining a candidate entity label for the entity based on the image. For example, in FIG. 4, the entity recognition application 4120 may include one or more first machine-learned models 4122 configured to determine the candidate entity label based on the content of the image and associated image caption. In some implementations, the one or more first machine-learned models 4122 may be configured to determine the candidate entity label based on the content of the image alone. For example, the one or more first machine-learned models 4122 may determine the candidate entity label for the entity using a k-nearest neighbor method (algorithm). For example, the one or more first machine-learned models 4122 may be configured to reference an image-caption database 4130 through a nearest neighbor search in a contrastive language-image pretraining (CLIP) text embedding space between encoded entity names and image captions. The image captions of the corresponding retrieved images may then be replaced with the candidate entity label 4124. In example implementations described herein, a set of entities E (from which the candidate entity label may be selected) may include six million entities from English Wikipedia. However, the disclosure is not limited to this example set of entities and other external sources of data or datasets may be used (e.g., legal datasets, academic datasets, etc.). Each entity $e \in E$ may be associated with (e.g., mapped to) an entity name $t_e$ corresponding to a label associated with the entity (e.g., the entity Wikipedia page title).

In the example of FIG. 3A, the one or more first machine-learned models 3110 output a candidate entity label of "negative equity" based on the caption "worst areas for negative equity." The example of FIG. 3A demonstrates an incorrect identification of the building in the image as the entity "negative entity", based on the caption being unrelated or having a weak association with the entity in the image. In the example of FIG. 3B, the one or more first machine-learned models 3210 output a candidate entity of "nematocampa resisteria" based on the caption "nematobrycon espece nematobrycon palmen." The example of FIG. 3B demonstrates an incorrect identification of the fish in the image as the candidate entity label "nematocampa resisteria" (which is a moth rather than a fish) due to an inaccurate text embedding matching between the entity name and the image caption. For example, the entity name from which the candidate entity name is obtained may correspond to a title associated with the entity in the image-caption database 4130. For example, the entity name may be the title of a Wikipedia page regarding the entity.

At operation 2130 the method 2100 includes the computing device implementing one or more machine-learned models to selectively update the candidate entity label with a corrected entity label. For example, the one or more machine-learned models may correspond to the one or more second machine-learned models 4126 from FIG. 4. The one or more second machine-learned models 4126 may be configured to process a plurality of inputs to generate a corrected entity label for the candidate entity label. The plurality of inputs can include the image, a textual description of the image, and contextual information associated with the candidate entity label. For example, the one or more second machine-learned models 4126 can selectively update the candidate entity label with a corrected entity label based on the image, a textual description of the image (e.g., the image and image caption 4110), and external contextual information 4140 associated with the candidate entity label. The one or more second machine-learned models 4126 may include one or more multimodal LLMs (e.g., one or more multi-modal vision language models) that are trained to accurately match any given image-text query $(x_v, x_t)$ to an entity $e$ among a vast fine-grained set E of possible entities. For example, the external contextual information 4140 may be received from an external data source (e.g., a knowledge source or repository such as the external data store 360). In some implementations, the external data source may include (store) content or information related to the candidate entity label and the candidate entity label corresponds to a title associated with the content. In some implementations, the external data source may include (store) content or information related to the candidate entity label and the candidate entity label corresponds to a title associated with the content.

For example, implementing the one or more second machine-learned models 4126 to update the candidate entity label with the corrected entity label for the entity may include verifying whether the candidate entity label assigned to the entity in the image and the contextual information associated with the candidate entity label, corresponds to visual attributes in the image. The one or more second machine-learned models 4126 may be configured to reference the contextual information associated with the candidate entity label (e.g., from external contextual information 4140) to determine visual attributes to look for in the image, while the image caption may provide information which can assist the one or more second machine-learned models 4126 in determining a corrected entity label when the candidate entity label 4124 is incorrect and does not correctly identify the entity in the image. For example, the one or more second machine-learned models 4126 may be configured to confirm that the candidate entity label is correct when a result of the output of the one or more second machine-learned models 4126 predicts the same candidate entity label as a top-rated prediction. For example, the one or more second machine-learned models 4126 may be configured to update the candidate entity label with a corrected entity label when a result of the output of the one or more second machine-learned models 4126 predicts another entity label which is different from the candidate entity label, as a top-rated prediction.

For example, given an image $x_v$ and corresponding entity $e$ obtained from a first dataset (e.g., a dataset generated from the existing methods described herein such as a dataset comprised of entities from Wikipedia), the computing device may be configured to prompt the one or more second machine-learned models 4126 with the task of verifying if $x_v$ is an image represent-

ing the entity *e*.

In some implementations, the computing device may further be configured to access external content (e.g., external metadata) from external contextual information 4140 to verify if $x_v$ is an image representing the entity *e*. For example, the external metadata may be associated with page content of the candidate entity *e* (e.g., a Wikipedia entity) and the original caption. For example, the external content (e.g., the Wikipedia content) can enable the one or more second machine-learned models 4126 to know which visual attributes to look for in the image $x_v$, while the original caption may provide information about the corrected entity when the one or more second machine-learned models 4126 detect that the candidate *e* is not correct.

In some examples, the corrected entity may not coincide with an actual entity from the first dataset because the one or more second machine-learned models 4126 may not be provided with the list of entities contained in the first dataset for purposes of verifying if $x_v$ is an image representing the entity *e*. For example, the corrected entity may not correspond to a Wikipedia entity from the Wikipedia dataset comprising the 6 million Wikipedia entities (which are not provided to the one or more second machine-learned models 4126 for purposes of verifying) if $x_v$ is an image representing the entity *e*. In some implementations, the corrected entities not provided in the first dataset may be included in the training dataset while the output (decoded) entity may be constrained to the entities provided in the first dataset (e.g., to the 6 million Wikipedia entities) at inference time (e.g., to an entity in the first dataset which is closest to the corrected entity, to an entity in the first dataset which is highest ranked other than corrected entities not in the first dataset, etc.).

In the example of FIG. 3A, the one or more second machine-learned models 3120 output a corrected entity label of "residential building," for example, based on the caption "worst areas for negative equity," the contextual information obtained from the external data source 3130 relating to the candidate entity (e.g., "Negative equity is a deficit of owner's equity, occurring when the value of an asset used to . . ."), and visual attributes of the image. In the example of FIG. 3B, the one or more second machine-learned models 3220 output a corrected entity label of "nematobrycon palmeri," for example, based on the caption "nematobrycon espece nematobrycon palmeri," the contextual information obtained from the external data source 3230 relating to the candidate entity (e.g., "Nematocampa resisteria or horned spamworth moth, is a moth of the family Geometridae . . ."), and visual attributes of the image. In some implementations, the one or more second machine-learned models 3220 may be configured to verify the corrected entity label based on contextual information obtained from the external data source 3230 relating to the corrected entity label.

At operation 2140 the method 2100 includes the computing device providing an output including the corrected entity label for the entity in the image. For example, the one or more second machine-learned models 4126 may be configured to output the corrected entity label and the computing device may be configured to provide, for presentation to a user, the corrected entity label which indicates the identity of the entity in the image (e.g., the entity which is representative of the image). As illustrated in FIG. 4, in some implementations, the output of the entity recognition application 4120 may include the corrected entity label as well as at least one of a rationale or one or more question and answer pairs (corrected entity label and rationale and question and answer pairs 4150). The output may be provided via output device 170, for example.

Example implementations of the method 2100 may be as follows regarding a first image of a cat with a first image caption of "my little tiger" and a second image of a tiger with a second image caption of "tiger in the wild." First, the first and second images and first and second image captions may be received by the computing device 2110 (e.g., together with a request to identify the entities in the first and second images). Second, candidate entity labels may be determined at operation 2120 for each of the images based on the respective images and the respective image captions, for example via a text-to-text k-NN search and with reference to the image-caption database 4130. For example, the first and second candidate entity labels may both be output or determined to be a "tiger." At operation 2130, the one or more second machine-learned models 4126 may be implemented to verify whether the first and second candidate entity labels are correct or need to be updated (corrected). As an example, the prompt provided to the one or more second machine-learned models 4126 may be as follows: "Is this an image of a <Tiger>? Your answer must be either 'YES' or 'NO'. Here is the definition of <Tiger>: [...]. If your answer is 'NO', use the caption of the image to describe the image. Explain your answer by describing the image visual attributes. [...]." For example, the definition of <Tiger> may be obtained with reference to an external data source (e.g., a Wikipedia page corresponding to the candidate entity label). The one or more second machine-learned models 4126 may determine that the image of the cat in the first image does not correspond to a tiger, and may be configured to output a corrected entity label of a "cat" together with a rationale and question and answer pairs generated via methods explained with reference to FIGS. 2B and 2C. The one or more second machine-learned models 4126 may determine that the image of the tiger in the second image does correspond to a tiger, and may be configured to output a corrected entity label of a "tiger" which matches the candidate entity label, together with a rationale and question and answer pairs generated via methods explained with reference to FIGS. 2B and 2C.

In some implementations, the method 2100 may be applied to an image which includes a plurality of entities. For example, when the image includes a plurality of entities, the entity recognition application 4120 may be configured to determine a respective candidate entity label for each of the entities among the plurality of entities in the image. For example, the one or more second machine-learned models 4126 may be implemented to update each of the respective candidate entity labels with a respective corrected entity label for each of the entities among the plurality of entities in the image.

For example, in response to an entity label being updated or corrected for an image, a training dataset which includes the image can be updated. The computing device may be configured to generate a training dataset (or an updated training dataset) which includes a plurality of images, where at least some of the images among the plurality of images are associated with at least one corrected entity label. In some implementations, if a plurality of entities are included in an image and the plurality of entities are associated with corrected entity labels the image may be mapped to the plurality of corrected entity labels which are representative of the image. In some implementations, the updated training dataset can be used to train a machine-learned model for the task of visual entity recognition.

FIG. 2B illustrates a flow diagram of an example, non-limiting computer-implemented method 2200 which is directed to providing a rationale that can explain the connection between the image and the assigned entity label. At operation 2210 the method 2200 includes the computing device providing an input including the image and at least one of the textual description of the image (the image caption), context information associated with the candidate entity label, the corrected entity label, or the context information associated with the corrected entity label. As described herein, the computing device may be embodied as computing device 100, server computing system 300, or combinations thereof.

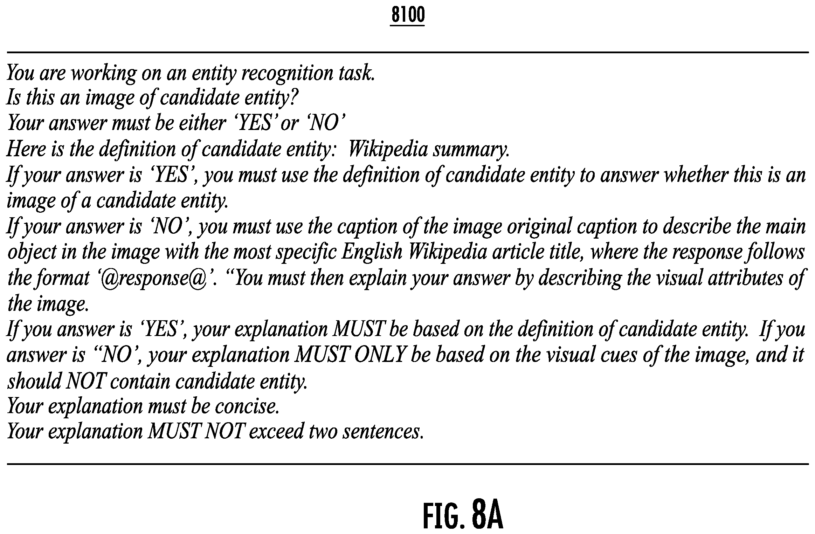

In some implementations, the computing device may be configured to provide a prompt to the entity recognition application 4120 (e.g., the one or more second machine-learned models 4126) to provide a visually grounded rationale for the entity label assigned to the image. FIG. 8A illustrates an example prompt to the computing device for an entity recognition task and for generating a rationale which describes the visual attributes of the image that support a determination regarding maintaining the candidate entity label or a determination regarding updating the candidate entity label with the corrected entity label.

For example, if the candidate entity label is maintained (is verified as corresponding to the image), the input may include the image, candidate entity label, and the context information associated with the candidate entity label. For example, if the candidate entity label is updated with the corrected entity label, the input may include the image, corrected entity label, and context information associated with the corrected entity label.

At operation 2220 the method 2200 includes the computing device implementing one or more machine-learned models to generate a rationale explaining a connection between the entity label and image. For example, the one or more machine-learned models may correspond to the one or more second machine-learned models 4126. In some implementations, the one or more machine-learned models may be included in the entity recognition application 4120 and may be separate or different from the one or more second machine-learned models 4126. In some implementations, when the candidate entity label 4124 is updated with the corrected entity label based on a result of the verification operations described with respect to FIG. 2A, the one or more second machine-learned models 4126 may be configured to provide the rationale based on one or more of visual indications or attributes associated with the image, external contextual information 4140 associated with the corrected entity label, and the textual description of the image (e.g., the image caption), and without reference to the candidate entity label 4124. In some implementations, when the candidate entity label 4124 is maintained based on a result of the verification operations described with respect to FIG. 2A, the one or more second machine-learned models 4126 may be configured to provide the rationale based on the image, the textual description of the image (e.g., the image caption) and/or the external contextual information 4140 associated with the candidate entity label 4124. In some implementations, the rationale may be limited to a predetermined length (e.g., two sentences, fifty words, etc.). In the examples of FIGS. 3A and 3B, rationales are provided. In FIG. 3A, the rationale indicates that the image contains a residential building with a pink exterior and white trim (e.g., visual attributes obtained from the image). In FIG. 3B, the rationale indicates that the image contains a fish having a purple body, a yellow tail, and a black stripe running down its side (e.g., visual attributes obtained from the image consistent with the identification of the corrected entity label).

In some implementations, at operation 2220 the computing device (e.g., the one or more second machine-learned models 4126) may be configured to transform an input image-text query pair $x = (x_v, x_t)$ into a set of $N$ $d$-dimensional embeddings $\mathbf{X} \in \mathrm{R}^{N \times d}$ formed by concatenating the visual encoder output of $x_v$ and the text tokenizer output of $x_t$. The one or more second machine-learned models 4126 may include an auto-regressive text decoder $g(\cdot)$ to generate the target text $y$. For example, the target text can include the rationale. The one or more second machine-learned models 4126 may include a decoder configured to predict each text token $y_k$ from the target text (total length $K$) given both the set of preceding token embeddings $\mathbf{Y}_{<k}$ and the input image-text embeddings $\mathbf{X}.$ The one or more second machine-learned models 4126 may be trained based on the language modeling objective:

$$\mathcal{L} = \frac{1}{K} \sum_{i=1}^{K} \ell(y_k, g([\mathbf{X}; \mathbf{Y}_{<k}]))$$

where [; ] corresponds to the concatenation operation in the first dimension and $\ell$ is the softmax cross-entropy loss with label-smoothing. The loss over minibatches of examples may be averaged and the weights of the visual encoder and text decoder may be updated with backpropagation. The described language modeling objective can be implemented by the one or more second machine-learned models 4126 for the method of FIG. 2A, where the target text y corresponds to a possible entity name. For rationale generation, the target text y corresponds to the rationale generated by the one or more second machine-learned models 4126 and the input text $x_t$ can include a prefix specifying to the model that the task is distinct from entity generation.

At operation 2230 the method 2200 may include the computing device providing an output including the rationale. For example, the one or more second machine-learned models 4126 may be configured to output the rationale and the computing device may be configured to provide, for presentation to a user, the rationale which includes a description (e.g., a textual description) explaining the connection between visual attributes in the image and the entity label (e.g., the candidate entity label or the corrected entity label). As illustrated in FIG. 4, in some implementations, the output of the entity recognition application 4120 may include the corrected entity label as well as at least one of a rationale or one or more question and answer pairs (corrected entity label and rationale and question and answer pairs 4150). The output may be provided via the output device 170, for example. In the case that the candidate entity label is not updated or corrected, the output may include the candidate entity label as well as at least one of a rationale or one or more question and answer pairs.

In some implementations, the method 2200 may be applied to an image which includes a plurality of entities. For example, when the image includes a plurality of entities, the entity recognition application 4120 may be configured to provide a rationale for each entity label determined for each of the entities among the plurality of entities in the image. In some implementations, the rationale for a first entity label may refer to another entity in the image to explain the connection between the first entity label and the image.

For example, in response to generating rationales for one or more entities in an image, a training dataset which includes the image can be updated. The computing device may be configured to generate the training dataset (or an updated training dataset) which includes a plurality of images, where at least some of the images among the plurality of images are associated with at least one corrected entity label and at least some of the images include rationales which explain a relationship between one or more corresponding entity labels associated with the image and the image. In some implementations, the updated training dataset can be used to train a machine-learned model for the task of visual entity recognition utilizing the corrected entity labels and the generated rationales.

FIG. 2C illustrates a flow diagram of an example, non-limiting computer-implemented method 2300 which is directed to providing one or more question and answer pairs relating to one or more entity labels assigned to an image. At operation 2310 the method 2300 includes the computing device providing an input including the image, the rationale generated via the method of FIG. 2B, and at least one of the textual description of the image (the image caption), the candidate entity label, context information associated with the candidate entity label, corrected entity label, or context information associated with the corrected entity label. As described herein, the computing device may be embodied as computing device 100, server computing system 300, or combinations thereof.

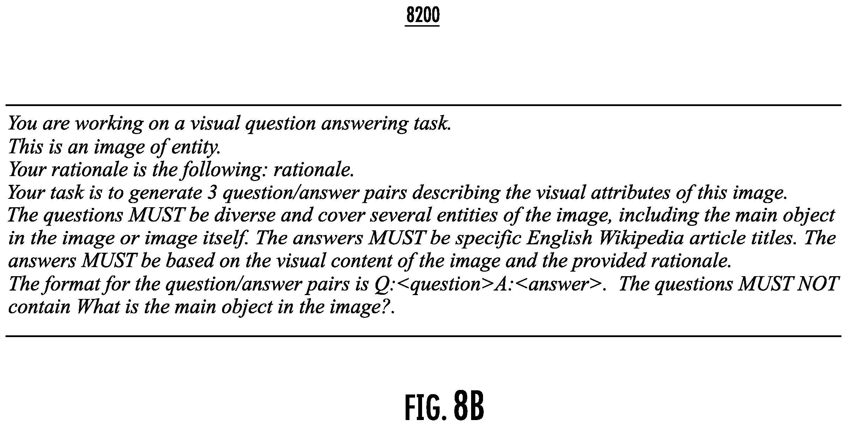

In some implementations, the computing device may be configured to provide a prompt to the entity recognition application 4120 (e.g., the one or more second machine-learned models 4126) to provide one or more question and answer pairs describing visual attributes of the image visually grounded rationale for the entity label assigned to the image. FIG. 8B illustrates an example prompt to the computing device for a question and answer pair generation task relating to entity label.

For example, if the candidate entity label is maintained (is verified as corresponding to the image), the input may include the image, entities which are included in the image, the rationale (e.g., as generated via the method 2200 of FIG. 2B), and the assigned entity label (e.g., the candidate entity label or the corrected entity label). In the example of FIG. 8B, the prompt further defines that the questions must not include a question concerning what the main object in the image is. In the example of FIG. 8B, the prompt further defines that the questions must refer to the main object (main entity) in the image. In the example of FIG. 8B, the prompt further defines that the answers must refer to external content (e.g., external contextual information 4140) associated with the main object (main entity) in the image (e.g., a Wikipedia article associated with the entity).

At operation 2320 the method 2300 includes the computing device implementing one or more machine-learned models to generate one or more question-answer pairs. For example, the one or more machine-learned models may correspond to the one or more second machine-learned models 4126. In some implementations, the one or more machine-learned models may be included in the entity recognition application 4120 and may be separate or different from the one or more second machine-learned models 4126. In some implementations, when the candidate entity label 4124 is updated with the corrected entity label based on a result of the verification operations described with respect to FIG. 2A, the one or more second machine-learned models 4126 may be configured to provide the question and answer pairs based on one or more of the corrected entity label, visual indications or attributes associated with the image, the rationale, external contextual information 4140 associated with the corrected entity label, and the textual description of the image (e.g., the image caption), and without reference to the candidate entity label 4124. In some implementations, when the candidate entity label 4124 is maintained based on a result of the verification operations described with respect to FIG. 2A, the one or more second machine-learned models 4126 may be configured to provide the question and answer pairs based on one or more of the candidate entity label, the visual indications or attributes associated with the image, the rationale, the textual description of the image (e.g., the image caption) and/or the external contextual information 4140 associated with the candidate entity label 4124. In some implementations, the question and answer pairs may be limited to a predetermined number (e.g., two, three, etc.). In the examples of FIGS. 3A and 3B, three question and answer pairs are provided. In FIG. 3A, each question refers to the entity of a building and the associated answers may be obtained from the external data source 3130 (e.g., relating to content different from the content associated with the candidate entity label). In FIG. 3B, each question refers to the entity of a fish and the associated answers may be obtained from the external data source 3230 (e.g., relating to content different from the content associated with the candidate entity label).

In some implementations, at operation 2320 the computing device (e.g., the one or more second machine-learned models 4126) may be configured to transform an input image-text query pair $x = (x_v, x_t)$ into a set of $N$ $d$-dimensional embeddings $\mathbf{X} \in \mathbb{R}^{N \times d}$ formed by concatenating the visual encoder output of $x_v$ and the text tokenizer output of $x_t$. The one or more second machine-learned models 4126 may include an auto-regressive text decoder $g(\cdot)$ to generate the target text $y$. The one or more second machine-learned models 4126 may include a decoder configured to predict each text token $y_k$ from the target text (total length $K$) given both the set of preceding token embeddings $\mathbf{Y}_{<k}$ and the input image-text embeddings $\mathbf{X}$. The one or more second machine-learned models 4126 may be trained based on the language modeling objective:

$$\mathcal{L} = \frac{1}{K} \sum_{i=1}^{K} \ell(y_k, g([\mathbf{X}; \mathbf{Y}_{<k}]))$$

where [; ] corresponds to the concatenation operation in the first dimension and $\ell$ is the softmax cross-entropy loss with label-smoothing. The loss over minibatches of examples may be averaged and the weights of the visual encoder and text decoder may be updated with backpropagation. The described language modeling objective can be implemented by the one or more second machine-learned models 4126 for the method of FIG. 2C, where the target text y can correspond to the possible entity name and the input text $x_t$ can correspond to the question. In some implementations, the input text $x_t$ can include a prefix specifying to the model that the task is distinct from entity or rationale generation.

At operation 2330 the method 2300 may include the computing device providing an output including the question and answer pairs. For example, the one or more second machine-learned models 4126 may be configured to output the question and answer pairs and the computing device may be configured to provide, for presentation to a user, the question and answer pairs (e.g., in a textual manner). As illustrated in FIG. 4, in some implementations, the output of the entity recognition application 4120 may include the corrected entity label as well as at least one of a rationale or one or more question and answer pairs (corrected entity label and rationale and question and answer pairs 4150). The output may be provided via the output device 170, for example. In the case that the candidate entity label is not updated or corrected, the output may include the candidate entity label as well as at least one of a rationale or one or more question and answer pairs.

In some implementations, the method 2300 may be applied to an image which includes a plurality of entities. For example, when the image includes a plurality of entities, the entity recognition application 4120 may be configured to provide question and answer pairs for each entity label determined for each of the entities among the plurality of entities in the image. In some implementations, the question and answer pairs for a first entity label may refer to another entity in the image to form a question and/or answer relating to the first entity label and the image.

For example, in response to generating question and answer pairs for one or more entities in an image, a training dataset which includes the image can be updated. The computing device may be configured to generate the training dataset (or an updated training dataset) which includes a plurality of images, where at least some of the images among the plurality of images are associated with at least one corrected entity label and at least some of the images include rationales which explain a relationship between one or more corresponding entity labels associated with the image and the image, and further include one or more question and answer pairs. In some implementations, the updated training dataset can be used to train a machine-learned model for the task of visual entity recognition utilizing the corrected entity labels and the generated rationales as well as the one or more question and answer pairs.

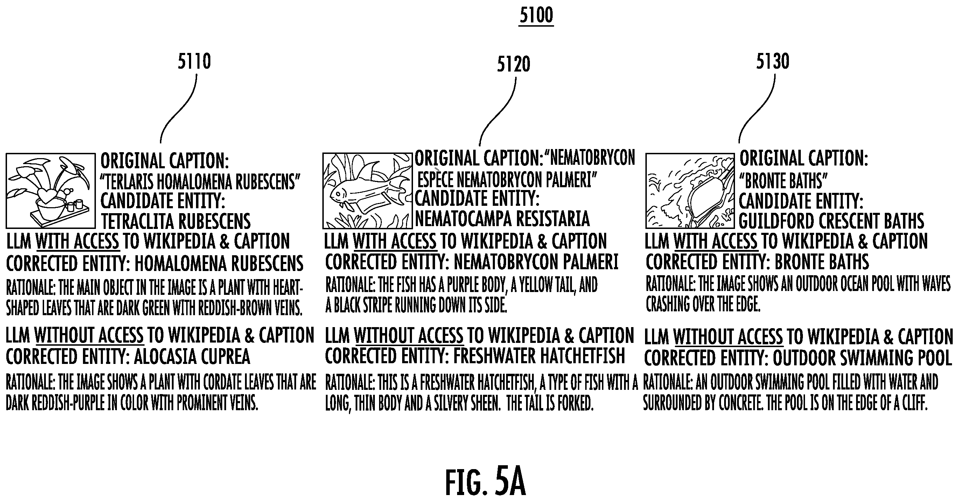

FIGS. 5A-5C are example entity recognition results obtained by implementing one or more machine-learned models, according to one or more example embodiments of the disclosure. The examples 5100 illustrated in FIG. 5A demonstrate incorrect candidate entities caused by incorrect matching between the original caption and entity labels from an external data source (e.g., Wikipedia entity labels). Referring to FIG. 5A, the first example 5110 indicates the candidate entity label of "Tetraclita rubescens" is corrected to "Homalomena rubescens" when the one or more second machine-learned models 4126 receive as inputs both the image caption and the external data source (e.g., Wikipedia), and is corrected to "Alocasia cuprea" when the one or more second machine-learned models 4126 do not receive as inputs both the image caption and the external data source (e.g., Wikipedia). The second example 5120 and third example 5130 are further examples which include the candidate entity labels and corrected entity labels output under different conditions. As indicated in the examples 5100, in some instances where the one or more second machine-learned models 4126 do not have access to the image caption or external data source (external metadata), the one or more second machine-learned models 4126 may make incorrect corrections by providing generic or hallucinated outputs (e.g., by identifying an image of the Bronte baths as an outdoor swimming pool in the third example 5130 or by recognizing incorrect plant or animal species in the first example 5110 and second example 5120, respectively). In contrast, the one or more second machine-learned models 4126 having access to the external data source can obtain information based on the image caption to generate the corrected entity label.

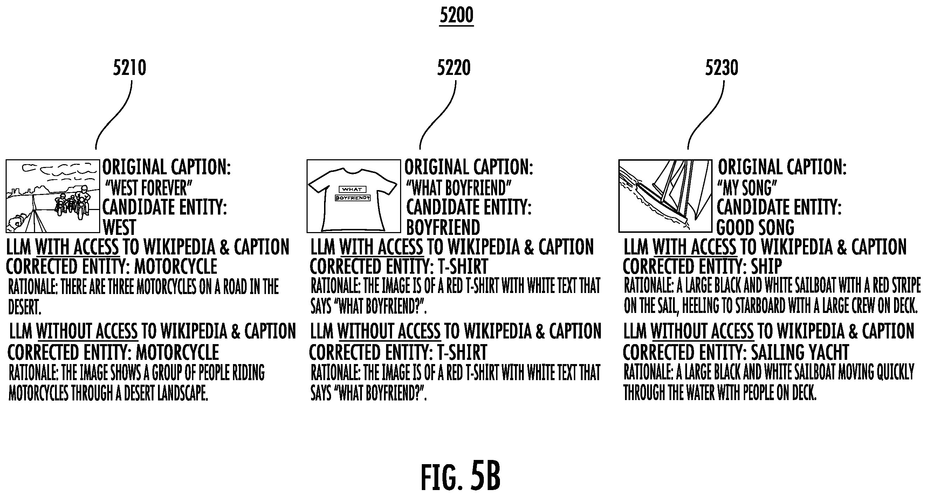

The examples 5200 illustrated in FIG. 5B demonstrate incorrect candidate entities caused by irrelevant original captions (e.g., captions having a weak relationship to the image). Referring to FIG. 5B, the first example 5210 indicates the candidate entity label of "West" and an image caption of "west forever." The candidate entity label is corrected to "Motorcycle" when the one or more second machine-learned models 4126 receive as inputs both the image caption and the external data source (e.g., Wikipedia), and is corrected to "Motorcycle" when the one or more second machine-learned models 4126 do not receive as inputs both the image caption and the external data source (e.g., Wikipedia). The second example 5220 and third example 5230 are further similar examples which include the candidate entity labels and corrected entity labels output under different conditions. As indicated in the examples 5200, where the original image caption is not reflective of the visual entity of the image, the output candidate entity label is not accurate. Implementation of the one or more second machine-learned models 4126 can obtain a more accurate identification of the entity with access to the external data source and the image caption.

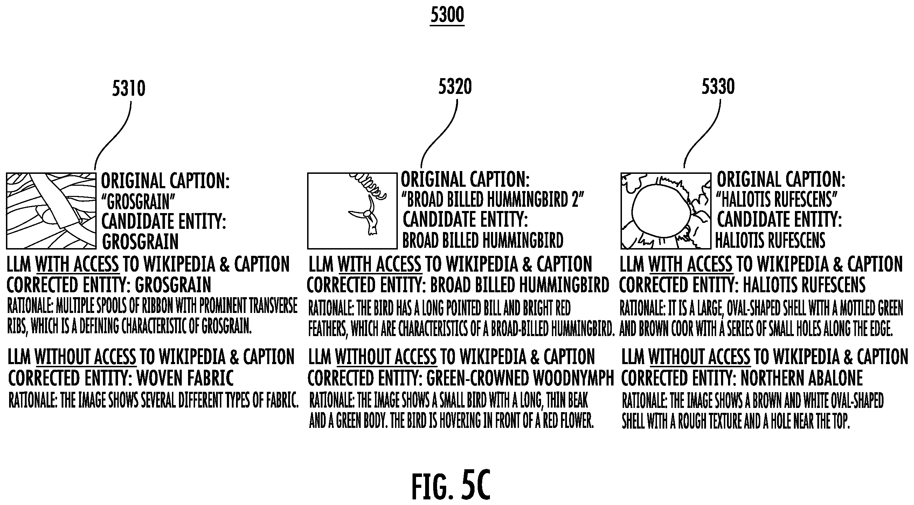

The examples 5300 illustrated in FIG. 5C demonstrate incorrect corrected entity labels generated when the one or more second machine-learned models do not have access to the external data source or image caption. Referring to FIG. 5C, the first example 5310 indicates the candidate entity label of "Grosgrain" and an image caption of "grosgrain." The candidate entity label is corrected to "Grosgrain" when the one or more second machine-learned models 4126 receive as inputs both the image caption and the external data source (e.g., Wikipedia), and is corrected to "Woven fabric" when the one or more second machine-learned models 4126 do not receive as inputs both the image caption and the external data source (e.g., Wikipedia). The second example 5320 and third example 5330 are further similar examples which include the candidate entity labels and corrected entity labels output under different conditions. As indicated in the examples 5300, in some instances where the one or more second machine-learned models 4126 do not have access to the image caption or external data source (external metadata), the one or more second machine-learned models 4126 may make incorrect corrections due to lack of knowledge about the entities involved. In contrast, the one or more second machine-learned models 4126 having access to the external data source can obtain information based on the image caption to generate the corrected entity label (e.g., by obtaining information about the visual attributes which are characteristic of the candidate entity label from the external data source and looking for these visual attributes in the image). For example, in the first example 5310, the one or more second machine-learned models 4126 can validate the candidate entity label according to information included in the Wikipedia content associated with the grosgrain entity page ("Multiple spools of ribbon with prominent transverse ribs, which is a defining characteristic of grosgrain") while the one or more second machine-learned models 4126 lacking access to Wikipedia seems to lack specific knowledge about grosgrain.

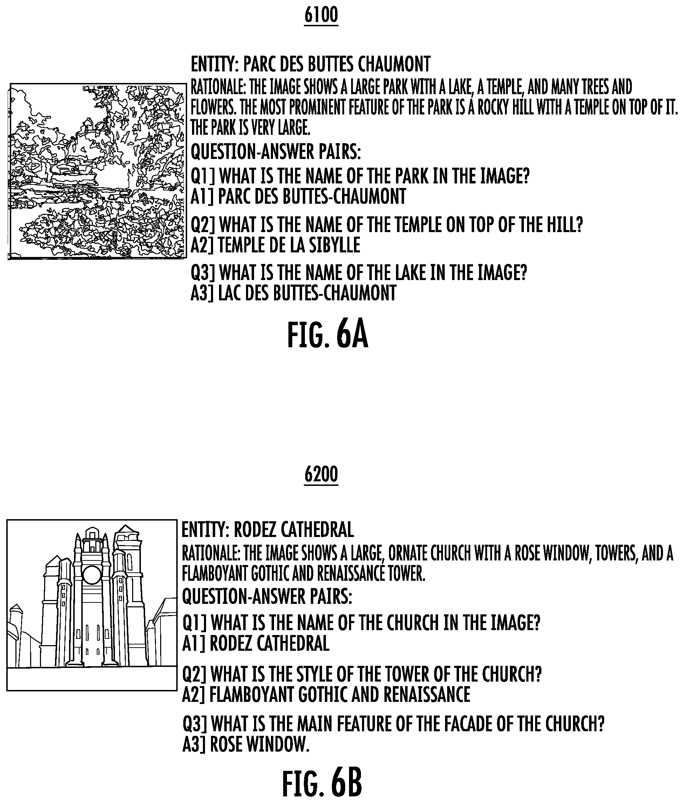

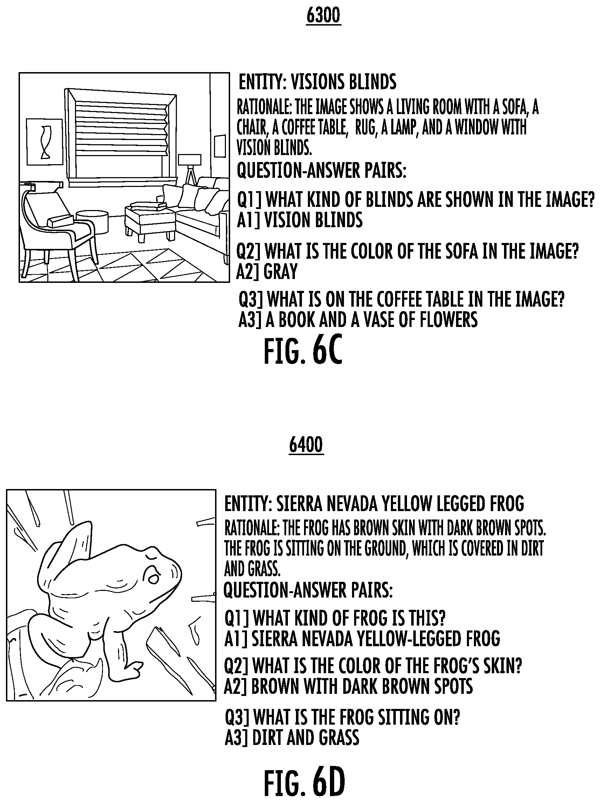

FIGS. 6A-6D illustrate example entity recognition results obtained by implementing one or more machine-learned models, according to one or more example embodiments of the disclosure. For example, FIG. 6A shows an output result of the entity recognition application 4120 (e.g., of the one or more second machine-learned models 4126) which outputs the corrected entity label ("Parc des Butles Chaumont"), a rationale, and question-answer pairs. The output result can be obtained by execution of the methods 2100, 2200, and 2300 described herein, for example. For example, FIG. 6B shows an output result of the entity recognition application 4120 (e.g., of the one or more second machine-learned models 4126) which outputs the corrected entity label ("Rodez Cathedral"), a rationale, and question-answer pairs. The output result can be obtained by execution of the methods 2100, 2200, and 2300 described herein, for example. For example, FIG. 6C shows an output result of the entity recognition application 4120 (e.g., of the one or more second machine-learned models 4126) which outputs the corrected entity label ("Vision blinds"), a rationale, and question-answer pairs. The output result can be obtained by execution of the methods 2100, 2200, and 2300 described herein, for example. For example, FIG. 6D shows an output result of the entity recognition application 4120 (e.g., of the one or more second machine-learned models 4126) which outputs the corrected entity label ("Sierra Nevada yellow legged frog"), a rationale, and question-answer pairs. The output result can be obtained by execution of the methods 2100, 2200, and 2300 described herein, for example.

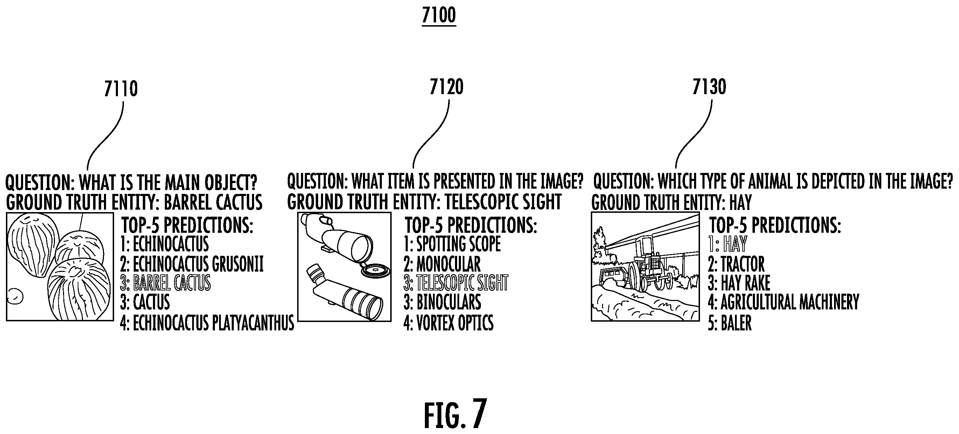

FIG. 7 illustrates an example entity recognition results obtained by implementing one or more machine-learned models, according to one or more example embodiments of the disclosure. The examples 7100 of FIG. 7 are qualitative examples in which the predicted corrected entity label may not correspond to the ground truth entity or are not in accordance with the input request. For example, in the first example 7110, the highest-rated prediction of "Echinocactus" is a more specific and accurate description of the cactus in the image, and is more accurate than the ground truth entity of a "Barrel cactus." Similarly, in the second example 7120, the highest-rated prediction of "Spotting scope" is a more specific and accurate description of the object in the image, and is more accurate than the ground truth entity of a "Telescopic sight." In the third example 7130, the input question "Which type of animal is depicted in the image?" is not relevant to the input image, as there is no animal present. In some implementations, in response to the entity recognition application 4120 (e.g., the one or more second machine-learned models 4126) determining the input question is irrelevant to the image, the entity recognition application 4120 (e.g., the one or more second machine-learned models 4126) may be configured to disregard the question and output the entity (or entities) present in the image. In some implementations, in response to the entity recognition application 4120 (e.g., the one or more second machine-learned models 4126) determining the input question is irrelevant to the image, the entity recognition application 4120 (e.g., the one or more second machine-learned models 4126) may be configured to output a response providing feedback to the user (e.g., indicating the question is irrelevant to the image, requesting confirmation from the user regarding the query, etc.).

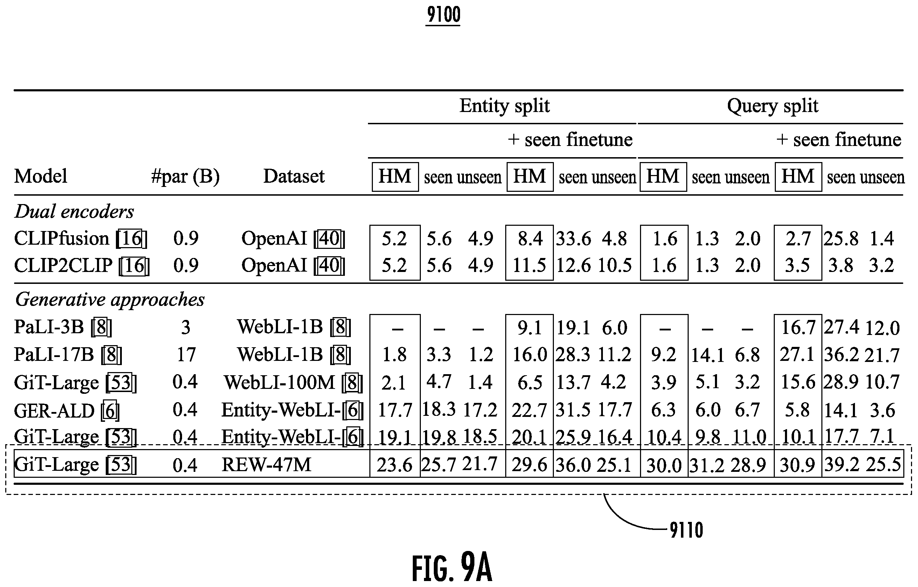

FIGS. 9A-9E illustrate example experimental results, according to one or more example embodiments of the disclosure. FIG. 9A includes a table 9100 which shows experimental results obtained via the one or more second machine-learned models 4126. The table 9100 includes the harmonic mean (HM) of the seen and unseen sets (top-1 accuracy) before and after finetuning on OVEN training seen categories ("+ seen finetune"). The one or more second machine-learned models 4126 (e.g., the "LLM-Refined Entity-WebLI" (REW) models) are trained on a REW dataset instead of captioning data and results in state-of-the-art performance in the OVEN benchmark, both before and after further OVEN finetuning on the "seen" classes. Notably, as show in the table 9100, the results 9110 of the one or more second machine-learned models 4126 outperform the captioning PaLI-17B model by large margins: +13.6 top1 HM test accuracy on the entity split and +3.8 on the query split, while using 42 times less parameters.

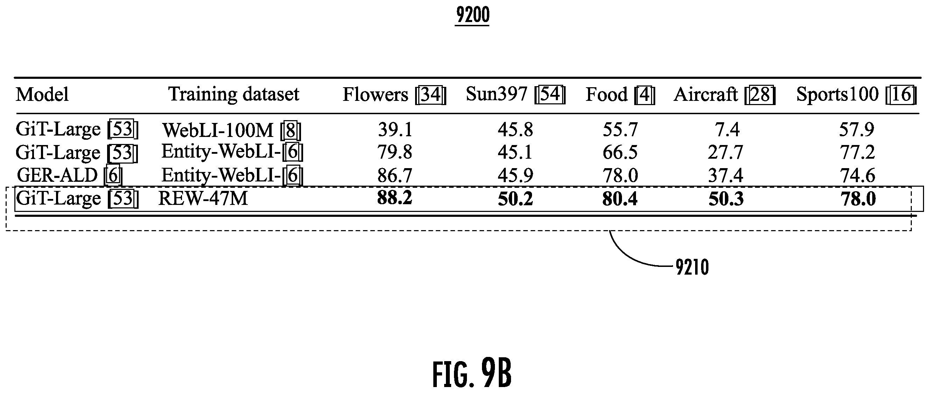

FIG. 9B includes a table 9200 which shows further experimental results obtained via the one or more second machine-learned models 4126. The table 9200 includes the zero-shot performance obtained via the one or more second machine-learned models 4126 where the training dataset (e.g., the REW-47M training dataset) 9210 transfers effectively to several finegrained datasets. The one or more second machine-learned models 4126 trained on the REW-47M training dataset demonstrates superior transferability compared to the same model trained on captions or Entity-WebLI. These result demonstrate the higher quality of the REW-47M training dataset.

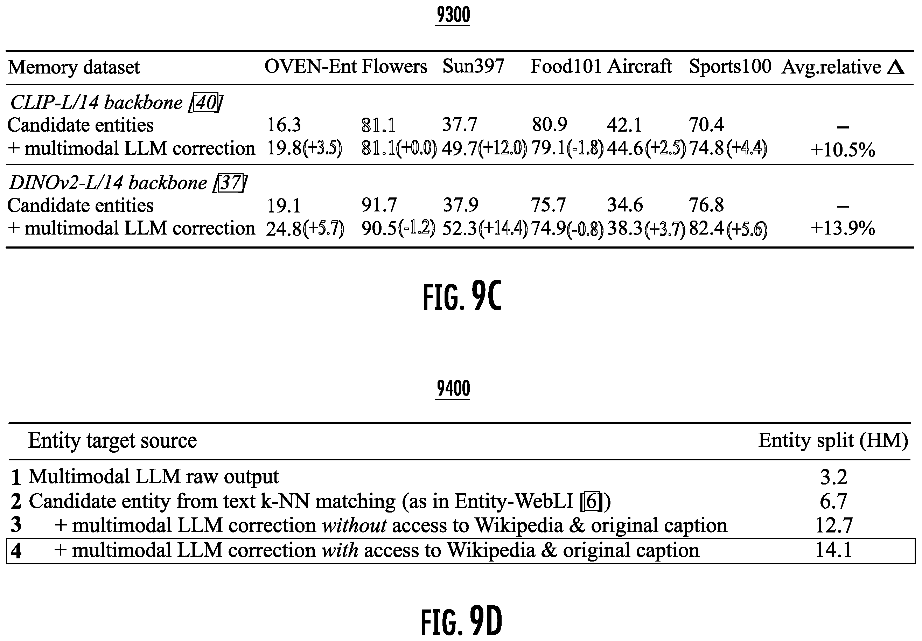

FIG. 9C includes a table 9300 which shows further experimental results obtained via the one or more second machine-learned models 4126 which perform entity label correction. The table 9300 indicates the results of visual matching with two visual backbones (CLIP-L/14 backbone and DINOv2-L/14 backbone) and across six different fine-grained visual entity recognition datasets for which the mapping from class label to Wikipedia entity is obtained. As shown in FIG. 9C, the table 9300 indicates the corrected entities (through multimodal LLM correction via the one or more second machine-learned models 4126) lead to better visual matching performance across the board which suggests that the corrected entity labels better annotate the image and describe more accurately the content of the images. The corrected entity labels result in an improved performance by an average of +10.5% relative improvement when considering the CLIP-L/14 backbone and by an average of +13.9% relative improvement when considering the DINOv2-L/14 backbone.

FIG. 9D includes a table 9400 which shows further experimental results obtained via the one or more second machine-learned models 4126 which perform entity label correction. The table 9400 includes the harmonic mean (HM) top-1 accuracy on OVEN validation entity split.

In table 9400, the experimental results pertain to models trained with a different source of annotations for the target entities. In row 1 of table 9400, it can be seen that directly using the multimodal LLM raw output as target (which is akin to a distillation scenario) results in suboptimal performance (e.g., the model has a tendency to produce hallucinations, overly generic answers, or outputs in an incorrect format (long descriptive captions instead of entities)). When the one or more second machine-learned models 4126 are implemented to perform a correction operation with respect to the candidate entity label, (e.g., from text k-NN matching), the performance of the model is improved by 6 points (row 3 versus row 2 in table 9400). Finally, providing additional contextual information to the one or more second machine-learned models 4126 results in a substantial boost of 1.4 points (row 4 versus row 3 in table 9400). Based on the experimental results associated with table 9400, the one or more second machine-learned models 4126 refined (corrected or updated) the candidate entity labels 76% of the time, and validated (verified) the candidate entity labels 24% of the time.

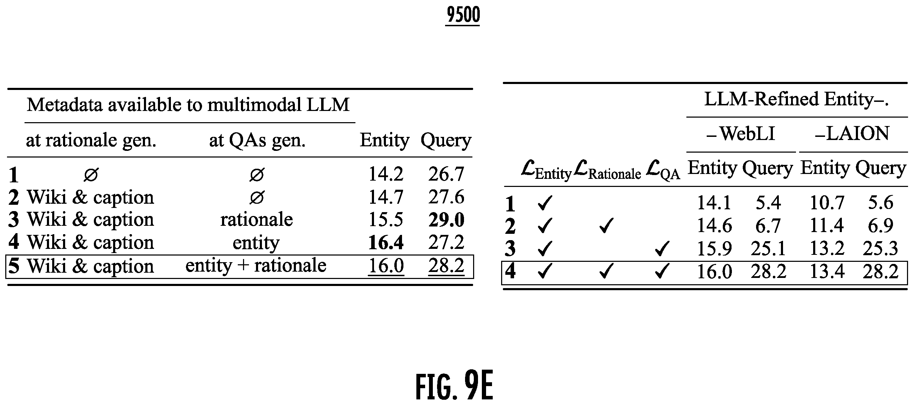

FIG. 9E includes a table 9500 which shows further experimental results obtained via the one or more second machine-learned models 4126 in association with the generated rationales and question and answer pairs. The table 9500 includes comparative results on HM top-1 accuracy on OVEN validation splits directly after REW training, where the one or more second machine-learned models 4126 have or do not have access to certain information (e.g., external data such as Wikipedia, image caption information, rationale information, entity information).

As illustrated in FIG. 9E, the model without access to any external information (e.g., metadata) has suboptimal performance as indicated in row 1 on the left side of the table 9500. Incorporating external input, such as Wikipedia content and original image captions, during the rationale generation process enhances the quality and pertinence of the rationale. Consequently, this leads to an improvement in performance (row 2 on the left side of the table 9500). The performance boost is further higher if the one or more second machine-learned models 4126 can leverage the improved rationale when generating the question and answer pairs (row 3 on the left side of the table 9500). In row 4 on the left side of the table 9500, when the one or more second machine-learned models 4126 have access to the entity name during the question and answer pair generation operation, entity split performance is improved, however query split performance suffers, as seen in the comparison between row 2 and row 4 on the left side of the table 9500. However, having access to the rationale increases the variety of the generated question and answer pairs. Therefore, when the one or more second machine-learned models 4126 have access to both the entity and rationale (row 5 on the left side of the table 9500), an effective balance between strong performance in entity and query splits can be obtained.

The right side of table 9500 illustrates the results of multi-task training with generated rationales and question and answer pairs. That is, the right side of table 9500 illustrates that both the rationale and question and answer pairs objectives contribute to the improved performance of the one or more second machine-learned models 4126. Table 9500 illustrates results using two different base image-caption datasets: the WebLI dataset and the LAION dataset. For example, the rationales help clarify the connection between entities and visual attributes, while question and answer pair training encourages the one or more second machine-learned models 4126 to focus on multiple entities within the image. Moreover, both objectives enhance the one or more second machine-learned models 4126 language understanding (e.g., for the query split). The results shown on the right side of table 9500 are consistent across the different image-caption datasets and thus demonstrates that the obtained results are robust and not specific to a particular dataset.

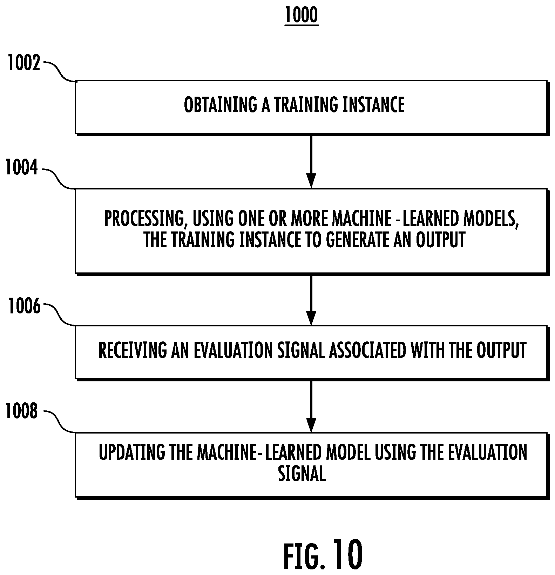

FIG. 10 depicts a flowchart of a method 1000 for training one or more machine-learned models according to aspects of the disclosure. For instance, an example machine-learned model can include one or more of a LLM, a generative machine-learned model, etc. For example, the one or more machine-learned models may be configured to implement the operations of FIGS. 2A-2C, of the entity recognition applications as described herein.

FIG. 10 is a flow chart diagram illustrating an example method for training a machine-learned model according to example implementations of aspects of the disclosure. One or more portion(s) of example method 1000 can be implemented by a computing system that includes one or more computing devices such as, for example, computing systems described with reference to the other drawings. Each respective portion of example method 1000 can be performed by any (or any combination) of one or more computing devices. Moreover, one or more portion(s) of example method 1000 can be implemented on the hardware components of the device(s) described herein, for example, to train one or more systems or models. FIG. 10 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the disclosure. FIG. 10 is described with reference to elements/terms described with respect to other systems and drawings for exemplary illustrated purposes and is not meant to be limiting. One or more portions of example method 1000 can be performed additionally, or alternatively, by other systems.

At 1002, example method 1000 can include obtaining a training instance. A set of training data can include a plurality of training instances divided between multiple datasets (e.g., a training dataset, a validation dataset, or testing dataset). A training instance can be labeled or unlabeled. Although referred to in example method 1000 as a "training" instance, it is to be understood that runtime inferences can form training instances when a model is trained using an evaluation of the model's performance on that runtime instance (e.g., online training/learning). Example data types for the training instance and various tasks associated therewith are described throughout the disclosure.

At 1004, example method 1000 can include processing, using one or more machine-learned models, the training instance to generate an output. The output can be directly obtained from the one or more machine-learned models or can be a downstream result of a chain of processing operations that includes an output of the one or more machine-learned models.

At 1006, example method 1000 can include receiving an evaluation signal associated with the output. The evaluation signal can be obtained using a loss function. Various determinations of loss can be used, such as mean squared error, likelihood loss, cross entropy loss, hinge loss, contrastive loss, or various other loss functions. The evaluation signal can be computed using known ground-truth labels (e.g., supervised learning), predicted or estimated labels (e.g., semi- or self-supervised learning), or without labels (e.g., unsupervised learning). The evaluation signal can be a reward (e.g., for reinforcement learning). The reward can be computed using a machine-learned reward model configured to generate rewards based on output(s) received. The reward can be computed using feedback data describing human feedback on the output(s).

At 1008, example method 1000 can include updating the machine-learned model using the evaluation signal. For example, values for parameters of the machine-learned model(s) can be learned, in some embodiments, using various training or learning techniques, such as, for example, backwards propagation. For example, the evaluation signal can be backpropagated from the output (or another source of the evaluation signal) through the machine-learned model(s) to update one or more parameters of the model(s) (e.g., based on a gradient of the evaluation signal with respect to the parameter value(s)). For example, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. Example method 1000 can include implementing a number of generalization techniques (e.g., weight decays, dropouts, etc.) to improve the generalization capability of the models being trained.

In some implementations, example method 1000 can be implemented for training a machine-learned model from an initialized state to a fully trained state (e.g., when the model exhibits a desired performance profile, such as based on accuracy, precision, recall, etc.).

In some implementations, example method 1000 can be implemented for particular stages of a training procedure. For instance, in some implementations, example method 1000 can be implemented for pre-training a machine-learned model. Pre-training can include, for instance, large-scale training over potentially noisy data to achieve a broad base of performance levels across a variety of tasks/data types. In some implementations, example method 1000 can be implemented for fine-tuning a machine-learned model. Fine-tuning can include, for instance, smaller-scale training on higher-quality (e.g., labeled, curated, etc.) data. Fine-tuning can affect all or a portion of the parameters of a machine-learned model. For example, various portions of the machine-learned model can be "frozen" for certain training stages. For example, parameters associated with an embedding space can be "frozen" during fine-tuning (e.g., to retain information learned from a broader domain(s) than present in the fine-tuning dataset(s)). An example fine-tuning approach includes reinforcement learning. Reinforcement learning can be based on user feedback on model performance during use.

Example Machine-Learned Models

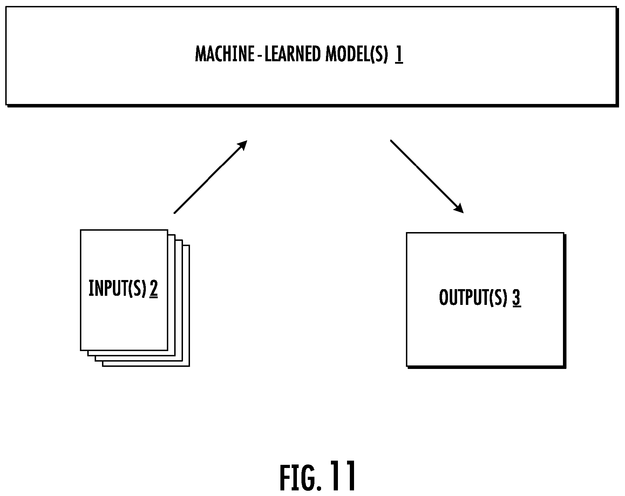

FIG. 11 is a block diagram of an example processing flow for using machine-learned model(s) 1 to process input(s) 2 to generate output(s) 3.

Machine-learned model(s) 1 can be or include one or multiple machine-learned models or model components. Example machine-learned models can include neural networks (e.g., deep neural networks). Example machine-learned models can include non-linear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Example neural networks can include feed-forward neural networks, recurrent neural networks (RNNs), including long short-term memory (LSTM) based recurrent neural networks, convolutional neural networks (CNNs), diffusion models, generative-adversarial networks, or other forms of neural networks. Example neural networks can be deep neural networks. Some example machine-learned models can leverage an attention mechanism such as self-attention. For example, some example machine-learned models can include multi-headed self-attention models.

Machine-learned model(s) 1 can include a single or multiple instances of the same model configured to operate on data from input(s) 2. Machine-learned model(s) 1 can include an ensemble of different models that can cooperatively interact to process data from input(s) 2. For example, machine-learned model(s) 1 can employ a mixture-of-experts structure. *See, e.g.,* Zhou et al., Mixture-of-Experts with Expert Choice Routing, ARXIv:2202.09368v2 (Oct. 14, 2022).

Input(s) 2 can generally include or otherwise represent various types of data. Input(s) 2 can include one type or many different types of data. Output(s) 3 can be data of the same type(s) or of different types of data as compared to input(s) 2. Output(s) 3 can include one type or many different types of data.

Example data types for input(s) 2 or output(s) 3 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 2 or outputs 3, example combinations of data types include image data and audio data, image data and natural language data, natural language data and software code data, image data and biometric data, sensor data and medical data, etc. It is to be understood that any combination of data types in an input 2 or an output 3 can be present.

An example input 2 can include one or multiple data types, such as the example data types noted above. An example output 3 can include one or multiple data types, such as the example data types noted above. The data type(s) of input 2 can be the same as or different from the data type(s) of output 3. It is to be understood that the example data types noted above are provided for illustrative purposes only. Data types contemplated within the scope of the disclosure are not limited to those examples noted above.

Example Machine-Learned Sequence Processing Models

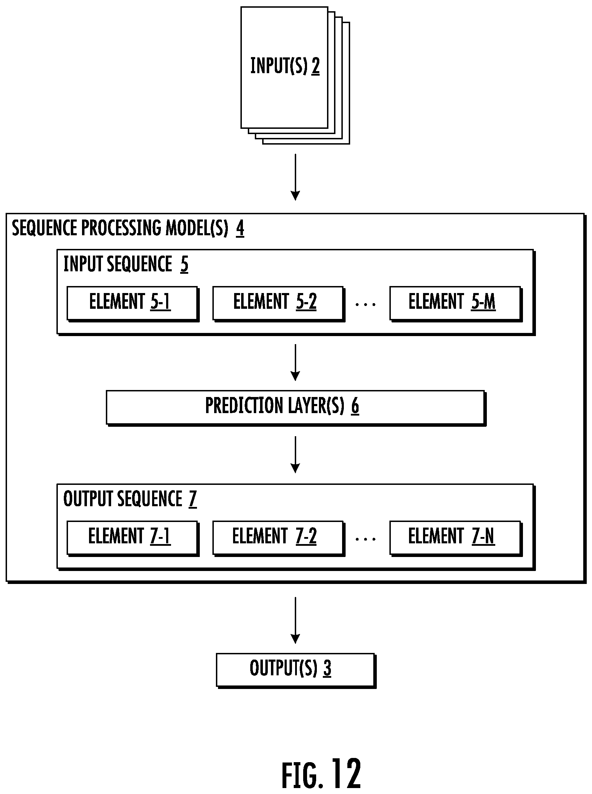

FIG. 12 is a block diagram of an example implementation of an example machine-learned model configured to process sequences of information. For instance, an example implementation of machine-learned model(s) 1 can include machine-learned sequence processing model(s) 4. An example system can pass input(s) 2 to sequence processing model(s) 4. Sequence processing model(s) 4 can include one or more machine-learned components. Sequence processing model(s) 4 can process the data from input(s) 2 to obtain an input sequence 5. Input sequence 5 can include one or more input elements 5-1, 5-2, ... , 5-*M,* etc. obtained from input(s) 2. Sequence processing model 4 can process input sequence 5 using prediction layer(s) 6 to generate an output sequence 7. Output sequence 7 can include one or more output elements 7-1, 7-2, . . . , 7-*N,* etc. generated based on input sequence 5. The system can generate output(s) 3 based on output sequence 7.

Sequence processing model(s) 4 can include one or multiple machine-learned model components configured to ingest, generate, or otherwise reason over sequences of information. For example, some example sequence processing models in the text domain are referred to as "Large Language Models," or LLMs.

*See, e.g.,* PaLM 2 Technical Report, GOOGLE, https://ai.google/static/documents/palm2techreport.pdf(n.d.). Other example sequence processing models can operate in other domains, such as image domains, *see, e.g.,* Dosovitskiy et al., An Image is Worth 16x16 Words: Transformers for Image Recognition at Scale, ARXIv:2010.11929v2 (Jun. 3, 2021), audio domains, *see, e.g.,* Agostinelli et al., MusicLM: Generating Music From Text, ARXIv:2301.11325v1 (Jan. 26, 2023), biochemical domains, *see, e.g.*, Jumper et al., Highly accurate protein structure prediction with AlphaFold, 596 Nature 583 (Aug. 26, 2021), by way of example. Sequence processing model(s) 4 can process one or multiple types of data simultaneously. Sequence processing model(s) 4 can include relatively large models (e.g., more parameters, computationally expensive, etc.), relatively small models (e.g., fewer parameters, computationally lightweight, etc.), or both.

In general, sequence processing model(s) 4 can obtain input sequence 5 using data from input(s) 2. For instance, input sequence 5 can include a representation of data from input(s) 2 in a format understood by sequence processing model(s) 4. One or more machine-learned components of sequence processing model(s) 4 can ingest the data from input(s) 2, parse the data into pieces compatible with the processing architectures of sequence processing model(s) 4 (e.g., via "tokenization"), and project the pieces into an input space associated with prediction layer(s) 6 (e.g., via "embedding").

Sequence processing model(s) 4 can ingest the data from input(s) 2 and parse the data into a sequence of elements to obtain input sequence 5. For example, a portion of input data from input(s) 2 can be broken down into pieces that collectively represent the content of the portion of the input data. The pieces can provide the elements of the sequence.

Elements 5-1, 5-2, ... , 5-*M* can represent, in some cases, building blocks for capturing or expressing meaningful information in a particular data domain. For instance, the elements can describe "atomic units" across one or more domains. For example, for textual input source(s), the elements can correspond to groups of one or more words or sub-word components, such as sets of one or more characters.

For example, elements 5-1, 5-2, ... , 5-*M* can represent tokens obtained using a tokenizer. For instance, a tokenizer can process a given portion of an input source and output a series of tokens (e.g., corresponding to input elements 5-1, 5-2, . . . , 5-*M*) that represent the portion of the input source. Various approaches to tokenization can be used. For instance, textual input source(s) can be tokenized using a byte-pair encoding (BPE) technique. *See, e.g.,* Kudo et al., SentencePiece: A simple and language independent subword tokenizer and detokenizerfor Neural Text Processing, PROCEEDINGS OF THE 2018 CONFERENCE ON EMPIRICAL METHODS IN NATURAL LANGUAGE PROCESSING (System Demonstrations), pages 66-71 (October 31-November 4, 2018), https://aclanthology.org/D18-2012.pdf. Image-based input source(s) can be tokenized by extracting and serializing patches from an image.

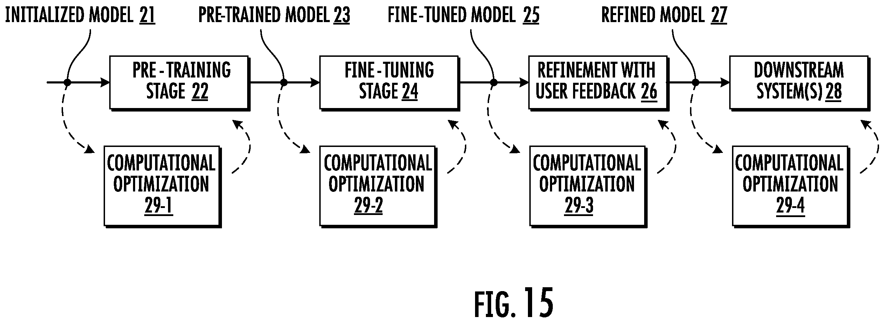

In general, arbitrary data types can be serialized and processed into input sequence 5. It is to be understood that element(s) 5-1, 5-2, ... , 5-*M* depicted in FIG. 15 can be the tokens or can be the embedded representations thereof.

Prediction layer(s) 6 can predict one or more output elements 7-1, 7-2, ... , 7-*N* based on the input elements. Prediction layer(s) 6 can include one or more machine-learned model architectures, such as one or more layers of learned parameters that manipulate and transform the input(s) to extract higher-order meaning from, and relationships between, input element(s) 5-1, 5-2, . . . , 5-*M.* In this manner, for instance, example prediction layer(s) 6 can predict new output element(s) in view of the context provided by input sequence 5.

Prediction layer(s) 6 can evaluate associations between portions of input sequence 5 and a particular output element. These associations can inform a prediction of the likelihood that a particular output follows the input context. For example, consider the textual snippet, "The carpenter's toolbox was small and heavy. It was full of __." Example prediction layer(s) 6 can identify that "It" refers back to "toolbox" by determining a relationship between the respective embeddings. Example prediction layer(s) 6 can also link "It" to the attributes of the toolbox, such as "small" and "heavy." Based on these associations, prediction layer(s) 6 can, for instance, assign a higher probability to the word "nails" than to the word "sawdust."

A transformer is an example architecture that can be used in prediction layer(s) 4. *See, e.g.,* Vaswani et al., Attention Is All You Need, ARXIV:1706.03762v7 (Aug. 2, 2023). A transformer is an example of a machine-learned model architecture that uses an attention mechanism to compute associations between items within a context window. The context window can include a sequence that contains input sequence 5 and potentially one or more output element(s) 7-1, 7-2, ... , 7-*N*. A transformer block can include one or more attention layer(s) and one or more post-attention layer(s) (e.g., feedforward layer(s), such as a multi-layer perceptron).

Prediction layer(s) 6 can include other machine-learned model architectures in addition to or in lieu of transformer-based architectures. For example, recurrent neural networks (RNNs) and long short-term memory (LSTM) models can also be used, as well as convolutional neural networks (CNNs). In general, prediction layer(s) 6 can leverage various kinds of artificial neural networks that can understand or generate sequences of information.

Output sequence 7 can include or otherwise represent the same or different data types as input sequence 5. For instance, input sequence 5 can represent textual data, and output sequence 7 can represent textual data. Input sequence 5 can represent image, audio, or audiovisual data, and output sequence 7 can represent textual data (e.g., describing the image, audio, or audiovisual data). It is to be understood that prediction layer(s) 6, and any other interstitial model components of sequence processing model(s) 4, can be configured to receive a variety of data types in input sequence(s) 5 and output a variety of data types in output sequence(s) 7.

Output sequence 7 can have various relationships to input sequence 5. Output sequence 7 can be a continuation of input sequence 5. Output sequence 7 can be complementary to input sequence 5. Output sequence 7 can translate, transform, augment, or otherwise modify input sequence 5. Output sequence 7 can answer, evaluate, confirm, or otherwise respond to input sequence 5. Output sequence 7 can implement (or describe instructions for implementing) an instruction provided via input sequence 5.

Output sequence 7 can be generated autoregressively. For instance, for some applications, an output of one or more prediction layer(s) 6 can be passed through one or more output layers (e.g., softmax layer) to obtain a probability distribution over an output vocabulary (e.g., a textual or symbolic vocabulary) conditioned on a set of input elements in a context window. In this manner, for instance, output sequence 7 can be autoregressively generated by sampling a likely next output element, adding that element to the context window, and regenerating the probability distribution based on the updated context window, and sampling a likely next output element, and so forth.

Output sequence 7 can also be generated non-autoregressively. For instance, multiple output elements of output sequence 7 can be predicted together without explicit sequential conditioning on each other. *See, e.g.,* Saharia et al., Non-Autoregressive Machine Translation with Latent Alignments, ARXIv:2004.07437v3 (Nov. 16, 2020).

Output sequence 7 can include one or multiple portions or elements. In an example content generation configuration, output sequence 7 can include multiple elements corresponding to multiple portions of a generated output sequence (e.g., a textual sentence, values of a discretized waveform, computer code, etc.). In an example classification configuration, output sequence 7 can include a single element associated with a classification output. For instance, an output "vocabulary" can include a set of classes into which an input sequence is to be classified. For instance, a vision transformer block can pass latent state information to a multilayer perceptron that outputs a likely class value associated with an input image.

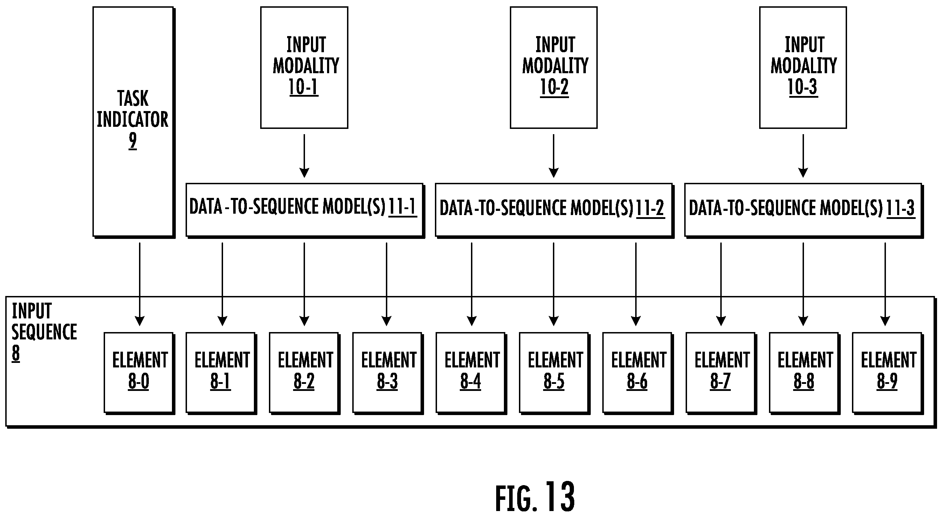

FIG. 13 is a block diagram of an example technique for populating an example input sequence 8. Input sequence 8 can include various functional elements that form part of the model infrastructure, such as an element 8-0 obtained from a task indicator 9 that signals to any model(s) that process input sequence 8 that a particular task is being performed (e.g., to help adapt a performance of the model(s) to that particular task). Input sequence 8 can include various data elements from different data modalities. For instance, an input modality 10-1 can include one modality of data. A data-to-sequence model 11-1 can process data from input modality 10-1 to project the data into a format compatible with input sequence 8 (e.g., one or more vectors dimensioned according to the dimensions of input sequence 8) to obtain elements 8-1, 8-2, 8-3. Another input modality 10-2 can include a different modality of data. A data-to-sequence model 11-2 can project data from input modality 10-2 into a format compatible with input sequence 8 to obtain elements 8-4, 8-5, 8-6. Another input modality 10-3 can include yet another different modality of data. A data-to-sequence model 11-3 can project data from input modality 10-3 into a format compatible with input sequence 8 to obtain elements 8-7, 8-8, 8-9.

Input sequence 8 can be the same as or different from input sequence 5. Input sequence 8 can be a multimodal input sequence that contains elements that represent data from different modalities using a common dimensional representation. For instance, an embedding space can have P dimensions. Input sequence 8 can be configured to contain a plurality of elements that have P dimensions. In this manner, for instance, example implementations can facilitate information extraction and reasoning across diverse data modalities by projecting data into elements in the same embedding space for comparison, combination, or other computations therebetween.

For example, elements 8-0, ... , 8-9 can indicate particular locations within a multidimensional embedding space. Some elements can map to a set of discrete locations in the embedding space. For instance, elements that correspond to discrete members of a predetermined vocabulary of tokens can map to discrete locations in the embedding space that are associated with those tokens. Other elements can be continuously distributed across the embedding space. For instance, some data types can be broken down into continuously defined portions (e.g., image patches) that can be described using continuously distributed locations within the embedding space.

In some implementations, the expressive power of the embedding space may not be limited to meanings associated with any particular set of tokens or other building blocks. For example, a continuous embedding space can encode a spectrum of high-order information. An individual piece of information (e.g., a token) can map to a particular point in that space: for instance, a token for the word "dog" can be projected to an embedded value that points to a particular location in the embedding space associated with canine-related information. Similarly, an image patch of an image of a dog on grass can also be projected into the embedding space. In some implementations, the projection of the image of the dog can be similar to the projection of the word "dog" while also having similarity to a projection of the word "grass," while potentially being different from both. In some implementations, the projection of the image patch may not exactly align with any single projection of a single word. In some implementations, the projection of the image patch can align with a combination of the projections of the words "dog" and "grass." In this manner, for instance, a high-order embedding space can encode information that can be independent of data modalities in which the information is expressed.

Task indicator 9 can include a model or model component configured to identify a task being performed and inject, into input sequence 8, an input value represented by element 8-0 that signals which task is being performed. For instance, the input value can be provided as a data type associated with an input modality and projected along with that input modality (e.g., the input value can be a textual task label that is embedded along with other textual data in the input; the input value can be a pixel-based representation of a task that is embedded along with other image data in the input; etc.). The input value can be provided as a data type that differs from or is at least independent from other input(s). For instance, the input value represented by element 8-0 can be a learned within a continuous embedding space.

Input modalities 10-1, 10-2, and 10-3 can be associated with various different data types (e.g., as described above with respect to input(s) 2 and output(s) 3).

Data-to-sequence models 11-1, 11-2, and 11-3 can be the same or different from each other. Data-to-sequence models 11-1, 11-2, and 11-3 can be adapted to each respective input modality 10-1, 10-2, and 10-3. For example, a textual data-to-sequence model can subdivide a portion of input text and project the subdivisions into element(s) in input sequence 8 (e.g., elements 8-1, 8-2, 8-3, etc.). An image data-to-sequence model can subdivide an input image and project the subdivisions into element(s) in input sequence 8 (e.g., elements 8-4, 8-5, 8-6, etc.). An arbitrary datatype data-to-sequence model can subdivide an input of that arbitrary datatype and project the subdivisions into element(s) in input sequence 8 (e.g., elements 8-7, 8-8, 8-9, etc.).

Data-to-sequence models 11-1, 11-2, and 11-3 can form part of machine-learned sequence processing model(s) 4. Data-to-sequence models 11-1, 11-2, and 11-3 can be jointly trained with or trained independently from machine-learned sequence processing model(s) 4. Data-to-sequence models 11-1, 11-2, and 11-3 can be trained end-to-end with machine-learned sequence processing model(s) 4.

Example Machine-Learned Model Development Platform

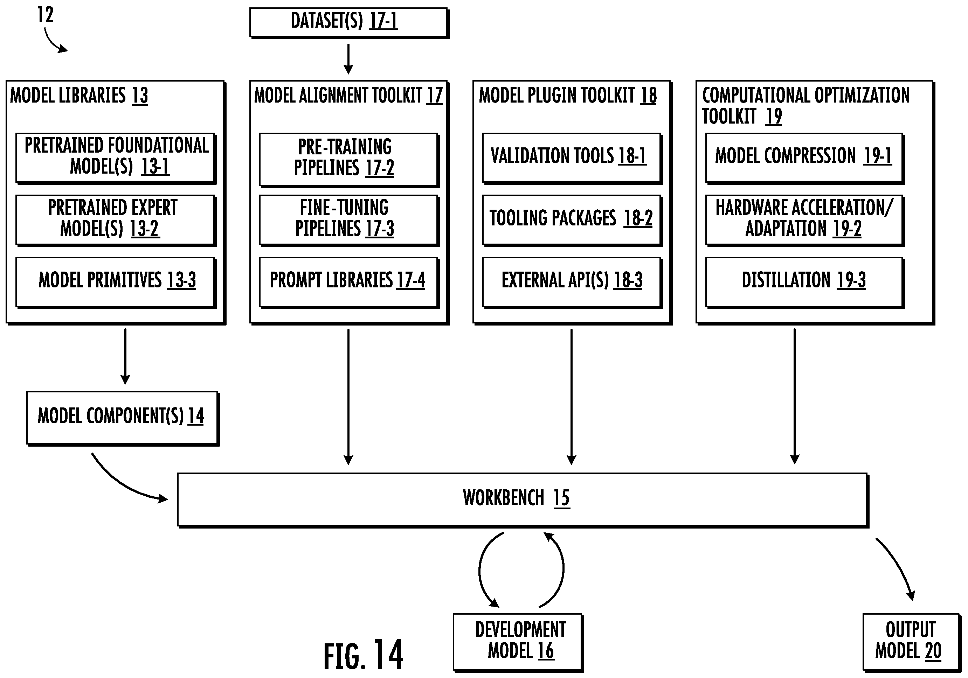

FIG. 14 is a block diagram of an example model development platform 12 that can facilitate creation, adaptation, and refinement of example machine-learned models (e.g., machine-learned model(s) 1, sequence processing model(s) 4, etc.). Model development platform 12 can provide a number of different toolkits that developer systems can employ in the development of new or adapted machine-learned models.

Model development platform 12 can provide one or more model libraries 13 containing building blocks for new models. Model libraries 13 can include one or more pre-trained foundational models 13-1, which can provide a backbone of processing power across various tasks. Model libraries 13 can include one or more pre-trained expert models 13-2, which can be focused on performance in particular domains of expertise. Model libraries 13 can include various model primitives 13-3, which can provide low-level architectures or components (optionally pre-trained), which can be assembled in various arrangements as desired.

Model development platform 12 can receive selections of various model components 14. Model development platform 12 can pass selected model components 14 to a workbench 15 that combines selected model components 14 into a development model 16.

Workbench 15 can facilitate further refinement and adaptation of development model 16 by leveraging a number of different toolkits integrated with model development platform 12. For example, workbench 15 can facilitate alignment of the development model 16 with a desired performance profile on various tasks using a model alignment toolkit 17.

Model alignment toolkit 17 can provide a number of tools for causing development model 16 to generate outputs aligned with desired behavioral characteristics. Alignment can include increasing an accuracy, precision, recall, etc. of model outputs. Alignment can include enforcing output styles, schema, or other preferential characteristics of model outputs. Alignment can be general or domain-specific. For instance, a pre-trained foundational model 13-1 can begin with an initial level of performance across multiple domains. Alignment of the pre-trained foundational model 13-1 can include improving a performance in a particular domain of information or tasks (e.g., even at the expense of performance in another domain of information or tasks).

Model alignment toolkit 17 can integrate one or more dataset(s) 17-1 for aligning development model 16. Curated dataset(s) 17-1 can include labeled or unlabeled training data. Dataset(s) 17-1 can be obtained from public domain datasets. Dataset(s) 17-1 can be obtained from private datasets associated with one or more developer system(s) for the alignment of bespoke machine-learned model(s) customized for private use-cases.

Pre-training pipelines 17-2 can include a machine-learned model training workflow configured to update development model 16 over large-scale, potentially noisy datasets. For example, pre-training can leverage unsupervised learning techniques (e.g., de-noising, etc.) to process large numbers of training instances to update model parameters from an initialized state and achieve a desired baseline performance. Pre-training pipelines 17-2 can leverage unlabeled datasets in dataset(s) 17-1 to perform pre-training. Workbench 15 can implement a pre-training pipeline 17-2 to pre-train development model 16.

Fine-tuning pipelines 17-3 can include a machine-learned model training workflow configured to refine the model parameters of development model 16 with higher-quality data. Fine-tuning pipelines 17-3 can update development model 16 by conducting supervised training with labeled dataset(s) in dataset(s) 17-1. Fine-tuning pipelines 17-3 can update development model 16 by conducting reinforcement learning using reward signals from user feedback signals. Workbench 15 can implement a fine-tuning pipeline 17-3 to fine-tune development model 16.

Prompt libraries 17-4 can include sets of inputs configured to induce behavior aligned with desired performance criteria. Prompt libraries 17-4 can include few-shot prompts (e.g., inputs providing examples of desired model outputs for prepending to a desired runtime query), chain-of-thought prompts (e.g., inputs providing step-by-step reasoning within the exemplars to facilitate thorough reasoning by the model), and the like.

Example prompts can be retrieved from an available repository of prompt libraries 17-4. Example prompts can be contributed by one or more developer systems using workbench 15.

In some implementations, pre-trained or fine-tuned models can achieve satisfactory performance without exemplars in the inputs. For instance, zero-shot prompts can include inputs that lack exemplars. Zero-shot prompts can be within a domain within a training dataset or outside of the training domain(s).

Prompt libraries 17-4 can include one or more prompt engineering tools. Prompt engineering tools can provide workflows for retrieving or learning optimized prompt values. Prompt engineering tools can facilitate directly learning prompt values (e.g., input element values) based one or more training iterations. Workbench 15 can implement prompt engineering tools in development model 16.

Prompt libraries 17-4 can include pipelines for prompt generation. For example, inputs can be generated using development model 16 itself or other machine-learned models. In this manner, for instance, a first model can process information about a task and output an input for a second model to process in order to perform a step of the task. The second model can be the same as or different from the first model. Workbench 15 can implement prompt generation pipelines in development model 16.

Prompt libraries 17-4 can include pipelines for context injection. For instance, a performance of development model 16 on a particular task can improve if provided with additional context for performing the task. Prompt libraries 17-4 can include software components configured to identify desired context, retrieve the context from an external source (e.g., a database, a sensor, etc.), and add the context to the input prompt. Workbench 15 can implement context injection pipelines in development model 16.

Although various training examples described herein with respect to model development platform 12 refer to "pre-training" and "fine-tuning," it is to be understood that model alignment toolkit 17 can generally support a wide variety of training techniques adapted for training a wide variety of machine-learned models. Example training techniques can correspond to the example training method 1000 described above.

Model development platform 12 can include a model plugin toolkit 18. Model plugin toolkit 18 can include a variety of tools configured for augmenting the functionality of a machine-learned model by integrating the machine-learned model with other systems, devices, and software components. For instance, a machine-learned model can use tools to increase performance quality where appropriate. For instance, deterministic tasks can be offloaded to dedicated tools in lieu of probabilistically performing the task with an increased risk of error. For instance, instead of autoregressively predicting the solution to a system of equations, a machine-learned model can recognize a tool to call for obtaining the solution and pass the system of equations to the appropriate tool. The tool can be a traditional system of equations solver that can operate deterministically to resolve the system of equations. The output of the tool can be returned in response to the original query. In this manner, tool use can allow some example models to focus on the strengths of machine-learned models-e.g., understanding an intent in an unstructured request for a task-while augmenting the performance of the model by offloading certain tasks to a more focused tool for rote application of deterministic algorithms to a well-defined problem.

Model plugin toolkit 18 can include validation tools 18-1. Validation tools 18-1 can include tools that can parse and confirm output(s) of a machine-learned model. Validation tools 18-1 can include engineered heuristics that establish certain thresholds applied to model outputs. For example, validation tools 18-1 can ground the outputs of machine-learned models to structured data sources (e.g., to mitigate "hallucinations").

Model plugin toolkit 18 can include tooling packages 18-2 for implementing one or more tools that can include scripts or other executable code that can be executed alongside development model 16. Tooling packages 18-2 can include one or more inputs configured to cause machine-learned model(s) to implement the tools (e.g., few-shot prompts that induce a model to output tool calls in the proper syntax, etc.). Tooling packages 18-2 can include, for instance, fine-tuning training data for training a model to use a tool.

Model plugin toolkit 18 can include interfaces for calling external application programming interfaces (APIs) 18-3. For instance, in addition to or in lieu of implementing tool calls or tool code directly with development model 16, development model 16 can be aligned to output instruction that initiate API calls to send or obtain data via external systems.

Model plugin toolkit 18 can integrate with prompt libraries 17-4 to build a catalog of available tools for use with development model 16. For instance, a model can receive, in an input, a catalog of available tools, and the model can generate an output that selects a tool from the available tools and initiates a tool call for using the tool.

Model development platform 12 can include a computational optimization toolkit 19 for optimizing a computational performance of development model 16. For instance, tools for model compression 19-1 can allow development model 16 to be reduced in size while maintaining a desired level of performance. For instance, model compression 19-1 can include quantization workflows, weight pruning and sparsification techniques, etc. Tools for hardware acceleration 19-2 can facilitate the configuration of the model storage and execution formats to operate optimally on different hardware resources. For instance, hardware acceleration 19-2 can include tools for optimally sharding models for distributed processing over multiple processing units for increased bandwidth, lower unified memory requirements, etc. Tools for distillation 19-3 can provide for the training of lighter-weight models based on the knowledge encoded in development model 16. For instance, development model 16 can be a highly performant, large machine-learned model optimized using model development platform 12. To obtain a lightweight model for running in resource-constrained environments, a smaller model can be a "student model" that learns to imitate development model 16 as a "teacher model." In this manner, for instance, the investment in learning the parameters and configurations of development model 16 can be efficiently transferred to a smaller model for more efficient inference.

Workbench 15 can implement one, multiple, or none of the toolkits implemented in model development platform 12. Workbench 15 can output an output model 20 based on development model 16. Output model 20 can be a deployment version of development model 16. Output model 20 can be a development or training checkpoint of development model 16. Output model 20 can be a distilled, compressed, or otherwise optimized version of development model 16.

FIG. 15 is a block diagram of an example training flow for training a machine-learned development model 16. One or more portion(s) of the example training flow can be implemented by a computing system that includes one or more computing devices such as, for example, computing systems described with reference to the other drawings. Each respective portion of the example training flow can be performed by any (or any combination) of one or more computing devices. Moreover, one or more portion(s) of the example training flow can be implemented on the hardware components of the device(s) described herein, for example, to train one or more systems or models. FIG. 15 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the disclosure. FIG. 15 is described with reference to elements/terms described with respect to other systems and drawings for exemplary illustrated purposes and is not meant to be limiting. One or more portions of the example training flow can be performed additionally, or alternatively, by other systems.

Initially, development model 16 can persist in an initial state as an initialized model 21. Development model 16 can be initialized with weight values. Initial weight values can be random or based on an initialization schema. Initial weight values can be based on prior pre-training for the same or for a different model.

Initialized model 21 can undergo pre-training in a pre-training stage 22. Pre-training stage 22 can be implemented using one or more pre-training pipelines 17-2 over data from dataset(s) 17-1. Pre-training can be omitted, for example, if initialized model 21 is already pre-trained (e.g., development model 16 contains, is, or is based on a pre-trained foundational model or an expert model).

Pre-trained model 23 can then be a new version of development model 16, which can persist as development model 16 or as a new development model. Pre-trained model 23 can be the initial state if development model 16 was already pre-trained. Pre-trained model 23 can undergo fine-tuning in a fine-tuning stage 24. Fine-tuning stage 24 can be implemented using one or more fine-tuning pipelines 17-3 over data from dataset(s) 17-1. Fine-tuning can be omitted, for example, if a pre-trained model as satisfactory performance, if the model was already fine-tuned, or if other tuning approaches are preferred.

Fine-tuned model 29 can then be a new version of development model 16, which can persist as development model 16 or as a new development model. Fine-tuned model 29 can be the initial state if development model 16 was already fine-tuned. Fine-tuned model 29 can undergo refinement with user feedback 26. For instance, refinement with user feedback 26 can include reinforcement learning, optionally based on human feedback from human users of fine-tuned model 25. As reinforcement learning can be a form of fine-tuning, it is to be understood that fine-tuning stage 24 can subsume the stage for refining with user feedback 26. Refinement with user feedback 26 can produce a refined model 27. Refined model 27 can be output to downstream system(s) 28 for deployment or further development.

In some implementations, computational optimization operations can be applied before, during, or after each stage. For instance, initialized model 21 can undergo computational optimization 29-1 (e.g., using computational optimization toolkit 19) before pre-training stage 22. Pre-trained model 23 can undergo computational optimization 29-2 (e.g., using computational optimization toolkit 19) before fine-tuning stage 24. Fine-tuned model 25 can undergo computational optimization 29-3 (e.g., using computational optimization toolkit 19) before refinement with user feedback 26. Refined model 27 can undergo computational optimization 29-4 (e.g., using computational optimization toolkit 19) before output to downstream system(s) 28. Computational optimization(s) 29-1, . . . , 29-4 can all be the same, all be different, or include at least some different optimization techniques.

### Example Machine-Learned Model Inference System

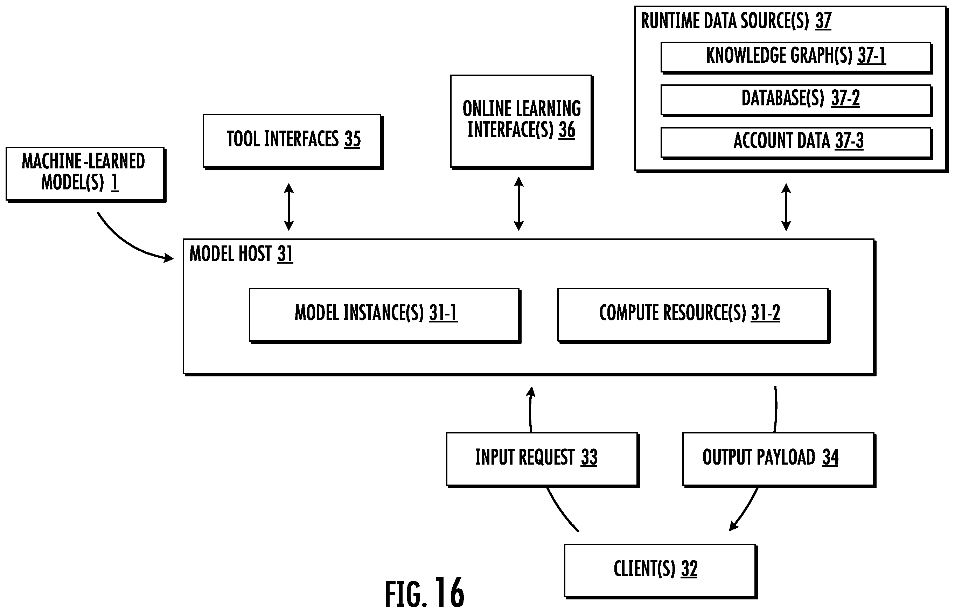

FIG. 16 is a block diagram of an inference system for operating one or more machine-learned model(s) 1 to perform inference (e.g., for training, for deployment, etc.). A model host 31 can receive machine-learned model(s) 1. Model host 31 can host one or more model instance(s) 31-1, which can be one or multiple instances of one or multiple models. Model host 31 can host model instance(s) 31-1 using available compute resources 31-2 associated with model host 31.

Model host 31 can perform inference on behalf of one or more client(s) 32. Client(s) 32 can transmit an input request 33 to model host 31. Using input request 33, model host 31 can obtain input(s) 2 for input to machine-learned model(s) 1. Machine-learned model(s) 1 can process input(s) 2 to generate output(s) 3. Using output(s) 3, model host 31 can return an output payload 34 for responding to input request 33 from client(s) 32. Output payload 34 can include or be based on output(s) 3.

Model host 31 can leverage various other resources and tools to augment the inference task. For instance, model host 31 can communicate with tool interfaces 35 to facilitate tool use by model instance(s) 31-1. Tool interfaces 35 can include local or remote APIs. Tool interfaces 35 can include integrated scripts or other software functionality. Model host 31 can engage online learning interface(s) 36 to facilitate ongoing improvements to machine-learned model(s) 1. For instance, online learning interface(s) 36 can be used within reinforcement learning loops to retrieve user feedback on inferences served by model host 31. Model host 31 can access runtime data source(s) 37 for augmenting input(s) 2 with additional contextual information. For instance, runtime data source(s) 37 can include a knowledge graph 37-1 that facilitates structured information retrieval for information associated with input request(s) 33 (e.g., a search engine service). Runtime data source(s) 37 can include public or private, external or local database(s) 37-2 that can store information associated with input request(s) 33 for augmenting input(s) 2. Runtime data source(s) 37 can include account data 37-3 which can be retrieved in association with a user account corresponding to a client 32 for customizing the behavior of model host 31 accordingly.

Model host 31 can be implemented by one or multiple computing devices or systems. Client(s) 2 can be implemented by one or multiple computing devices or systems, which can include computing devices or systems shared with model host 31.

For example, model host 31 can operate on a server system that provides a machine-learning service to client device(s) that operate client(s) 32 (e.g., over a local or wide-area network). Client device(s) can be end-user devices used by individuals. Client device(s) can be server systems that operate client(s) 32 to provide various functionality as a service to downstream end-user devices.

In some implementations, model host 31 can operate on a same device or system as client(s) 32. Model host 31 can be a machine-learning service that runs on-device to provide machine-learning functionality to one or multiple applications operating on a client device, which can include an application implementing client(s) 32. Model host 31 can be a part of a same application as client(s) 32. For instance, model host 31 can be a subroutine or method implemented by one part of an application, and client(s) 32 can be another subroutine or method that engages model host 31 to perform inference functions within the application. It is to be understood that model host 31 and client(s) 32 can have various different configurations.

Model instance(s) 31-1 can include one or more machine-learned models that are available for performing inference. Model instance(s) 31-1 can include weights or other model components that are stored on in persistent storage, temporarily cached, or loaded into highspeed memory. Model instance(s) 31-1 can include multiple instance(s) of the same model (e.g., for parallel execution of more requests on the same model). Model instance(s) 31-1 can include instance(s) of different model(s). Model instance(s) 31-1 can include cached intermediate states of active or inactive model(s) used to accelerate inference of those models. For instance, an inference session with a particular model may generate significant amounts of computational results that can be re-used for future inference runs (e.g., using a KV cache for transformer-based models). These computational results can be saved in association with that inference session so that session can be executed more efficiently when resumed.

Compute resource(s) 31-2 can include one or more processors (central processing units, graphical processing units, tensor processing units, machine-learning accelerators, etc.) connected to one or more memory devices. Compute resource(s) 31-2 can include a dynamic pool of available resources shared with other processes. Compute resource(s) 31-2 can include memory devices large enough to fit an entire model instance in a single memory instance. Compute resource(s) 31-2 can also shard model instance(s) across multiple memory devices (e.g., using data parallelization or tensor parallelization, etc.). This can be done to increase parallelization or to execute a large model using multiple memory devices which individually might not be able to fit the entire model into memory.

Input request 33 can include data for input(s) 2. Model host 31 can process input request 33 to obtain input(s) 2. Input(s) 2 can be obtained directly from input request 33 or can be retrieved using input request 33. Input request 33 can be submitted to model host 31 via an API.

Model host 31 can perform inference over batches of input requests 33 in parallel. For instance, a model instance 31-1 can be configured with an input structure that has a batch dimension. Separate input(s) 2 can be distributed across the batch dimension (e.g., rows of an array). The separate input(s) 2 can include completely different contexts. The separate input(s) 2 can be multiple inference steps of the same task. The separate input(s) 2 can be staggered in an input structure, such that any given inference cycle can be operating on different portions of the respective input(s) 2. In this manner, for instance, model host 31 can perform inference on the batch in parallel, such that output(s) 3 can also contain the batch dimension and return the inference results for the batched input(s) 2 in parallel. In this manner, for instance, batches of input request(s) 33 can be processed in parallel for higher throughput of output payload(s) 34.

Output payload 34 can include or be based on output(s) 3 from machine-learned model(s) 1. Model host 31 can process output(s) 3 to obtain output payload 34. This can include chaining multiple rounds of inference (e.g., iteratively, recursively, across the same model(s) or different model(s)) to arrive at a final output for a task to be returned in output payload 34. Output payload 34 can be transmitted to client(s) 32 via an API.

Online learning interface(s) 36 can facilitate reinforcement learning of machine-learned model(s) 1. Online learning interface(s) 36 can facilitate reinforcement learning with human feedback (RLHF). Online learning interface(s) 36 can facilitate federated learning of machine-learned model(s) 1.

Model host 31 can execute machine-learned model(s) 1 to perform inference for various tasks using various types of data. For example, various different input(s) 2 and output(s) 3 can be used for various different tasks. In some implementations, input(s) 2 can be or otherwise represent image data. Machine-learned model(s) 1 can process the image data to generate an output. As an example, machine-learned model(s) 1 can process the image data to generate an image recognition output (e.g., a recognition of the image data, a latent embedding of the image data, an encoded representation of the image data, a hash of the image data, etc.). As another example, machine-learned model(s) 1 can process the image data to generate an image segmentation output. As another example, machine-learned model(s) 1 can process the image data to generate an image classification output. As another example, machine-learned model(s) 1 can process the image data to generate an image data modification output (e.g., an alteration of the image data, etc.). As another example, machine-learned model(s) 1 can process the image data to generate an encoded image data output (e.g., an encoded and/or compressed representation of the image data, etc.). As another example, machine-learned model(s) 1 can process the image data to generate an upscaled image data output. As another example, machine-learned model(s) 1 can process the image data to generate a prediction output.

In some implementations, the task is a computer vision task. In some cases, input(s) 2 includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some implementations, input(s) 2 can be or otherwise represent natural language data. Machine-learned model(s) 1 can process the natural language data to generate an output. As an example, machine-learned model(s) 1 can process the natural language data to generate a language encoding output. As another example, machine-learned model(s) 1 can process the natural language data to generate a latent text embedding output. As another example, machine-learned model(s) 1 can process the natural language data to generate a translation output. As another example, machine-learned model(s) 1 can process the natural language data to generate a classification output. As another example, machine-learned model(s) 1 can process the natural language data to generate a textual segmentation output. As another example, machine-learned model(s) 1 can process the natural language data to generate a semantic intent output. As another example, machine-learned model(s) 1 can process the natural language data to generate an upscaled text or natural language output (e.g., text or natural language data that is higher quality than the input text or natural language, etc.). As another example, machine-learned model(s) 1 can process the natural language data to generate a prediction output (e.g., one or more predicted next portions of natural language content).

In some implementations, input(s) 2 can be or otherwise represent speech data (e.g., data describing spoken natural language, such as audio data, textual data, etc.). Machine-learned model(s) 1 can process the speech data to generate an output. As an example, machine-learned model(s) 1 can process the speech data to generate a speech recognition output. As another example, machine-learned model(s) 1 can process the speech data to generate a speech translation output. As another example, machine-learned model(s) 1 can process the speech data to generate a latent embedding output. As another example, machine-learned model(s) 1 can process the speech data to generate an encoded speech output (e.g., an encoded and/or compressed representation of the speech data, etc.). As another example, machine-learned model(s) 1 can process the speech data to generate an upscaled speech output (e.g., speech data that is higher quality than the input speech data, etc.). As another example, machine-learned model(s) 1 can process the speech data to generate a textual representation output (e.g., a textual representation of the input speech data, etc.). As another example, machine-learned model(s) 1 can process the speech data to generate a prediction output.

In some implementations, input(s) 2 can be or otherwise represent latent encoding data (e.g., a latent space representation of an input, etc.). Machine-learned model(s) 1 can process the latent encoding data to generate an output. As an example, machine-learned model(s) 1 can process the latent encoding data to generate a recognition output. As another example, machine-learned model(s) 1 can process the latent encoding data to generate a reconstruction output. As another example, machine-learned model(s) 1 can process the latent encoding data to generate a search output. As another example, machine-learned model(s) 1 can process the latent encoding data to generate a reclustering output. As another example, machine-learned model(s) 1 can process the latent encoding data to generate a prediction output.

In some implementations, input(s) 2 can be or otherwise represent statistical data. Statistical data can be, represent, or otherwise include data computed and/or calculated from some other data source. Machine-learned model(s) 1 can process the statistical data to generate an output. As an example, machine-learned model(s) 1 can process the statistical data to generate a recognition output. As another example, machine-learned model(s) 1 can process the statistical data to generate a prediction output. As another example, machine-learned model(s) 1 can process the statistical data to generate a classification output. As another example, machine-learned model(s) 1 can process the statistical data to generate a segmentation output. As another example, machine-learned model(s) 1 can process the statistical data to generate a visualization output. As another example, machine-learned model(s) 1 can process the statistical data to generate a diagnostic output.

In some implementations, input(s) 2 can be or otherwise represent sensor data. Machine-learned model(s) 1 can process the sensor data to generate an output. As an example, machine-learned model(s) 1 can process the sensor data to generate a recognition output. As another example, machine-learned model(s) 1 can process the sensor data to generate a prediction output. As another example, machine-learned model(s) 1 can process the sensor data to generate a classification output. As another example, machine-learned model(s) 1 can process the sensor data to generate a segmentation output. As another example, machine-learned model(s) 1 can process the sensor data to generate a visualization output. As another example, machine-learned model(s) 1 can process the sensor data to generate a diagnostic output. As another example, machine-learned model(s) 1 can process the sensor data to generate a detection output.

In some implementations, machine-learned model(s) 1 can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g., one or more images or videos), the output comprises compressed visual data, and the task is a visual data compression task. In another example, the task may comprise generating an embedding for input data (e.g., input audio or visual data). In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

In some implementations, the task is a generative task, and machine-learned model(s) 1 can be configured to output content generated in view of input(s) 2. For instance, input(s) 2 can be or otherwise represent data of one or more modalities that encodes context for generating additional content.

In some implementations, the task can be a text completion task. Machine-learned model(s) 1 can be configured to process input(s) 2 that represent textual data and to generate output(s) 3 that represent additional textual data that completes a textual sequence that includes input(s) 2. For instance, machine-learned model(s) 1 can be configured to generate output(s) 3 to complete a sentence, paragraph, or portion of text that follows from a portion of text represented by input(s) 2.

In some implementations, the task can be an instruction following task. Machine-learned model(s) 1 can be configured to process input(s) 2 that represent instructions to perform a function and to generate output(s) 3 that advance a goal of satisfying the instruction function (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the instructions (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the instructions (e.g., natural language responses, programming language responses, machine language responses, etc.). One or more output(s) 3 can be iteratively or recursively generated to sequentially process and accomplish steps toward accomplishing the requested functionality. For instance, an initial output can be executed by an external system or be processed by machine-learned model(s) 1 to complete an initial step of performing a function. Multiple steps can be performed, with a final output being obtained that is responsive to the initial instructions.

In some implementations, the task can be a question answering task. Machine-learned model(s) 1 can be configured to process input(s) 2 that represent a question to answer and to generate output(s) 3 that advance a goal of returning an answer to the question (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the question (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the question (e.g., natural language responses, programming language responses, machine language responses, etc.). One or more output(s) 3 can be iteratively or recursively generated to sequentially process and accomplish steps toward answering the question. For instance, an initial output can be executed by an external system or be processed by machine-learned model(s) 1 to complete an initial step of obtaining an answer to the question (e.g., querying a database, performing a computation, executing a script, etc.). Multiple steps can be performed, with a final output being obtained that is responsive to the question.

In some implementations, the task can be an image generation task. Machine-learned model(s) 1 can be configured to process input(s) 2 that represent context regarding a desired portion of image content. The context can include text data, image data, audio data, etc. Machine-learned model(s) 1 can be configured to generate output(s) 3 that represent image data that depicts imagery related to the context. For instance, machine-learned model(s) 1 can be configured to generate pixel data of an image. Values for channel(s) associated with the pixels in the pixel data can be selected based on the context (e.g., based on a probability determined based on the context).

In some implementations, the task can be an audio generation task. Machine-learned model(s) 1 can be configured to process input(s) 2 that represent context regarding a desired portion of audio content. The context can include text data, image data, audio data, etc. Machine-learned model(s) 1 can be configured to generate output(s) 3 that represent audio data related to the context. For instance, machine-learned model(s) 1 can be configured to generate waveform data in the form of an image (e.g., a spectrogram). Values for channel(s) associated with pixels of the image can be selected based on the context. Machine-learned model(s) 1 can be configured to generate waveform data in the form of a sequence of discrete samples of a continuous waveform. Values of the sequence can be selected based on the context (e.g., based on a probability determined based on the context).

In some implementations, the task can be a data generation task. Machine-learned model(s) 1 can be configured to process input(s) 2 that represent context regarding a desired portion of data (e.g., data from various data domains, such as sensor data, image data, multimodal data, statistical data, etc.). The desired data can be, for instance, synthetic data for training other machine-learned models. The context can include arbitrary data type(s). Machine-learned model(s) 1 can be configured to generate output(s) 3 that represent data that aligns with the desired data. For instance, machine-learned model(s) 1 can be configured to generate data values for populating a dataset. Values for the data object(s) can be selected based on the context (e.g., based on a probability determined based on the context).

Example Computing Systems and Devices

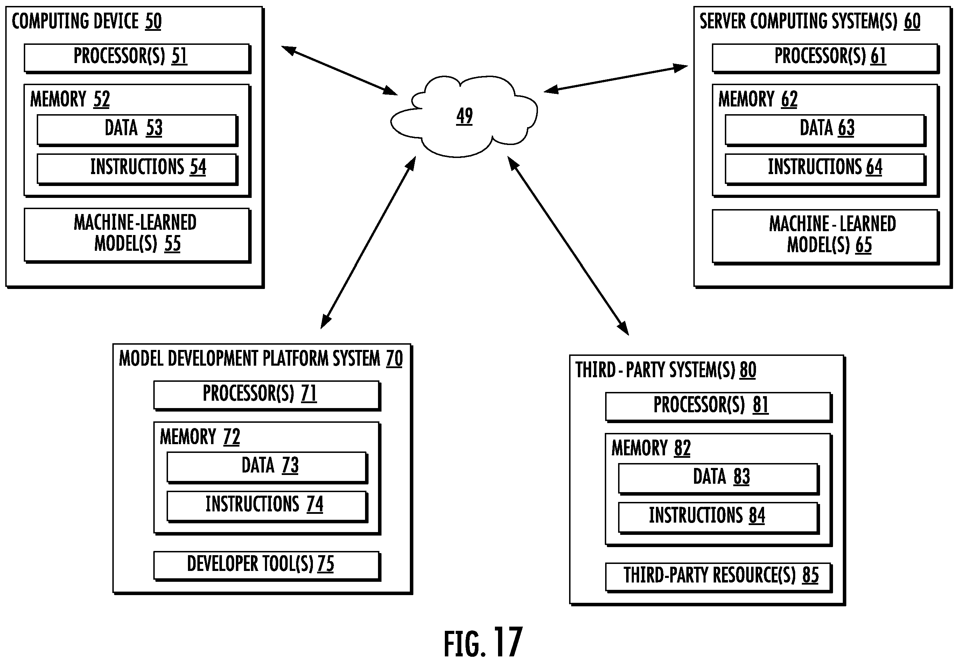

FIG. 17 is a block diagram of an example networked computing system that can perform aspects of example implementations of the disclosure. The system can include a number of computing devices and systems that are communicatively coupled over a network 49. An example computing device 50 is described to provide an example of a computing device that can perform any aspect of the disclosure (e.g., implementing model host 31, client(s) 32, or both). An example server computing system 60 is described as an example of a server computing system that can perform any aspect of the disclosure (e.g., implementing model host 31, client(s) 32, or both). Computing device 50 and server computing system(s) 60 can cooperatively interact (e.g., over network 49) to perform any aspect of the disclosure (e.g., implementing model host 31, client(s) 32, or both). Model development platform system 70 is an example system that can host or serve model development platform(s) 12 for development of machine-learned models. Third-party system(s) 80 are example system(s) with which any of computing device 50, server computing system(s) 60, or model development platform system(s) 70 can interact in the performance of various aspects of the disclosure (e.g., engaging third-party tools, accessing third-party databases or other resources, etc.).

Network 49 can be any type of communications network, such as a local area network (e.g., intranet), wide area network (e.g., Internet), or some combination thereof and can include any number of wired or wireless links. In general, communication over network 49 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL). Network 49 can also be implemented via a system bus. For instance, one or more devices or systems of FIG. 17 can be co-located with, contained by, or otherwise integrated into one or more other devices or systems.

Computing device 50 can be any type of computing device, such as, for example, a personal computing device (e.g., laptop or desktop), a mobile computing device (e.g., smartphone or tablet), a gaming console or controller, a wearable computing device, an embedded computing device, a server computing device, a virtual machine operating on a host device, or any other type of computing device. Computing device 50 can be a client computing device. Computing device 50 can be an end-user computing device. Computing device 50 can be a computing device of a service provided that provides a service to an end user (who may use another computing device to interact with computing device 50).

Computing device 50 can include one or more processors 51 and a memory 52. Processor(s) 51 can be any suitable processing device (e.g., a processor core, a microprocessor, an ASIC, an FPGA, a controller, a microcontroller, etc.) and can be one processor or a plurality of processors that are operatively connected. Memory 52 can include one or more non-transitory computer-readable storage media, such as HBM, RAM, ROM, EEPROM, EPROM, flash memory devices, magnetic disks, etc., and combinations thereof. Memory 52 can store data 53 and instructions 54 which can be executed by processor(s) 51 to cause computing device 50 to perform operations. The operations can implement any one or multiple features described herein. The operations can implement example methods and techniques described herein.

Computing device 50 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

Computing device 50 can store or include one or more machine-learned models 55. Machine-learned models 55 can include one or more machine-learned model(s) 1, such as a sequence processing model 4. Machine-learned models 55 can include one or multiple model instance(s) 31-1. Machine-learned model(s) 55 can be received from server computing system(s) 60, model development platform system 70, third party system(s) 80 (e.g., an application distribution platform), or developed locally on computing device 50. Machine-learned model(s) 55 can be loaded into memory 52 and used or otherwise implemented by processor(s) 51. Computing device 50 can implement multiple parallel instances of machine-learned model(s) 55.

Server computing system(s) 60 can include one or more processors 61 and a memory 62. Processor(s) 61 can be any suitable processing device (e.g., a processor core, a microprocessor, an ASIC, an FPGA, a controller, a microcontroller, etc.) and can be one processor or a plurality of processors that are operatively connected. Memory 62 can include one or more non-transitory computer-readable storage media, such as HBM, RAM, ROM, EEPROM, EPROM, flash memory devices, magnetic disks, etc., and combinations thereof. Memory 62 can store data 63 and instructions 64 which can be executed by processor(s) 61 to cause server computing system(s) 60 to perform operations. The operations can implement any one or multiple features described herein. The operations can implement example methods and techniques described herein.

In some implementations, server computing system 60 includes or is otherwise implemented by one or multiple server computing devices. In instances in which server computing system 60 includes multiple server computing devices, such server computing devices can operate according to sequential computing architectures, parallel computing architectures, or some combination thereof.

Server computing system 60 can store or otherwise include one or more machine-learned models 65. Machine-learned model(s) 65 can be the same as or different from machine-learned model(s) 55. Machine-learned models 65 can include one or more machine-learned model(s) 1, such as a sequence processing model 4. Machine-learned models 65 can include one or multiple model instance(s) 31-1. Machine-learned model(s) 65 can be received from computing device 50, model development platform system 70, third party system(s) 80, or developed locally on server computing system(s) 60. Machine-learned model(s) 65 can be loaded into memory 62 and used or otherwise implemented by processor(s) 61. Server computing system(s) 60 can implement multiple parallel instances of machine-learned model(s) 65.

In an example configuration, machine-learned models 65 can be included in or otherwise stored and implemented by server computing system 60 to establish a client-server relationship with computing device 50 for serving model inferences. For instance, server computing system(s) 60 can implement model host 31 on behalf of client(s) 32 on computing device 50. For instance, machine-learned models 65 can be implemented by server computing system 60 as a portion of a web service (e.g., remote machine-learned model hosting service, such as an online interface for performing machine-learned model operations over a network on server computing system(s) 60). For instance, server computing system(s) 60 can communicate with computing device 50 over a local intranet or internet connection. For instance, computing device 50 can be a workstation or endpoint in communication with server computing system(s) 60, with implementation of machine-learned models 65 being managed by server computing system(s) 60 to remotely perform inference (e.g., for runtime or training operations), with output(s) returned (e.g., cast, streamed, etc.) to computing device 50. Machine-learned models 65 can work cooperatively or interoperatively with machine-learned models 55 on computing device 50 to perform various tasks.

Model development platform system(s) 70 can include one or more processors 71 and a memory 72. Processor(s) 71 can be any suitable processing device (e.g., a processor core, a microprocessor, an ASIC, an FPGA, a controller, a microcontroller, etc.) and can be one processor or a plurality of processors that are operatively connected. Memory 72 can include one or more non-transitory computer-readable storage media, such as HBM, RAM, ROM, EEPROM, EPROM, flash memory devices, magnetic disks, etc., and combinations thereof. Memory 72 can store data 73 and instructions 74 which can be executed by processor(s) 71 to cause model development platform system(s) 70 to perform operations. The operations can implement any one or multiple features described herein. The operations can implement example methods and techniques described herein. Example operations include the functionality described herein with respect to model development platform 12. This and other functionality can be implemented by developer tool(s) 75.

Third-party system(s) 80 can include one or more processors 81 and a memory 82. Processor(s) 81 can be any suitable processing device (e.g., a processor core, a microprocessor, an ASIC, an FPGA, a controller, a microcontroller, etc.) and can be one processor or a plurality of processors that are operatively connected. Memory 82 can include one or more non-transitory computer-readable storage media, such as HBM, RAM, ROM, EEPROM, EPROM, flash memory devices, magnetic disks, etc., and combinations thereof. Memory 82 can store data 83 and instructions 84 which can be executed by processor(s) 81 to cause third-party system(s) 80 to perform operations. The operations can implement any one or multiple features described herein. The operations can implement example methods and techniques described herein. Example operations include the functionality described herein with respect to tools and other external resources called when training or performing inference with machine-learned model(s) 1, 4, 16, 20, 55, 65, etc. (e.g., third-party resource(s) 85).

FIG. 17 illustrates one example arrangement of computing systems that can be used to implement the disclosure. Other computing system configurations can be used as well. For example, in some implementations, one or both of computing system 50 or server computing system(s) 60 can implement all or a portion of the operations of model development platform system 70. For example, computing system 50 or server computing system(s) 60 can implement developer tool(s) 75 (or extensions thereof) to develop, update/train, or refine machine-learned models 1, 4, 16, 20, 55, 65, etc. using one or more techniques described herein with respect to model alignment toolkit 17. In this manner, for instance, computing system 50 or server computing system(s) 60 can develop, update/train, or refine machine-learned models based on local datasets (e.g., for model personalization/customization, as permitted by user data preference selections).

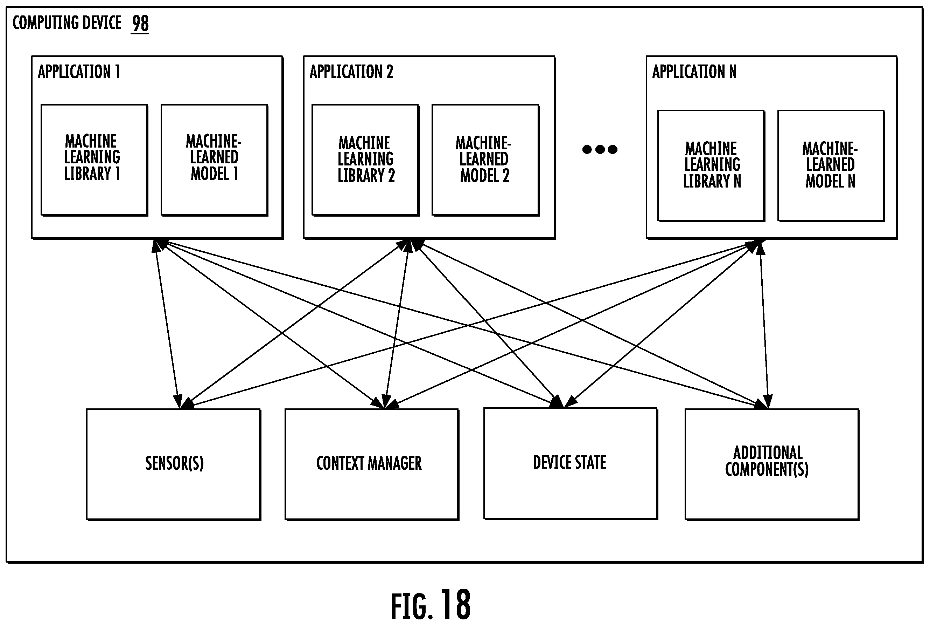

FIG. 18 is a block diagram of an example computing device 98 that performs according to example embodiments of the disclosure. Computing device 98 can be a user computing device or a server computing device (e.g., computing device 50, server computing system(s) 60, etc.). Computing device 98 can implement model host 31. For instance, computing device 98 can include a number of applications (e.g., applications 1 through N). Each application can contain its own machine learning library and machine-learned model(s). For example, each application can include a machine-learned model. Example applications include a text messaging application, an email application, a dictation application, a virtual keyboard application, a browser application, a social media application, a chat application, an entity recognition application, etc. As illustrated in FIG. 18, each application can communicate with a number of other components of the computing device, such as, for example, one or more sensors, a context manager, a device state component, or additional components. In some implementations, each application can communicate with each device component using an API (e.g., a public API). In some implementations, the API used by each application is specific to that application.

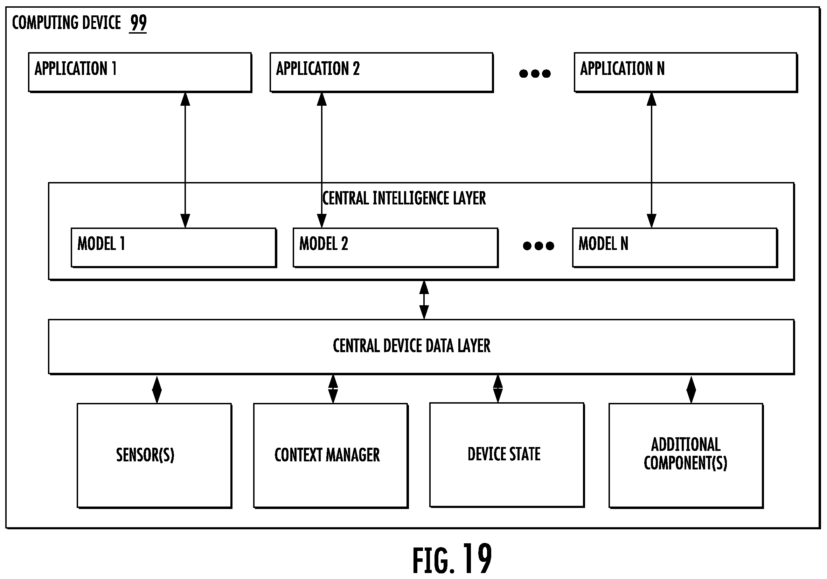

FIG. 19 is a block diagram of an example computing device 99 that performs according to example embodiments of the disclosure. Computing device 99 can be the same as or different from computing device 98. Computing device 99 can be a user computing device or a server computing device (e.g., computing device 50, server computing system(s) 60, etc.). Computing device 98 can implement model host 31. For instance, computing device 99 can include a number of applications (e.g., applications 1 through N). Each application can be in communication with a central intelligence layer. Example applications include a text messaging application, an email application, a dictation application, a virtual keyboard application, a browser application, a social media application, a chat application, an entity recognition application, etc. In some implementations, each application can communicate with the central intelligence layer (and model(s) stored therein) using an API (e.g., a common API across all applications).

The central intelligence layer can include a number of machine-learned models. For example, as illustrated in FIG. 19, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of computing device 99.

The central intelligence layer can communicate with a central device data layer. The central device data layer can be a centralized repository of data for computing device 99. As illustrated in FIG. 19, the central device data layer can communicate with a number of other components of the computing device, such as, for example, one or more sensors, a context manager, a device state component, or additional components. In some implementations, the central device data layer can communicate with each device component using an API (e.g., a private API).

Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the disclosure is by way of example rather than by way of limitation, and the subject disclosure does not preclude inclusion of such modifications, variations or additions to the disclosure as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of", "any combination of" example elements listed therein, etc. Terms such as "based on" should be understood as "based at least in part on."

Terms used herein are used to describe the example embodiments and are not intended to limit and / or restrict the disclosure. The singular forms "a," "an" and "the" are intended to include the plural forms as well, unless the context clearly indicates otherwise. In this disclosure, terms such as "including", "having", "comprising", and the like are used to specify features, numbers, steps, operations, elements, components, or combinations thereof, but do not preclude the presence or addition of one or more of the features, elements, steps, operations, elements, components, or combinations thereof.

The term "and / or" includes a combination of a plurality of related listed items or any item of the plurality of related listed items. For example, the scope of the expression or phrase "A and/or B" includes the item "A", the item "B", and the combination of items "A and B".

In addition, the scope of the expression or phrase "at least one of A or B" is intended to include all of the following: (1) at least one of A, (2) at least one of B, and (3) at least one of A and at least one of B. Likewise, the scope of the expression or phrase "at least one of A, B, or C" is intended to include all of the following: (1) at least one of A, (2) at least one of B, (3) at least one of C, (4) at least one of A and at least one of B, (5) at least one of A and at least one of C, (6) at least one of B and at least one of C, and (7) at least one of A, at least one of B, and at least one of C.

It will be understood that, although the terms first, second, third, etc., may be used herein to describe various elements, the elements are not limited by these terms. Instead, these terms are used to distinguish one element from another element. For example, without departing from the scope of the disclosure, a first element may be termed as a second element, and a second element may be termed as a first element.

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the disclosure.

To the extent terms including "module", and "unit," and the like are used herein, these terms may refer to, but are not limited to, a software or hardware component or device, such as a Field Programmable Gate Array (FPGA) or Application Specific Integrated Circuit (ASIC), which performs certain tasks. A module or unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

Aspects of the above-described example embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks, Blu-Ray disks, and DVDs; magneto-optical media such as optical discs; and other hardware devices that are specially configured to store and perform program instructions, such as semiconductor memory, read-only memory (ROM), random access memory (RAM), flash memory, USB memory, and the like. Examples of program instructions include both machine code, such as produced by a compiler, and files containing higher level code that may be executed by the computer using an interpreter. The program instructions may be executed by one or more processors. The described hardware devices may be configured to act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. In addition, the non-transitory computer-readable storage media may also be embodied in at least one application specific integrated circuit (ASIC) or Field Programmable Gate Array (FPGA).

Each block of the flowchart illustrations may represent a unit, module, segment, or portion of code, which comprises one or more executable instructions for implementing the specified logical function(s). It should also be noted that in some alternative implementations, the functions noted in the blocks may occur out of order. For example, two blocks shown in succession may in fact be executed substantially concurrently (simultaneously) or the blocks may sometimes be executed in the reverse order, depending upon the functionality involved.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

While the disclosure has been described with respect to various example embodiments, each example is provided by way of explanation, not limitation of the disclosure. Those skilled in the art, upon attaining an understanding of the foregoing, can readily produce alterations to, variations of, and equivalents to such embodiments. Accordingly, the disclosure does not preclude inclusion of such modifications, variations and/or additions to the disclosed subject matter as would be readily apparent to one of ordinary skill in the art. For example, features illustrated or described as part of one embodiment can be used with another embodiment to yield a still further embodiment. Thus, it is intended that the disclosure covers such alterations, variations, and equivalents.

This specification also includes the following clauses:

Clause 1. A computing device for generating corrected entity labels for improved model accuracy and efficiency, comprising: one or more memories configured to store instructions; and one or more processors configured to execute the instructions to perform operations, the operations comprising: receiving a request to identify an entity in an image, determining a candidate entity label for the entity based on the image, processing a plurality of inputs with one or more first machine-learned models to generate a corrected entity label for the candidate entity label, wherein the plurality of inputs include the image, a textual description of the image, and contextual information associated with the candidate entity label, and providing a first output including the corrected entity label for the entity in the image.

Clause 2. The computing device of clause 1, wherein the contextual information associated with the candidate entity label is received from an external data source.

Clause 3. The computing device of clause 2, wherein the external data source includes content related to the candidate entity label and the candidate entity label corresponds to a title associated with the content.

Clause 4. The computing device of clause 1, wherein the textual description of the image is a caption associated with the image.

Clause 5. The computing device of clause 1, wherein determining the candidate entity label for the entity based on the image comprises one or more second machine-learned models implementing a k-nearest neighbor algorithm to determine the candidate entity label for the entity.

Clause 6. The computing device of clause 1, wherein the image includes a plurality of entities, a respective candidate entity label is determined for each of the entities among the plurality of entities in the image, the one or more first machine-learned models generate a respective corrected entity label for each of the respective candidate entity labels, and the first output includes corrected entity labels for each of the entities among the plurality of entities in the image.

Clause 7. The computing device of clause 1, wherein the operations further comprise the one or more first machine-learned models generating a second output which includes a rationale explaining a connection between the corrected entity label and the image.

Clause 8. The computing device of clause 7, wherein the one or more first machine-learned models process, as an input, visual attributes associated with the image and without reference to the candidate entity label, to generate the second output.

Clause 9. The computing device of clause 7, wherein the operations further comprise the one or more first machine-learned models generating a third output which includes one or more question-answer pairs associated with the entity in the image.

Clause 10. The computing device of clause 9, wherein the one or more first machine-learned models process, as inputs, the rationale, the image, and the corrected entity label, to generate the third output.

Clause 11. The computing device of clause 10, wherein the image includes a plurality of entities, and the one or more question-answer pairs are associated with at least one other entity in the image among the plurality of entities.

Clause 12. The computing device of clause 1, wherein the operations further comprise generating a training dataset which includes a plurality of images, at least one of the plurality of images being associated with at least one corrected entity label.

Clause 13. The computing device of clause 12, wherein each image among the plurality of images is further associated with a respective rationale associated with each corrected entity label, and one or more question-answer pairs associated with each corrected entity label.

Clause 14. The computing device of clause 1, wherein the one or more first machine-learned models are configured to update the candidate entity label with the corrected entity label for the entity by verifying whether the candidate entity label for the entity and the contextual information associated with the candidate entity label corresponds to visual attributes in the image.

Clause 15. The computing device of clause 1, wherein the one or more first machine-learned models comprise a multi-modal vision language model.

Clause 16. A computer-implemented method for generating corrected entity labels for improved model accuracy and efficiency, comprising: receiving, by a computing system comprising one or more processors, a request to identify an entity in an image; determining, by the computing system, a candidate entity label for the entity based on the image; processing, by the computing system, a plurality of inputs with one or more first machine-learned models to generate a corrected entity label for the candidate entity label, wherein the plurality of inputs include the image, a textual description of the image, and contextual information associated with the candidate entity label; and providing, by the computing system, a first output including the corrected entity label for the entity in the image.

Clause 17. The computer-implemented method of clause 16, further comprising: processing, by the one or more first machine-learned models, one or more inputs including visual attributes associated with the image and without reference to the candidate entity label, to generate a second output which includes a rationale explaining a connection between the corrected entity label and the image.

Clause 18. The computer-implemented method of clause 17, further comprising:

processing, by the one or more first machine-learned models, one or more inputs including the rationale, the image, and the corrected entity label to generate a third output which includes one or more question-answer pairs associated with the entity in the image.

Clause 19. The computer-implemented method of clause 18, further comprising: generating a training dataset which includes a plurality of images, at least one of the plurality of images being associated with at least one corrected entity label, wherein each image among the plurality of images is further associated with a respective rationale associated with each corrected entity label, and one or more question-answer pairs associated with each corrected entity label.

Clause 20. A non-transitory computer readable medium storing instructions which, when executed by a processor, cause the processor to perform operations for generating corrected entity labels for improved model accuracy and efficiency, the operations comprising: receiving a request to identify an entity in an image; determining a candidate entity label for the entity based on the image; processing a plurality of inputs with one or more first machine-learned models to generate a corrected entity label for the candidate entity label, wherein the plurality of inputs include the image, a textual description of the image, and contextual information associated with the candidate entity label; and providing a first output including the corrected entity label for the entity in the image.

**Claims**

1. A computer-implemented method for generating corrected entity labels for improved model accuracy and efficiency, comprising:

   receiving, by a computing device, a request to identify an entity in an image,
   determining, by the computing device, a candidate entity label for the entity based on the image,
   processing, by the computing device, a plurality of inputs with one or more first machine-learned models to generate a corrected entity label for the candidate entity label, wherein the plurality of inputs include the image, a textual description of the image, and contextual information associated with the candidate entity label, and

providing, by the computing device, a first output including the corrected entity label for the entity in the image.

2. The computer-implemented method of claim 1, wherein the contextual information associated with the candidate entity label is received from an external data source.

3. The computer-implemented method of claim 2, wherein the external data source includes content related to the candidate entity label and the candidate entity label corresponds to a title associated with the content.

4. The computer-implemented method of any preceding claim, wherein the textual description of the image is a caption associated with the image.

5. The computer-implemented method of any preceding claim, wherein determining the candidate entity label for the entity based on the image comprises one or more second machine-learned models implementing a k-nearest neighbor algorithm to determine the candidate entity label for the entity.

6. The computer-implemented method of any preceding claim, wherein the image includes a plurality of entities,

a respective candidate entity label is determined for each of the entities among the plurality of entities in the image,
the one or more first machine-learned models generate a respective corrected entity label for each of the respective candidate entity labels, and
the first output includes corrected entity labels for each of the entities among the plurality of entities in the image.

7. The computer-implemented method of any preceding claim, wherein the operations further comprise the one or more first machine-learned models generating a second output which includes a rationale explaining a connection between the corrected entity label and the image.

8. The computer-implemented method of claim 7, wherein the one or more first machine-learned models process, as an input, visual attributes associated with the image and without reference to the candidate entity label, to generate the second output.

9. The computer-implemented method of claim 7 or claim 8, wherein the operations further comprise the one or more first machine-learned models generating a third output which includes one or more question-answer pairs associated with the entity in the image.

10. The computer-implemented method of claim 9, wherein the one or more first machine-learned models process, as inputs, the rationale, the image, and the corrected entity label, to generate the third output.

11. The computer-implemented method of claim 10, wherein

the image includes a plurality of entities, and
the one or more question-answer pairs are associated with at least one other entity in the image among the plurality of entities.

12. The computer-implemented method of any preceding claim, wherein the operations further comprise generating a training dataset which includes a plurality of images, at least one of the plurality of images being associated with at least one corrected entity label, optionally wherein each image among the plurality of images is further associated with a respective rationale associated with each corrected entity label, and one or more question-answer pairs associated with each corrected entity label.

13. The computing device of claim 1, wherein the one or more first machine-learned models are configured to update the candidate entity label with the corrected entity label for the entity by verifying whether the candidate entity label for the entity and the contextual information associated with the candidate entity label corresponds to visual attributes in the image.

14. A computing device for generating corrected entity labels for improved model accuracy and efficiency, comprising:

one or more memories configured to store instructions; and
one or more processors configured to execute the instructions to perform operations, the operations comprising a method according to any preceding claim.

15. A computer program product comprising computer readable instructions that, when executed by a computer, cause the computer to perform operations comprising the method of any of claims 1 to 13.

1100

COMPUTING DEVICE 100

IMAGE DATA STORE 350

SERVER COMPUTING SYSTEM 300

EXTERNAL DATA STORE 360

NETWORK 400

EXTERNAL COMPUTING DEVICE 200

EXTERNAL CONTENT 500

MACHINE LEARNED MODEL DATA STORE 370

FIG. 1A

1200

SERVER COMPUTING SYSTEM 300
PROCESSOR(S) 310
MEMORY DEVICE(S) 320
DATA 322
INSTRUCTIONS 324
APPLICATION SYSTEM 330
ENTITY RECOGNITION APPLICATION 332

NETWORK 400

COMPUTING DEVICE 100
PROCESSOR(S) 110
MEMORY DEVICE(S) 120
DATA 122
INSTRUCTIONS 124
APPLICATION SYSTEM 130
ENTITY RECOGNITION APPLICATION 132
POSITION DETERMINATION DEVICE 140
INPUT DEVICE 150
DISPLAY DEVICE 160
OUTPUT DEVICE 170
CAPTURE DEVICE 180
IMAGE CAPTURER 182
SOUND CAPTURER 184
SENSORS 190

FIG. 1B

EP 4 708 217 A1

2100

```
RECEIVE
REQUEST TO
IDENTIFY AN
ENTITY IN AN
IMAGE 2110
```
→
```
DETERMINE A
CANDIDATE ENTITY
LABEL FOR THE ENTITY
BASED ON THE
IMAGE 2120
```
→
```
IMPLEMENT ONE OR
MORE-MACHINE
LEARNED MODELS TO
SELECTIVELY UPDATE
THE CANDIDATE ENTITY
LABEL WITH A
CORRECTED ENTITY LABEL
2130
```
→
```
PROVIDE OUTPUT
INCLUDING THE
CORRECTED ENTITY
LABEL 2140
```

FIG. 2A

2200

PROVIDE INPUT INCLUDING IMAGE AND AT LEAST ONE OF THE CANDIDATE ENTITY LABEL, CONTEXT INFORMATION ASSOCIATED WITH THE CANDIDATE ENTITY LABEL, CORRECTED ENTITY LABEL, OR CONTEXT INFORMATION ASSOCIATED WITH THE CORRECTED ENTITY LABEL 2210

IMPLEMENT ONE OR MORE SECOND MACHINE -LEARNED MODELS TO GENERATE A RATIONALE EXPLAINING A CONNECTION BETWEEN THE ENTITY LABEL AND IMAGE 2220

PROVIDE OUTPUT INCLUDING THE RATIONALE 2230

FIG. 2B

PROVIDE INPUT INCLUDING IMAGE, RATIONALE, AND AT LEAST ONE OF THE CANDIDATE ENTITY LABEL, CONTEXT INFORMATION ASSOCIATED WITH THE CANDIDATE ENTITY LABEL, CORRECTED ENTITY LABEL, OR CONTEXT INFORMATION ASSOCIATED WITH THE CORRECTED ENTITY LABEL <u>2310</u>

→

IMPLEMENT ONE OR MORE THIRD MACHINE-LEARNED MODELS TO GENERATE ONE OR MORE QUESTION-ANSWER PAIRS <u>2320</u>

→

PROVIDE OUTPUT INCLUDING THE ONE OR MORE QUESTION-ANSWER PAIRS <u>2330</u>

FIG. 2C

3100

ONE OR MORE
MACHINE-LEARNED
SECOND MODELS
3120

CAPTION: "WORST AREAS
FOR NEGATIVE EQUITY"

ONE OR MORE
FIRST
MACHINE-LEARNED
MODELS 3110

CANDIDATE ENTITY:
NEGATIVE EQUITY

NEGATIVE EQUITY IS A DEFICIT OF
OWNER'S EQUITY, OCCURRING WHEN THE
VALUE OF AN ASSET USED TO [...]

EXTERNAL
DATA
SOURCE
3130

CORRECTED ENTITY:
RESIDENTIAL BUILDING
+RATIONALE
THE IMAGE SHOWS A
RESIDNETIAL BUILDING WITH A
PINK EXTERIOR AND WHITE TRIM.
+DIVERSE QAs
Q1] WHAT IS THE STYLE OF THE
    BUILDING?
A1] GEORGIAN ARCHITECTURE
Q2] WHAT IS THE TYPE OF
    WINDOWS IN THE BUILDING?
A2] SASH WINDOW

## FIG. 3A

3200

ONE OR MORE
SECOND
MACHINE-LEARNED
MODELS
3220

CAPTION: "NEMATOBRYCON
ESPÈCE NEMATOBRYCON PALMERI"

ONE OR MORE
FIRST
MACHINE-LEARNED
MODELS 3210

CANDIDATE ENTITY:
NEMATOCAMPA RESISTERIA

NEMATOCAMPA RESISTARIA OR HORNED
SPANWORM MOTH, IS A MOTH OF THE
FAMILY GEOMETRIDAE.[...]

EXTERNAL
DATA
SOURCE
3230

CORRECTED ENTITY:
NEMATOBRYCON PALMERI
+RATIONALE
THE FISH HAS A PURPLE BODY, A
YELLOW TAIL, AND A BLACK STRIPE
RUNNING DOWN ITS SIDE.
+DIVERSE QAs
Q1] WHAT IS THE COLOR OF THE
    FISH?
A1] PURPLE
Q2] WHAT IS THE HABITAT OF THE
    FISH?
A2] FRESHWATER

## FIG. 3B

FIG. 4

5100

5110

ORIGINAL CAPTION:
"TERLARIS HOMALOMENA RUBESCENS"
CANDIDATE ENTITY:
TETRACLITA RUBESCENS

LLM WITH ACCESS TO WIKIPEDIA & CAPTION
CORRECTED ENTITY: HOMALOMENA RUBESCENS

RATIONALE: THE MAIN OBJECT IN THE IMAGE IS A PLANT WITH HEART-SHAPED LEAVES THAT ARE DARK GREEN WITH REDDISH-BROWN VEINS.

LLM WITHOUT ACCESS TO WIKIPEDIA & CAPTION
CORRECTED ENTITY: ALOCASIA CUPREA

RATIONALE: THE IMAGE SHOWS A PLANT WITH CORDATE LEAVES THAT ARE DARK REDDISH-PURPLE IN COLOR WITH PROMINENT VEINS.

5120

ORIGINAL CAPTION:"NEMATOBRYCON ESPÈCE NEMATOBRYCON PALMERI"
CANDIDATE ENTITY:
NEMATOCAMPA RESISTARIA

LLM WITH ACCESS TO WIKIPEDIA & CAPTION
CORRECTED ENTITY: NEMATOBRYCON PALMERI

RATIONALE: THE FISH HAS A PURPLE BODY, A YELLOW TAIL, AND A BLACK STRIPE RUNNING DOWN ITS SIDE.

LLM WITHOUT ACCESS TO WIKIPEDIA & CAPTION
CORRECTED ENTITY: FRESHWATER HATCHETFISH

RATIONALE: THIS IS A FRESHWATER HATCHETFISH, A TYPE OF FISH WITH A LONG, THIN BODY AND A SILVERY SHEEN. THE TAIL IS FORKED.

5130

ORIGINAL CAPTION:
"BRONTE BATHS"
CANDIDATE ENTITY:
GUILDFORD CRESCENT BATHS

LLM WITH ACCESS TO WIKIPEDIA & CAPTION
CORRECTED ENTITY: BRONTE BATHS

RATIONALE: THE IMAGE SHOWS AN OUTDOOR OCEAN POOL WITH WAVES CRASHING OVER THE EDGE.

LLM WITHOUT ACCESS TO WIKIPEDIA & CAPTION
CORRECTED ENTITY: OUTDOOR SWIMMING POOL

RATIONALE: AN OUTDOOR SWIMMING POOL FILLED WITH WATER AND SURROUNDED BY CONCRETE. THE POOL IS ON THE EDGE OF A CLIFF.

FIG. 5A

EP 4 708 217 A1

5200

5210

5220

5230

ORIGINAL CAPTION:
"WEST FOREVER"
CANDIDATE ENTITY:
WEST

LLM WITH ACCESS TO WIKIPEDIA & CAPTION
CORRECTED ENTITY: MOTORCYCLE
RATIONALE: THERE ARE THREE MOTORCYCLES ON A ROAD IN THE DESERT.

LLM WITHOUT ACCESS TO WIKIPEDIA & CAPTION
CORRECTED ENTITY: MOTORCYCLE
RATIONALE: THE IMAGE SHOWS A GROUP OF PEOPLE RIDING MOTORCYCLES THROUGH A DESERT LANDSCAPE.

ORIGINAL CAPTION:
"WHAT BOYFRIEND"
CANDIDATE ENTITY:
BOYFRIEND

LLM WITH ACCESS TO WIKIPEDIA & CAPTION
CORRECTED ENTITY: T-SHIRT
RATIONALE: THE IMAGE IS OF A RED T-SHIRT WITH WHITE TEXT THAT SAYS "WHAT BOYFRIEND?".

LLM WITHOUT ACCESS TO WIKIPEDIA & CAPTION
CORRECTED ENTITY: T-SHIRT
RATIONALE: THE IMAGE IS OF A RED T-SHIRT WITH WHITE TEXT THAT SAYS "WHAT BOYFRIEND?".

ORIGINAL CAPTION:
"MY SONG"
CANDIDATE ENTITY:
GOOD SONG

LLM WITH ACCESS TO WIKIPEDIA & CAPTION
CORRECTED ENTITY: SHIP
RATIONALE: A LARGE BLACK AND WHITE SAILBOAT WITH A RED STRIPE ON THE SAIL, HEELING TO STARBOARD WITH A LARGE CREW ON DECK.

LLM WITHOUT ACCESS TO WIKIPEDIA & CAPTION
CORRECTED ENTITY: SAILING YACHT
RATIONALE: A LARGE BLACK AND WHITE SAILBOAT MOVING QUICKLY THROUGH THE WATER WITH PEOPLE ON DECK.

FIG. 5B

5300

5310

ORIGINAL CAPTION: "GROSGRAIN"
CANDIDATE ENTITY: GROSGRAIN

LLM WITH ACCESS TO WIKIPEDIA & CAPTION CORRECTED ENTITY: GROSGRAIN
RATIONALE: MULTIPLE SPOOLS OF RIBBON WITH PROMINENT TRANSVERSE RIBS, WHICH IS A DEFINING CHARACTERISTIC OF GROSGRAIN.

LLM WITHOUT ACCESS TO WIKIPEDIA & CAPTION CORRECTED ENTITY: WOVEN FABRIC
RATIONALE: THE IMAGE SHOWS SEVERAL DIFFERENT TYPES OF FABRIC.

5320

ORIGINAL CAPTION: "BROAD BILLED HUMMINGBIRD 2"
CANDIDATE ENTITY: BROAD BILLED HUMMINGBIRD

LLM WITH ACCESS TO WIKIPEDIA & CAPTION CORRECTED ENTITY: BROAD BILLED HUMMINGBIRD
RATIONALE: THE BIRD HAS A LONG POINTED BILL AND BRIGHT RED FEATHERS, WHICH ARE CHARACTERISTICS OF A BROAD-BILLED HUMMINGBIRD.

LLM WITHOUT ACCESS TO WIKIPEDIA & CAPTION CORRECTED ENTITY: GREEN-CROWNED WOODNYMPH
RATIONALE: THE IMAGE SHOWS A SMALL BIRD WITH A LONG, THIN BEAK AND A GREEN BODY. THE BIRD IS HOVERING IN FRONT OF A RED FLOWER.

5330

ORIGINAL CAPTION: "HALIOTIS RUFESCENS"
CANDIDATE ENTITY: HALIOTIS RUFESCENS

LLM WITH ACCESS TO WIKIPEDIA & CAPTION CORRECTED ENTITY: HALIOTIS RUFESCENS
RATIONALE: IT IS A LARGE, OVAL-SHAPED SHELL WITH A MOTTLED GREEN AND BROWN COOR WITH A SERIES OF SMALL HOLES ALONG THE EDGE.

LLM WITHOUT ACCESS TO WIKIPEDIA & CAPTION CORRECTED ENTITY: NORTHERN ABALONE
RATIONALE: THE IMAGE SHOWS A BROWN AND WHITE OVAL-SHAPED SHELL WITH A ROUGH TEXTURE AND A HOLE NEAR THE TOP.

FIG. 5C

EP 4 708 217 A1

<u>6100</u>

ENTITY: PARC DES BUTTES CHAUMONT

RATIONALE: THE IMAGE SHOWS A LARGE PARK WITH A LAKE, A TEMPLE, AND MANY TREES AND FLOWERS. THE MOST PROMINENT FEATURE OF THE PARK IS A ROCKY HILL WITH A TEMPLE ON TOP OF IT. THE PARK IS VERY LARGE.

QUESTION-ANSWER PAIRS:

Q1] WHAT IS THE NAME OF THE PARK IN THE IMAGE?
A1] PARC DES BUTTES-CHAUMONT

Q2] WHAT IS THE NAME OF THE TEMPLE ON TOP OF THE HILL?
A2] TEMPLE DE LA SIBYLLE

Q3] WHAT IS THE NAME OF THE LAKE IN THE IMAGE?
A3] LAC DES BUTTES-CHAUMONT

## FIG. 6A

<u>6200</u>

ENTITY: RODEZ CATHEDRAL

RATIONALE: THE IMAGE SHOWS A LARGE, ORNATE CHURCH WITH A ROSE WINDOW, TOWERS, AND A FLAMBOYANT GOTHIC AND RENAISSANCE TOWER.

QUESTION-ANSWER PAIRS:

Q1] WHAT IS THE NAME OF THE CHURCH IN THE IMAGE?
A1] RODEZ CATHEDRAL

Q2] WHAT IS THE STYLE OF THE TOWER OF THE CHURCH?
A2] FLAMBOYANT GOTHIC AND RENAISSANCE

Q3] WHAT IS THE MAIN FEATURE OF THE FACADE OF THE CHURCH?
A3] ROSE WINDOW.

## FIG. 6B

6300

ENTITY: VISIONS BLINDS

RATIONALE: THE IMAGE SHOWS A LIVING ROOM WITH A SOFA, A CHAIR, A COFFEE TABLE, RUG, A LAMP, AND A WINDOW WITH VISION BLINDS.

QUESTION-ANSWER PAIRS:

Q1] WHAT KIND OF BLINDS ARE SHOWN IN THE IMAGE?
A1] VISION BLINDS

Q2] WHAT IS THE COLOR OF THE SOFA IN THE IMAGE?
A2] GRAY

Q3] WHAT IS ON THE COFFEE TABLE IN THE IMAGE?
A3] A BOOK AND A VASE OF FLOWERS

FIG. 6C

6400

ENTITY: SIERRA NEVADA YELLOW LEGGED FROG

RATIONALE: THE FROG HAS BROWN SKIN WITH DARK BROWN SPOTS. THE FROG IS SITTING ON THE GROUND, WHICH IS COVERED IN DIRT AND GRASS.

QUESTION-ANSWER PAIRS:

Q1] WHAT KIND OF FROG IS THIS?
A1] SIERRA NEVADA YELLOW-LEGGED FROG

Q2] WHAT IS THE COLOR OF THE FROG'S SKIN?
A2] BROWN WITH DARK BROWN SPOTS

Q3] WHAT IS THE FROG SITTING ON?
A3] DIRT AND GRASS

FIG. 6D

7100

7110

QUESTION: WHAT IS THE MAIN OBJECT?
GROUND TRUTH ENTITY: BARREL CACTUS

TOP-5 PREDICTIONS:
1: ECHINOCACTUS
2: ECHINOCACTUS GRUSONII
3: BARREL CACTUS
3: CACTUS
4: ECHINOCACTUS PLATYACANTHUS

7120

QUESTION: WHAT ITEM IS PRESENTED IN THE IMAGE?
GROUND TRUTH ENTITY: TELESCOPIC SIGHT

TOP-5 PREDICTIONS:
1: SPOTTING SCOPE
2: MONOCULAR
3: TELESCOPIC SIGHT
3: BINOCULARS
4: VORTEX OPTICS

7130

QUESTION: WHICH TYPE OF ANIMAL IS DEPICTED IN THE IMAGE?
GROUND TRUTH ENTITY: HAY

TOP-5 PREDICTIONS:
1: HAY
2: TRACTOR
3: HAY RAKE
4: AGRICULTURAL MACHINERY
5: BALER

FIG. 7

*You are working on an entity recognition task.*

*Is this an image of candidate entity?*

*Your answer must be either 'YES' or 'NO'*

*Here is the definition of candidate entity: Wikipedia summary.*

*If your answer is 'YES', you must use the definition of candidate entity to answer whether this is an image of a candidate entity.*

*If your answer is 'NO', you must use the caption of the image original caption to describe the main object in the image with the most specific English Wikipedia article title, where the response follows the format '@response@'. "You must then explain your answer by describing the visual attributes of the image.*

*If you answer is 'YES', your explanation MUST be based on the definition of candidate entity. If you answer is "NO', your explanation MUST ONLY be based on the visual cues of the image, and it should NOT contain candidate entity.*

*Your explanation must be concise.*

*Your explanation MUST NOT exceed two sentences.*

FIG. 8A

EP 4 708 217 A1

<u>8200</u>

*You are working on a visual question answering task.*
*This is an image of entity.*
*Your rationale is the following: rationale.*
*Your task is to generate 3 question/answer pairs describing the visual attributes of this image.*
*The questions MUST be diverse and cover several entities of the image, including the main object in the image or image itself. The answers MUST be specific English Wikipedia article titles. The answers MUST be based on the visual content of the image and the provided rationale.*
*The format for the question/answer pairs is Q:<question>A:<answer>. The questions MUST NOT contain What is the main object in the image?.*

FIG. 8B

9100

| | | | Entity split | | | | | | Query split | | | | | |
| | | | | | | + seen finetune | | | | | | + seen finetune | | |
| Model | #par (B) | Dataset | HM | seen | unseen | HM | seen | unseen | HM | seen | unseen | HM | seen | unseen |
|---|---|---|---|---|---|---|---|---|---|---|---|---|---|---|
| *Dual encoders* | | | | | | | | | | | | | | |
| CLIPfusion [16] | 0.9 | OpenAI [40] | 5.2 | 5.6 | 4.9 | 8.4 | 33.6 | 4.8 | 1.6 | 1.3 | 2.0 | 2.7 | 25.8 | 1.4 |
| CLIP2CLIP [16] | 0.9 | OpenAI [40] | 5.2 | 5.6 | 4.9 | 11.5 | 12.6 | 10.5 | 1.6 | 1.3 | 2.0 | 3.5 | 3.8 | 3.2 |
| *Generative approaches* | | | | | | | | | | | | | | |
| PaLI-3B [8] | 3 | WebLI-1B [8] | – | – | – | 9.1 | 19.1 | 6.0 | – | – | – | 16.7 | 27.4 | 12.0 |
| PaLI-17B [8] | 17 | WebLI-1B [8] | 1.8 | 3.3 | 1.2 | 16.0 | 28.3 | 11.2 | 9.2 | 14.1 | 6.8 | 27.1 | 36.2 | 21.7 |
| GiT-Large [53] | 0.4 | WebLI-100M [8] | 2.1 | 4.7 | 1.4 | 6.5 | 13.7 | 4.2 | 3.9 | 5.1 | 3.2 | 15.6 | 28.9 | 10.7 |
| GER-ALD [6] | 0.4 | Entity-WebLI-[6] | 17.7 | 18.3 | 17.2 | 22.7 | 31.5 | 17.7 | 6.3 | 6.0 | 6.7 | 5.8 | 14.1 | 3.6 |
| GiT-Large [53] | 0.4 | Entity-WebLI-[6] | 19.1 | 19.8 | 18.5 | 20.1 | 25.9 | 16.4 | 10.4 | 9.8 | 11.0 | 10.1 | 17.7 | 7.1 |
| GiT-Large [53] | 0.4 | REW-47M | 23.6 | 25.7 | 21.7 | 29.6 | 36.0 | 25.1 | 30.0 | 31.2 | 28.9 | 30.9 | 39.2 | 25.5 |

9110

FIG. 9A

EP 4 708 217 A1

9200

| Model | Training dataset | Flowers [34] | Sun397 [54] | Food [4] | Aircraft [28] | Sports100 [16] |
|---|---|---|---|---|---|---|
| GiT-Large [53] | WebLI-100M [8] | 39.1 | 45.8 | 55.7 | 7.4 | 57.9 |
| GiT-Large [53] | Entity-WebLI-[6] | 79.8 | 45.1 | 66.5 | 27.7 | 77.2 |
| GER-ALD [6] | Entity-WebLI-[6] | 86.7 | 45.9 | 78.0 | 37.4 | 74.6 |
| GiT-Large [53] | REW-47M | **88.2** | **50.2** | **80.4** | **50.3** | **78.0** |

9210

FIG. 9B

EP 4 708 217 A1

EP 4 708 217 A1

9300

| Memory dataset | OVEN-Ent | Flowers | Sun397 | Food101 | Aircraft | Sports100 | Avg.relative Δ |
|---|---|---|---|---|---|---|---|
| *CLIP-L/14 backbone [40]* | | | | | | | |
| Candidate entities | 16.3 | 81.1 | 37.7 | 80.9 | 42.1 | 70.4 | – |
| + multimodal LLM correction | 19.8(+3.5) | 81.1(+0.0) | 49.7(+12.0) | 79.1(-1.8) | 44.6(+2.5) | 74.8(+4.4) | +10.5% |
| *DINOv2-L/14 backbone [37]* | | | | | | | |
| Candidate entities | 19.1 | 91.7 | 37.9 | 75.7 | 34.6 | 76.8 | – |
| + multimodal LLM correction | 24.8(+5.7) | 90.5(-1.2) | 52.3(+14.4) | 74.9(-0.8) | 38.3(+3.7) | 82.4(+5.6) | +13.9% |

# FIG. 9C

9400

| Entity target source | Entity split (HM) |
|---|---|
| 1 Multimodal LLM raw output | 3.2 |
| 2 Candidate entity from text k-NN matching (as in Entity-WebLI [6]) | 6.7 |
| 3    + multimodal LLM correction *without* access to Wikipedia & original caption | 12.7 |
| 4    + multimodal LLM correction *with* access to Wikipedia & original caption | 14.1 |

# FIG. 9D

9500

| Metadata available to multimodal LLM | | Entity | Query |
|---|---|---|---|
| at rationale gen. | at QAs gen. | | |
| 1 ∅ | ∅ | 14.2 | 26.7 |
| 2 Wiki & caption | ∅ | 14.7 | 27.6 |
| 3 Wiki & caption | rationale | 15.5 | **29.0** |
| 4 Wiki & caption | entity | **16.4** | 27.2 |
| 5 Wiki & caption | entity + rationale | <u>16.0</u> | <u>28.2</u> |

| | | | LLM-Refined Entity–. | | | |
|---|---|---|---|---|---|---|
| | | | –WebLI | | –LAION | |
| $\mathcal{L}_{Entity}$ | $\mathcal{L}_{Rationale}$ | $\mathcal{L}_{QA}$ | Entity | Query | Entity | Query |
| 1 ✓ | | | 14.1 | 5.4 | 10.7 | 5.6 |
| 2 ✓ | ✓ | | 14.6 | 6.7 | 11.4 | 6.9 |
| 3 ✓ | | ✓ | 15.9 | 25.1 | 13.2 | 25.3 |
| 4 ✓ | ✓ | ✓ | 16.0 | 28.2 | 13.4 | 28.2 |

FIG. 9E

EP 4 708 217 A1

1000

1002

OBTAINING A TRAINING INSTANCE

1004

PROCESSING, USING ONE OR MORE MACHINE - LEARNED MODELS, THE TRAINING INSTANCE TO GENERATE AN OUTPUT

1006

RECEIVING AN EVALUATION SIGNAL ASSOCIATED WITH THE OUTPUT

1008

UPDATING THE MACHINE-LEARNED MODEL USING THE EVALUATION SIGNAL

FIG. 10

MACHINE-LEARNED MODEL(S) 1

INPUT(S) 2

OUTPUT(S) 3

FIG. 11

INPUT(S) 2

SEQUENCE PROCESSING MODEL(S) 4

INPUT SEQUENCE 5

| ELEMENT 5-1 | ELEMENT 5-2 | · · · | ELEMENT 5-M |

PREDICTION LAYER(S) 6

OUTPUT SEQUENCE 7

| ELEMENT 7-1 | ELEMENT 7-2 | · · · | ELEMENT 7-N |

OUTPUT(S) 3

FIG. 12

```
┌──────────┐   ┌──────────┐        ┌──────────┐        ┌──────────┐
│          │   │  INPUT   │        │  INPUT   │        │  INPUT   │
│          │   │ MODALITY │        │ MODALITY │        │ MODALITY │
│  TASK    │   │   10-1   │        │   10-2   │        │   10-3   │
│INDICATOR │   └─────┬────┘        └─────┬────┘        └─────┬────┘
│    9     │         │                   │                   │
│          │         ▼                   ▼                   ▼
│          │  ┌────────────────────┐ ┌────────────────────┐ ┌────────────────────┐
│          │  │DATA-TO-SEQUENCE     │ │DATA-TO-SEQUENCE     │ │DATA-TO-SEQUENCE     │
│          │  │MODEL(S) 11-1        │ │MODEL(S) 11-2        │ │MODEL(S) 11-3        │
└────┬─────┘  └──┬──────┬───────┬──┘ └──┬──────┬──────┬──┘ └──┬──────┬──────┬──┘
```

FIG. 13

12

**MODEL LIBRARIES 13**
- PRETRAINED FOUNDATIONAL MODEL(S) 13-1
- PRETRAINED EXPERT MODEL(S) 13-2
- MODEL PRIMITIVES 13-3

**DATASET(S) 17-1**

**MODEL ALIGNMENT TOOLKIT 17**
- PRE-TRAINING PIPELINES 17-2
- FINE-TUNING PIPELINES 17-3
- PROMPT LIBRARIES 17-4

**MODEL PLUGIN TOOLKIT 18**
- VALIDATION TOOLS 18-1
- TOOLING PACKAGES 18-2
- EXTERNAL API(S) 18-3

**COMPUTATIONAL OPTIMIZATION TOOLKIT 19**
- MODEL COMPRESSION 19-1
- HARDWARE ACCELERATION/ ADAPTATION 19-2
- DISTILLATION 19-3

MODEL COMPONENT(S) 14

WORKBENCH 15

DEVELOPMENT MODEL 16

OUTPUT MODEL 20

FIG. 14

FIG. 15

FIG. 16

EP 4 708 217 A1

FIG. 17

COMPUTING DEVICE **98**

APPLICATION 1

| MACHINE LEARNING LIBRARY 1 | MACHINE-LEARNED MODEL 1 |

APPLICATION 2

| MACHINE LEARNING LIBRARY 2 | MACHINE-LEARNED MODEL 2 |

● ● ●

APPLICATION N

| MACHINE LEARNING LIBRARY N | MACHINE-LEARNED MODEL N |

SENSOR(S)

CONTEXT MANAGER

DEVICE STATE

ADDITIONAL COMPONENT(S)

FIG. 18

COMPUTING DEVICE **99**

APPLICATION 1    APPLICATION 2  &bull;&bull;&bull;  APPLICATION N

CENTRAL INTELLIGENCE LAYER

MODEL 1    MODEL 2  &bull;&bull;&bull;  MODEL N

CENTRAL DEVICE DATA LAYER

SENSOR(S)   CONTEXT MANAGER   DEVICE STATE   ADDITIONAL COMPONENT(S)

FIG. 19

EP 4 708 217 A1

| Europäisches Patentamt European Patent Office Office européen des brevets | **EUROPEAN SEARCH REPORT** | **Application Number** EP 25 19 0306 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZIYUE WANG ET AL: "Filling the Image Information Gap for VQA: Prompting Large Language Models to Proactively Ask Questions", ARXIV.ORG, CORNELL UNIVERSITY LIBRARY, 201 OLIN LIBRARY CORNELL UNIVERSITY ITHACA, NY 14853, 20 November 2023 (2023-11-20), XP091780826, * sections 3-5; page 16 - page 17; figures 2,3 * | 1-15 | INV. G06V10/764 G06V10/774 G06V10/776 G06V10/80 G06V10/82 G06V20/30 |
| A | ZHENWEI SHAO ET AL: "Prompting Large Language Models with Answer Heuristics for Knowledge-based Visual Question Answering", ARXIV.ORG, CORNELL UNIVERSITY LIBRARY, 201 OLIN LIBRARY CORNELL UNIVERSITY ITHACA, NY 14853, 3 March 2023 (2023-03-03), XP091451848, * sections 3 and 4; figure 2 * | 1-15 | |
| A | HU YUSHI ET AL: "PromptCap: Prompt-Guided Image Captioning for VQA with GPT-3", 2023 IEEE/CVF INTERNATIONAL CONFERENCE ON COMPUTER VISION (ICCV), IEEE, 1 October 2023 (2023-10-01), pages 2951-2963, XP034513959, DOI: 10.1109/ICCV51070.2023.00277 [retrieved on 2024-01-15] * sections 3-5; figures 2-6 * | 1-15 | TECHNICAL FIELDS SEARCHED (IPC) G06V |

-/--

The present search report has been drawn up for all claims

| Place of search | Date of completion of the search | Examiner |
|---|---|---|
| The Hague | 12 September 2025 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 25 19 0306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIN ZAN-XIA ET AL: "RUArt: A Novel Text-Centered Solution for Text-Based Visual Question Answering", IEEE TRANSACTIONS ON MULTIMEDIA, IEEE, USA, vol. 25, 20 October 2021 (2021-10-20), pages 1-12, XP011932155, ISSN: 1520-9210, DOI: 10.1109/TMM.2021.3120194 [retrieved on 2021-10-21] * sections III and IV; figures 2-5 * | 1-15 | |
| | ----- | | |
| A | MATHILDE CARON ET AL: "A Generative Approach for Wikipedia-Scale Visual Entity Recognition", ARXIV.ORG, CORNELL UNIVERSITY LIBRARY, 201 OLIN LIBRARY CORNELL UNIVERSITY ITHACA, NY 14853, 21 March 2024 (2024-03-21), XP091706289, * sections 3-6; figures 2-12 * | 1-15 | TECHNICAL FIELDS SEARCHED (IPC) |
| | ----- | | |

The present search report has been drawn up for all claims

| Place of search | Date of completion of the search | Examiner |
|---|---|---|
| The Hague | 12 September 2025 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                      
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHOU et al.** Mixture-of-Experts with Expert Choice Routing. *ARXIv:2202.09368v2*, 14 October 2022
- **DOSOVITSKIY et al.** An Image is Worth 16x16 Words: Transformers for Image Recognition at Scale. *ARXIv:2010.11929v2*, 03 June 2021
- **AGOSTINELLI et al.** MusicLM: Generating Music From Text. *ARXIv:2301.11325v1*, 26 January 2023
- **JUMPER et al.** Highly accurate protein structure prediction with AlphaFold. *Nature*, 26 August 2021, vol. 596, 583

- **KUDO et al.** SentencePiece: A simple and language independent subword tokenizer and detokenizerfor Neural Text Processing. *PROCEEDINGS OF THE 2018 CONFERENCE ON EMPIRICAL METHODS IN NATURAL LANGUAGE PROCESSING (System Demonstrations)*, 31 October 2018, 66-71, https://aclanthology.org/D18-2012.pdf.
- **VASWANI et al.** Attention Is All You Need. *ARXIV:1706.03762v7*, 02 August 2023
- **SAHARIA et al.** Non-Autoregressive Machine Translation with Latent Alignments. *ARXIv:2004.07437v3*, 16 November 2020